(19) Europäisches Patentamt / European Patent Office / Office européen des brevets

(11) **EP 4 277 175 A1**

(12) **EUROPEAN PATENT APPLICATION**
published in accordance with Art. 153(4) EPC

(43) Date of publication:
**15.11.2023 Bulletin 2023/46**

(21) Application number: **22736835.4**

(22) Date of filing: **05.01.2022**

(51) International Patent Classification (IPC):
*H04L 1/00* (2006.01)     *H04L 5/00* (2006.01)
*H04L 27/26* (2006.01)    *H04L 69/14* (2022.01)
*H04L 69/322* (2022.01)   *H04W 76/15* (2018.01)
*H04W 84/12* (2009.01)    *H04W 74/08* (2009.01)

(52) Cooperative Patent Classification (CPC):
**H04L 1/00; H04L 5/00; H04L 27/26; H04L 69/14;
H04L 69/322; H04W 74/08; H04W 76/15;
H04W 84/12**

(86) International application number:
**PCT/KR2022/000190**

(87) International publication number:
**WO 2022/149858 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.01.2021  KR 20210001142
25.03.2021  KR 20210038443**

(71) Applicant: **Wilus Institute of Standards and
Technology Inc.
Gyeonggi-do 13595 (KR)**

(72) Inventors:
• **KO, Geonjung**
  **Seongnam-si Gyeonggi-do 13595 (KR)**
• **SON, Juhyung**
  **Seongnam-si Gyeonggi-do 13595 (KR)**
• **KIM, Sanghyun**
  **Seongnam-si Gyeonggi-do 13595 (KR)**
• **HONG, Hanseul**
  **Seongnam-si Gyeonggi-do 13595 (KR)**
• **KWAK, Jinsam**
  **Seongnam-si Gyeonggi-do 13595 (KR)**

(74) Representative: **Schmitt-Nilson Schraud Waibel
Wohlfrom
Patentanwälte Partnerschaft mbB
Pelkovenstraße 143
80992 München (DE)**

(54) **METHOD FOR TRANSMITTING/RECEIVING DATA IN WIRELESS COMMUNICATION SYSTEM, AND WIRELESS COMMUNICATION TERMINAL**

(57)     A method for transmitting a TB PPDU in a wireless communication system is disclosed. A Non-AP STA can receive a frame for triggering the transmission of a physical layer protocol data unit (PPDU) from an access point (AP), and transmit, in response to the frame, the PPDU including a packet extension (PE) field for providing a processing time for the PPDU. At this time, the frame indicates a format for the PPDU transmitted in response to the frame, and a maximum value of duration for the PE field can be changed according to the format of the PPDU indicated by the frame.

FIG.30

```
                    START
                      │
                      ▼
  ┌──────────────────────────────────────────┐
  │ Receive frame for triggering PLCP protocol │──── S30010
  │           data unit (PPDU)                 │
  └──────────────────────────────────────────┘
                      │
                      ▼
  ┌──────────────────────────────────────────┐
  │ As response to frame, transmit PPDU including│──── S30020
  │ packet extension (PE) field for providing   │
  │        processing time for PPDU             │
  └──────────────────────────────────────────┘
                      │
                      ▼
                    END
```

**Description**

Technical Field

The present invention relates to a wireless communication system and, more specifically, to a wireless communication method and a wireless communication terminal for determining a processing time of a wireless frame.

Background Art

In recent years, with supply expansion of mobile apparatuses, a wireless LAN technology that can provide a rapid wireless Internet service to the mobile apparatuses has been significantly spotlighted. The wireless LAN technology allows mobile apparatuses including a smart phone, a smart pad, a laptop computer, a portable multimedia player, an embedded apparatus, and the like to wirelessly access the Internet in home or a company or a specific service providing area based on a wireless communication technology in a short range.

Institute of Electrical and Electronics Engineers (IEEE) 802.11 has commercialized or developed various technological standards since an initial wireless LAN technology is supported using frequencies of 2.4 GHz. First, the IEEE 802.11b supports a communication speed of a maximum of 11 Mbps while using frequencies of a 2.4 GHz band. IEEE 802.11a which is commercialized after the IEEE 802.1 1b uses frequencies of not the 2.4 GHz band but a 5 GHz band to reduce an influence by interference as compared with the frequencies of the 2.4 GHz band which are significantly congested and improves the communication speed up to a maximum of 54 Mbps by using an OFDM technology. However, the IEEE 802.11a has a disadvantage in that a communication distance is shorter than the IEEE 802.11b. In addition, IEEE 802.11g uses the frequencies of the 2.4 GHz band similarly to the IEEE 802.11b to implement the communication speed of a maximum of 54 Mbps and satisfies backward compatibility to significantly come into the spotlight and further, is superior to the IEEE 802.11a in terms of the communication distance.

Moreover, as a technology standard established to overcome a limitation of the communication speed which is pointed out as a weak point in a wireless LAN, IEEE 802.11n has been provided. The IEEE 802.11n aims at increasing the speed and reliability of a network and extending an operating distance of a wireless network. In more detail, the IEEE 802.11n supports a high throughput (HT) in which a data processing speed is a maximum of 540 Mbps or more and further, is based on a multiple inputs and multiple outputs (MIMO) technology in which multiple antennas are used at both sides of a transmitting unit and a receiving unit in order to minimize a transmission error and optimize a data speed. Further, the standard can use a coding scheme that transmits multiple copies which overlap with each other in order to increase data reliability.

As the supply of the wireless LAN is activated and further, applications using the wireless LAN are diversified, the need for new wireless LAN systems for supporting a higher throughput (very high throughput (VHT)) than the data processing speed supported by the IEEE 802.11n has come into the spotlight. Among them, IEEE 802.11ac supports a wide bandwidth (80 to 160 MHz) in the 5 GHz frequencies. The IEEE 802.11ac standard is defined only in the 5 GHz band, but initial 11ac chipsets will support even operations in the 2.4 GHz band for the backward compatibility with the existing 2.4 GHz band products. Theoretically, according to the standard, wireless LAN speeds of multiple stations are enabled up to a minimum of 1 Gbps and a maximum single link speed is enabled up to a minimum of 500 Mbps. This is achieved by extending concepts of a wireless interface accepted by 802.11n, such as a wider wireless frequency bandwidth (a maximum of 160 MHz), more MIMO spatial streams (a maximum of 8), multi-user MIMO, and high-density modulation (a maximum of 256 QAM). Further, as a scheme that transmits data by using a 60 GHz band instead of the existing 2.4 GHz/5 GHz, IEEE 802.11ad has been provided. The IEEE 802.11ad is a transmission standard that provides a speed of a maximum of 7 Gbps by using a beamforming technology and is suitable for high bit rate moving picture streaming such as massive data or non-compression HD video. However, since it is difficult for the 60 GHz frequency band to pass through an obstacle, it is disadvantageous in that the 60 GHz frequency band can be used only among devices in a short-distance space.

As a wireless LAN standard after 802.11ac and 802.11ad, the IEEE 802.11ax (high efficiency WLAN, HEW) standard for providing a high-efficiency and high-performance wireless LAN communication technology in a high-density environment, in which APs and terminals are concentrated, is in the development completion stage. In an 802.1 1ax-based wireless LAN environment, communication with high frequency efficiency should be provided indoors/outdoors in the presence of high-density stations and access points (APs), and various technologies have been developed to implement the same.

In order to support new multimedia applications, such as high-definition video and real-time games, the development of a new wireless LAN standard has begun to increase a maximum transmission rate. In IEEE 802.1 The (extremely high throughput, EHT), which is a 7th generation wireless LAN standard, development of standards is underway aiming at supporting a transmission rate of up to 30Gbps via a wider bandwidth, an increased spatial stream, multi-AP cooperation, and the like in a 2.4/5/6 GHz band. IEEE 802.11be has proposed technologies including a 30 MHz bandwidth, a multi-link operation, a multi-access point (multi-AP) operation, and a retransmission operation (hybrid automatic repeat request HARQ), etc.

A multi-link operation may be performed in various types according to the operation scheme and implementation method thereof. However, this operation may face a problem that has not occurred in a conventional IEEE 802.11-based wireless LAN communication operation, and thus a definition for a detailed operation method of a multi-link operation is needed.

Meanwhile, this background section is written for improving understanding of the background of the disclosure, and may include contents other than a prior art already known to a person skilled in the art.

Disclosure of Invention

Technical Problem

As described above, the present invention is to provide a high-speed wireless LAN service for a new multimedia application.

In addition, the present invention is to provide a method and an apparatus for including a field, in a wireless frame, a field for securing a processing time for a reception device in transmitting or receiving the wireless frame.

In addition, the present invention is to provide a method and an apparatus for determining a duration of a field for securing a processing time for a reception device.

In addition, the present invention is to provide a method and an apparatus for determining a duration of a field for securing a processing time for a reception device differently according to a specific condition.

In addition, the present invention is to provide a method for determining a duration of a field for securing a processing time of a reception device on the basis of a modulation scheme of a frame, a resource unit size, a format of a frame, and/or the number of streams.

The technical tasks to be achieved by the present specification is not limited to those mentioned above, and other technical tasks that are not mentioned above may be clearly understood to a person having common knowledge in the technical field to which the present disclosure belongs based on the description provided below.

Solution to Problem

A terminal of a wireless communication system includes a communication module, and a processor configured to control the communication module, wherein the processor is configured to receive a frame for triggering transmission of a physical layer protocol data unit (PPDU) from an access point (AP), and as a response to the frame, transmit a PPDU including a packet extension (PE) field for providing a processing time for the PPDU, wherein the frame solicits a format for the PPDU transmitted as a response to the frame, and a maximum value of a duration for the PE field varies according to the format of the PPDU, solicited by the frame.

In addition, in the present invention, when the format of the PPDU, solicited by the frame, corresponds to a high efficiency (HE) PPDU, the maximum value of the duration for the PE field is a first value, and when the format of the PPDU, solicited by the frame, corresponds to an extremely high throughput (EHT) PPDU, the maximum value of the duration for the PE field is a second value.

In addition, in the present invention, the first value is "16 us", and the second value is "20 us".

In addition, in the present invention, the processor is configured to receive an operation element from the AP, wherein the operation element includes a default PE duration subfield indicating the duration for the PE field, and in a case where a value of a control identifier (ID) subfield included in the frame indicates triggered response scheduling (TRS) for triggering transmission of the PPDU, when the format of the PPDU is solicited as an EHT PPDU by the frame and a maximum value of the duration solicited by the default PE duration subfield is different from a maximum value of the duration in the case where the format of the PPDU is solicited as the EHT PPDU by the frame, the maximum value of the duration of the PE field is determined by the default PE duration subfield.

In addition, in the present invention, when a value of a control ID subfield included in the frame indicates triggered response scheduling (TRS) for triggering transmission of a PPDU for another STA, a value of each of multiple subfields included in the frame used for calculation of the duration of the PE field is configured so that the duration of the PE field calculated by the multiple subfields is to be identical to a duration of a PE field of the PPDU for another STA.

In addition, in the present invention, the processor is configured to receive an operation element from the AP, wherein the operation element includes an EHT default PE duration subfield indicating whether a maximum value of a duration for a PE field of an EHT PPDU is identical to a maximum value of a duration for a PE field of a HE PPDU.

In addition, in the present invention, when the EHT default PE duration subfield solicits that the maximum value of the duration for the PE field of the EHT PPDU is not identical to the maximum value of the duration for the PE field of the HE PPDU, the duration for the PE field, solicited by the EHT default PE duration subfield, is "20 us".

In addition, in the present invention, when the PPDU is modulated using 4096-QAM, a spatial stream number is eight or more, or a channel bandwidth is 320 MHz and a size of a resource unit (RU) allocated for transmission of the PPDU is 2x996 or more, the maximum value of the duration of the PE field is "20 us".

In addition, the present invention provides a method including receiving a frame for triggering transmission of a physical layer protocol data unit (PPDU) from an access point (AP), and as a response to the frame, transmitting a PPDU including a packet extension (PE) field for providing a processing time for the PPDU, wherein the frame solicits a format for the PPDU transmitted as a response to the frame, and a maximum value of a duration for the PE field varies according to the format of the PPDU, solicited by the frame.

Advantageous Effects of Invention

According to an embodiment of the present invention, a wireless frame can be effectively signaled.

In addition, according to an embodiment of the present invention, in a content-based channel access system, the entire resource use rate can be increased and the performance of the wireless LAN system can be enhanced.

In addition, according to an embodiment of the present invention, a field for a processing time is included in a frame, whereby a time for a reception device to process the frame and transmit a response can be secured.

In addition, according to an embodiment of the present invention, a duration of a field for a processing time of a frame is determined on the basis of a modulation scheme of a frame, a resource unit size, a format of a frame, and/or the number of streams, whereby the processing time of the frame can be efficiently secured.

The effects obtainable in the present invention are not limited to the above-mentioned effects, and other effects that are not mentioned may be clearly understood by those skilled in the art to which the present invention belongs, from descriptions below.

Brief Description of Drawings

FIG. 1 illustrates a wireless LAN system according to an embodiment of the present invention.

FIG. 2 illustrates a wireless LAN system according to another embodiment of the present invention.

FIG. 3 illustrates a configuration of a station according to an embodiment of the present invention.

FIG. 4 illustrates a configuration of an access point according to an embodiment of the present invention.

FIG. 5 schematically illustrates a process in which a STA and an AP set a link.

FIG. 6 illustrates a carrier sense multiple access (CSMA)/collision avoidance (CA) method used in wireless LAN communication.

FIG. 7 illustrates an example of a format of a PLCP Protocol data unit (PPDU) for each of various standard generations;

FIG. 8 illustrates an example of various extremely high throughput (EHT) physical protocol data unit (PPDU) formats and a method for indicating the same according to an embodiment of the present invention;

FIG. 9 illustrates a multi-link device according to an embodiment of the present invention

FIG. 10 illustrates an example of a TID-to-link mapping method according to an embodiment of the present invention.

FIG. 11 illustrates an example of a multi-link NAV setup operation according to an embodiment of the present invention.

FIG. 12 illustrates another example of a multi-link NAV setup operation according to an embodiment of the present invention.

FIG. 13 illustrates an example of BSS classification and an operation based thereon according to an embodiment of the present invention.

FIG. 14 illustrates a wireless LAN function according to an embodiment of the present invention.

FIG. 15 illustrates an uplink (UL) multi-user (MU) operation according to an embodiment of the present invention.

FIG. 16 illustrates a trigger frame format according to an embodiment of the present invention.

FIG. 17 illustrates a method for soliciting a trigger-based (TB) PPDU format according to an embodiment of the present invention.

FIG. 18 illustrates a UL MU operation according to an embodiment of the present invention.

FIG. 19 illustrates an example of a packet extension (PE) field for providing a processing time according to an embodiment of the present invention.

FIG. 20 illustrates an example of a high efficiency (HE) operation element and a default PE duration subfield according to an embodiment of the present invention.

FIG. 21 illustrates an example of a method for configuring a duration of a PE field according to an embodiment of the present invention.

FIG. 22 illustrates another example of a method for configuring a duration of a PE field and a UL MU operation according to an embodiment of the present invention.

FIG. 23 illustrates another example of a method for configuring a duration of a PE field and a UL MU operation according to an embodiment of the present invention.

FIG. 24 illustrates another example of a method for configuring a duration of a PE field and a UL MU operation according to an embodiment of the present invention.

FIG. 25 illustrates an example of a method for configuring a CS required subfield according to an embodiment of the present invention.

FIG. 26 illustrates an example of a UL MU operation and configuration of a CS required subfield according to an embodiment of the present invention.

FIG. 27 illustrates another example of a UL MU operation and a configuration of a CS required subfield according to an embodiment of the present invention.

FIG. 28 illustrates an example of a method for configuring a PE field when an aggregated (A)-PPDU is used according to an embodiment of the present invention.

FIG. 29 illustrates an example of a method for soliciting a format of a TB PPDU according to an embodiment of the present invention.

FIG. 30 is a flowchart illustrating an example of an operation of a terminal according to an embodiment of the present invention.

Best Mode for Carrying out the Invention

Terms used in the specification adopt general terms which are currently widely used by considering functions in the present invention, but the terms may be changed depending on an intention of those skilled in the art, customs, and emergence of new technology. Further, in a specific case, there is a term arbitrarily selected by an applicant and in this case, a meaning thereof will be described in a corresponding description part of the invention. Accordingly, it should be revealed that a term used in the specification should be analyzed based on not just a name of the term but a substantial meaning of the term and contents throughout the specification.

Throughout this specification and the claims that follow, when it is described that an element is "coupled" to another element, the element may be "directly coupled" to the other element or "electrically coupled" to the other element through a third element. Further, unless explicitly described to the contrary, the word "comprise" and variations such as "comprises" or "comprising", will be understood to imply the inclusion of stated elements but not the exclusion of any other elements. Moreover, limitations such as "or more" or "or less" based on a specific threshold may be appropriately substituted with "more than" or "less than", respectively. Hereinafter, in the present invention, a field and a subfield may be interchangeably used.

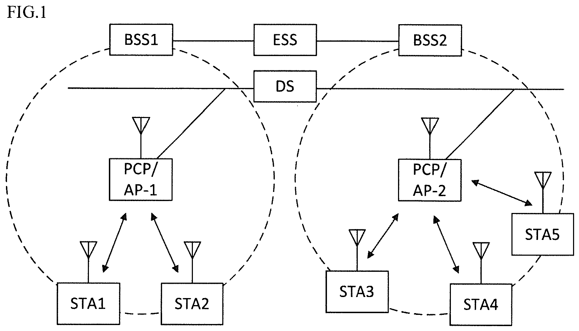

FIG. 1 illustrates a wireless LAN system according to an embodiment of the present invention.

FIG. 1 is a diagram illustrating a wireless LAN system according to an embodiment of the present invention. The wireless LAN system includes one or more basic service sets (BSS) and the BSS represents a set of apparatuses which are successfully synchronized with each other to communicate with each other. In general, the BSS may be classified into an infrastructure BSS and an independent BSS (IBSS) and FIG. 1 illustrates the infrastructure BSS between them.

As illustrated in FIG. 1, the infrastructure BSS (BSS1 and BSS2) includes one or more stations STA1, STA2, STA3, STA4, and STA5, access points AP-1 and AP-2 which are stations providing a distribution service, and a distribution system (DS) connecting the multiple access points AP-1 and AP-2.

The station (STA) is a predetermined device including medium access control (MAC) following a regulation of an IEEE 802.11 standard and a physical layer interface for a wireless medium, and includes both a non-access point (non-AP) station and an access point (AP) in a broad sense. Further, in the present specification, a term 'terminal' may be used to refer to a non-AP STA, or an AP, or to both terms. A station for wireless communication includes a processor and a communication unit and according to the embodiment, may further include a user interface unit and a display unit. The processor may generate a frame to be transmitted through a wireless network or process a frame received through the wireless network and besides, perform various processing for controlling the station. In addition, the communication unit is functionally connected with the processor and transmits and receives frames through the wireless network for the station. According to the present invention, a terminal may be used as a term which includes user equipment (UE).

The access point (AP) is an entity that provides access to the distribution system (DS) via wireless medium for the station associated therewith. In the infrastructure BSS, communication among non-AP stations is, in principle, performed via the AP, but when a direct link is configured, direct communication is enabled even among the non-AP stations. Meanwhile, in the present invention, the AP is used as a concept including a personal BSS coordination point (PCP) and may include concepts including a centralized controller, a base station (BS), a node-B, a base transceiver system (BTS), and a site controller in a broad sense. In the present invention, an AP may also be referred to as a base wireless communication terminal. The base wireless communication terminal may be used as a term which includes an AP, a base station, an eNB (i.e. eNodeB) and a transmission point (TP) in a broad sense. In addition, the base wireless communication terminal may include various types of wireless communication terminals that allocate medium resources and perform scheduling in communication with a plurality of wireless communication terminals.

A plurality of infrastructure BSSs may be connected with each other through the distribution system (DS). In this case, a plurality of BSSs connected through the distribution system is referred to as an extended service set (ESS).

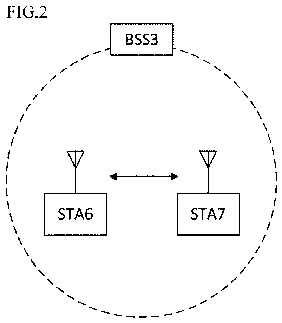

FIG. 2 illustrates an independent BSS which is a wireless LAN system according to another embodiment of the present invention. In the embodiment of FIG. 2, duplicative description of parts, which are the same as or correspond to the embodiment of FIG. 1, will be omitted.

Since a BSS3 illustrated in FIG. 2 is the independent BSS and does not include the AP, all stations STA6 and STA7 are not connected with the AP. The independent BSS is not permitted to access the distribution system and forms a selfcontained network. In the independent BSS, the respective stations STA6 and STA7 may be directly connected with each other.

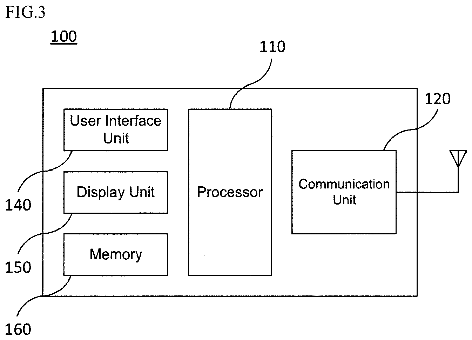

FIG. 3 is a block diagram illustrating a configuration of a station 100 according to an embodiment of the present invention. As illustrated in FIG. 3, the station 100 according to the embodiment of the present invention may include a processor 110, a communication unit 120, a user interface unit 140, a display unit 150, and a memory 160.

First, the communication unit 120 transmits and receives a wireless signal such as a wireless LAN packet, or the like and may be embedded in the station 100 or provided as an exterior. According to the embodiment, the communication unit 120 may include at least one communication module using different frequency bands. For example, the communication unit 120 may include communication modules having different frequency bands such as 2.4 GHz, 5 GHz, 6GHz and 60 GHz. According to an embodiment, the station 100 may include a communication module using a frequency band of 7.125 GHz or more and a communication module using a frequency band of 7.125 GHz or less. The respective communication modules may perform wireless communication with the AP or an external station according to a wireless LAN standard of a frequency band supported by the corresponding communication module. The communication unit 120 may operate only one communication module at a time or simultaneously operate multiple communication modules together according to the performance and requirements of the station 100. When the station 100 includes a plurality of communication modules, each communication module may be implemented by independent elements or a plurality of modules may be integrated into one chip. In an embodiment of the present invention, the communication unit 120 may represent a radio frequency (RF) communication module for processing an RF signal.

Next, the user interface unit 140 includes various types of input/output means provided in the station 100. That is, the user interface unit 140 may receive a user input by using various input means and the processor 110 may control the station 100 based on the received user input. Further, the user interface unit 140 may perform output based on a command of the processor 110 by using various output means.

Next, the display unit 150 outputs an image on a display screen. The display unit 150 may output various display objects such as contents executed by the processor 110 or a user interface based on a control command of the processor 110, and the like. Further, the memory 160 stores a control program used in the station 100 and various resulting data. The control program may include an access program required for the station 100 to access the AP or the external station.

The processor 110 of the present invention may execute various commands or programs and process data in the station 100. Further, the processor 110 may control the respective units of the station 100 and control data transmission/reception among the units. According to the embodiment of the present invention, the processor 110 may execute the program for accessing the AP stored in the memory 160 and receive a communication configuration message transmitted by the AP. Further, the processor 110 may read information on a priority condition of the station 100 included in the communication configuration message and request the access to the AP based on the information on the priority condition of the station 100. The processor 110 of the present invention may represent a main control unit of the station 100 and according to the embodiment, the processor 110 may represent a control unit for individually controlling some component of the station 100, for example, the communication unit 120, and the like. That is, the processor 110 may be a modem or a modulator/demodulator for modulating and demodulating wireless signals transmitted to and received from the communication unit 120. The processor 110 controls various operations of wireless signal transmission/reception of the station 100 according to the embodiment of the present invention. A detailed embodiment thereof will be described below.

The station 100 illustrated in FIG. 3 is a block diagram according to an embodiment of the present invention, where separate blocks are illustrated as logically distinguished elements of the device. Accordingly, the elements of the device may be mounted in a single chip or multiple chips depending on design of the device. For example, the processor 110 and the communication unit 120 may be implemented while being integrated into a single chip or implemented as a separate chip. Further, in the embodiment of the present invention, some components of the station 100, for example, the user interface unit 140 and the display unit 150 may be optionally provided in the station 100.

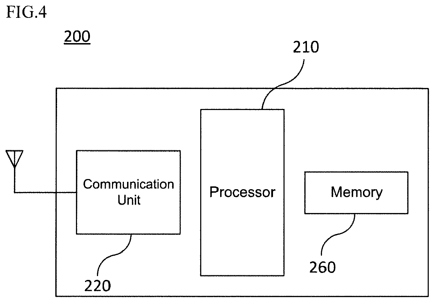

FIG. 4 is a block diagram illustrating a configuration of an AP 200 according to an embodiment of the present invention. As illustrated in FIG. 4, the AP 200 according to the embodiment of the present invention may include a processor 210, a communication unit 220, and a memory 260. In FIG. 4, among the components of the AP 200, duplicative description of parts which are the same as or correspond to the components of the station 100 of FIG. 2 will be omitted.

Referring to FIG. 4, the AP 200 according to the present invention includes the communication unit 220 for operating the BSS in at least one frequency band. As described in the embodiment of FIG. 3, the communication unit 220 of the AP 200 may also include a plurality of communication modules using different frequency bands. That is, the AP 200 according to the embodiment of the present invention may include two or more communication modules among different frequency bands, for example, 2.4 GHz, 5 GHz, 6GHz and 60 GHz together. Preferably, the AP 200 may include a communication module using a frequency band of 7.125GHz or more and a communication module using a frequency band of 7.125 GHz or less. The respective communication modules may perform wireless communication with the station according to a wireless LAN standard of a frequency band supported by the corresponding communication module. The communication unit 220 may operate only one communication module at a time or simultaneously operate multiple communication modules together according to the performance and requirements of the AP 200. In an embodiment of the present invention, the communication unit 220 may represent a radio frequency (RF) communication module for processing an RF signal.

Next, the memory 260 stores a control program used in the AP 200 and various resulting data. The control program may include an access program for managing the access of the station. Further, the processor 210 may control the respective units of the AP 200 and control data transmission/reception among the units. According to the embodiment of the present invention, the processor 210 may execute the program for accessing the station stored in the memory 260 and transmit communication configuration messages for one or more stations. In this case, the communication configuration messages may include information about access priority conditions of the respective stations. Further, the processor 210 performs an access configuration according to an access request of the station. According to an embodiment, the processor 210 may be a modem or a modulator/demodulator for modulating and demodulating wireless signals transmitted to and received from the communication unit 220. The processor 210 controls various operations such as wireless signal transmission/reception of the AP 200 according to the embodiment of the present invention. A detailed embodiment thereof will be described below.

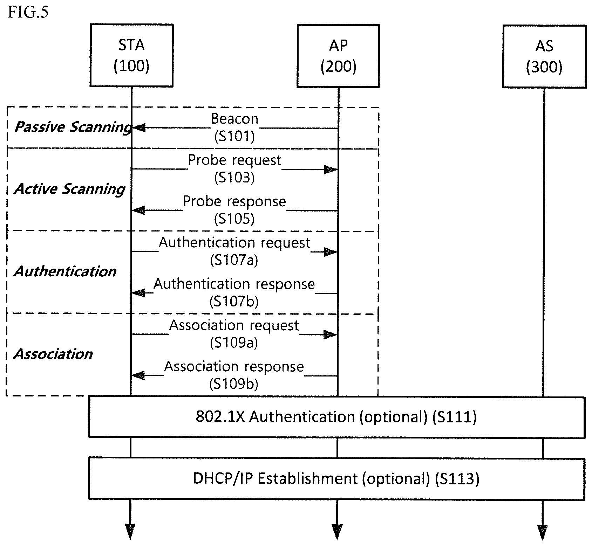

FIG. 5 is a diagram schematically illustrating a process in which a STA sets a link with an AP.

Referring to FIG. 5, the link between the STA 100 and the AP 200 is set through three steps of scanning, authentication, and association in a broad way. First, the scanning step is a step in which the STA 100 obtains access information of BSS operated by the AP 200. A method for performing the scanning includes a passive scanning method in which the AP 200 obtains information by using a beacon message (S101) which is periodically transmitted and an active scanning method in which the STA 100 transmits a probe request to the AP (S103) and obtains access information by receiving a probe response from the AP (S105).

The STA 100 that successfully receives wireless access information in the scanning step performs the authentication step by transmitting an authentication request (S107a) and receiving an authentication response from the AP 200 (S107b). After the authentication step is performed, the STA 100 performs the association step by transmitting an association request (S109a) and receiving an association response from the AP 200 (S109b). In this specification, an association basically means a wireless association, but the present invention is not limited thereto, and the association may include both the wireless association and a wired association in a broad sense.

Meanwhile, an 802.1X based authentication step (S111) and an IP address obtaining step (S113) through DHCP may be additionally performed. In FIG. 5, the authentication server 300 is a server that processes 802. 1X based authentication with the STA 100 and may be present in physical association with the AP 200 or present as a separate server.

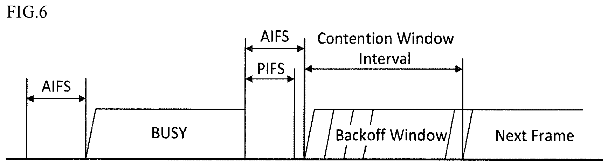

FIG. 6 is a diagram illustrating a carrier sense multiple access (CSMA)/collision avoidance (CA) method used in wireless LAN communication.

A terminal that performs a wireless LAN communication checks whether a channel is busy by performing carrier sensing before transmitting data. When a wireless signal having a predetermined strength or more is sensed, it is determined that the corresponding channel is busy and the terminal delays the access to the corresponding channel. Such a process is referred to as clear channel assessment (CCA) and a level to decide whether the corresponding signal is sensed is referred to as a CCA threshold. When a wireless signal having the CCA threshold or more, which is received by the terminal, indicates the corresponding terminal as a receiver, the terminal processes the received wireless signal. Meanwhile, when a wireless signal is not sensed in the corresponding channel or a wireless signal having a strength smaller than the CCA threshold is sensed, it is determined that the channel is idle.

When it is determined that the channel is idle, each terminal having data to be transmitted performs a backoff procedure after an inter frame space (IFS) time depending on a situation of each terminal, for instance, an arbitration IFS (AIFS), a PCF IFS (PIFS), or the like elapses. According to the embodiment, the AIFS may be used as a component which substitutes for the existing DCF IFS (DIFS). Each terminal stands by while decreasing slot time(s) as long as a random number determined by the corresponding terminal during an interval of an idle state of the channel and a terminal that completely exhausts the slot time(s) attempts to access the corresponding channel. As such, an interval in which each terminal performs the backoff procedure is referred to as a contention window interval.

When a specific terminal successfully accesses the channel, the corresponding terminal may transmit data through the channel. However, when the terminal which attempts the access collides with another terminal, the terminals which collide with each other are assigned with new random numbers, respectively to perform the backoff procedure again. According to an embodiment, a random number newly assigned to each terminal may be decided within a range (2*CW) which is twice larger than a range (a contention window, CW) of a random number which the corresponding terminal is previously assigned. Meanwhile, each terminal attempts the access by performing the backoff procedure again in a next contention window interval and in this case, each terminal performs the backoff procedure from slot time(s) which remained in the previous contention window interval. By such a method, the respective terminals that perform the wireless LAN communication may avoid a mutual collision for a specific channel.

Hereinafter, a terminal of the present disclosure is referred to as a non-AP STA, an AP STA, an AP, a STA, a receiving device or a transmitting device, but the present disclosure is not limited thereto. In addition, the AP STA of the present disclosure may be referred to as the AP.

<Examples of various PPDU formats>

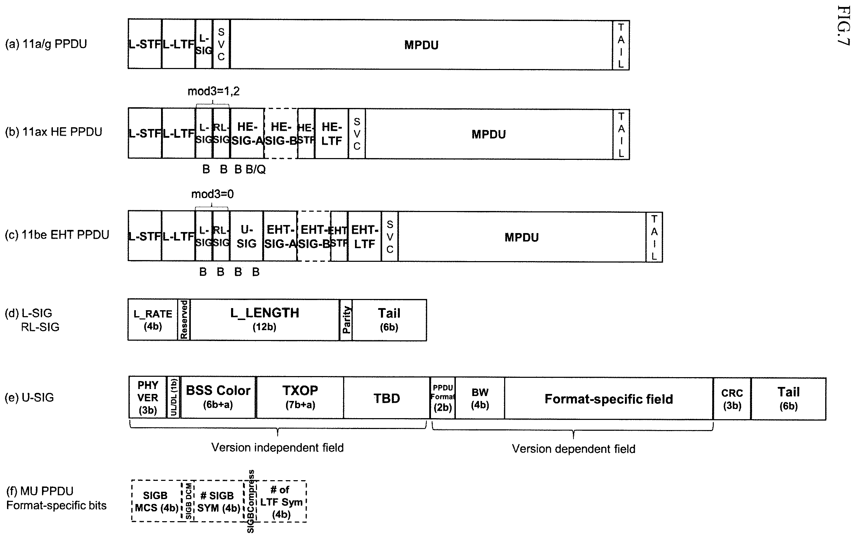

FIG. 7 illustrates an example of a format of a PLCP Protocol data unit (PPDU) for each of various standard generations. More specifically, FIG. 7(a) illustrates an embodiment of a legacy PPDU format based on 802.11a/g, FIG. 7(b) illustrates an embodiment of an HE PPDU format based on 802.11ax, and FIG. 7(c) illustrates an embodiment of a non-legacy PPDU (i.e., EHT PPDU) format based on 802.11be. FIG. 7(d) illustrates detailed field configurations of RL-SIG and L-SIG commonly used in the PPDU formats.

Referring to FIG. 7(a), a preamble of the legacy PPDU includes a legacy short training field (L-STF), a legacy long training field (L-LTF), and a legacy signal field (L-SIG). In an embodiment of the present invention, the L-STF, the L-LTF, and the L-SIG may be referred to as a legacy preamble.

Referring to FIG. 7(b), a preamble of the HE PPDU additionally includes, in the legacy preamble, a repeated legacy short training field (RL-SIG), a high efficiency signal A field (HE-SIG-A), a high efficiency signal B field (HE-SIG-B), a high efficiency short training field (HE-STF), and a high efficiency long training field (HE-LTF). In an embodiment of the present invention, the RL-SIG, HE-SIG-A, the HE-SIG-B, the HE-STF and the HE-LTF may be referred to as an HE preamble. A specific configuration of the HE preamble may be modified according to an HE PPDU format. For example, HE-SIG-B may be used only in an HE MU PPDU format.

Referring to FIG. 7(c), a preamble of the EHT PPDU additionally includes, in the legacy preamble, a repeated legacy short training field (RL-SIG), a universal signal field (U-SIG), and an extremely high throughput signal A field (EHT-SIG-A), an extremely high throughput signal B field (EHT-SIG-B), an extremely high throughput short training field (EHT-STF), and an extremely high throughput long training field (EHT-LTF). In an embodiment of the present invention, the RL-SIG, EHT-SIG-A, the EHT-SIG-B, the EHT-STF and the EHT-LTF may be referred to as an EHT preamble. A specific configuration of a non-legacy preamble may be modified according to an EHT PPDU format. For example, EHT-SIG-A and EHT-SIG-B may be used only in a part of the EHT PPDU format.

64-FFT OFDM is applied in an L-SIG field included in the preamble of the PPDU, and the L-SIG field includes a total of 64 subcarriers. Among 64 subcarriers, 48 subcarriers excluding a guard subcarrier, a DC subcarrier, and a pilot subcarrier are used for transmission of L-SIG data. BPSK and a modulation and coding scheme (MCS) of rate=1/2 are applied in L-SIG, and therefore the L-SIG may include a total of 24 bits of information. FIG. 7(d) illustrates a 24-bit information configuration of L-SIG.

Referring to FIG. 7(d), the L-SIG includes an L_RATE field and an L_LENGTH field. The L_RATE field includes 4 bits and indicates an MCS used for data transmission. Specifically, the L_RATE field indicates one value among transmission rates of 6/9/12/18/24/36/48/54Mbps obtained by combining a modulation scheme of BPSK/QPSK/16-QAM/64-QAM, etc. and an inefficiency of 1/2, 2/3, 3/4, etc. A total length of a corresponding PPDU may be indicated by combining information of the L_RATE field and information of the LLENGTH field. In a non-legacy PPDU format, the L_RATE field is configured to a minimum rate of 6Mbps.

A unit of the L_LENGTH field is a byte and a total of 12 bits are allocated to signal up to 4095, and a length of the PPDU may be indicated in combination with the L_RATE field. A legacy terminal and a non-legacy terminal may interpret the L_LENGTH field in different ways.

Firstly, a method of interpreting the length of the PPDU by the legacy terminal and the non-legacy terminal by using the L_LENGTH field is described below. When a value of the L_RATE field is configured to indicate 6 Mbps, 3 bytes during 4 us which is one symbol duration of 64 FET (i.e., 24 bits) may be transmitted. Therefore, the 64 FET standard symbol number after an L-SIG is acquired by adding 3 bytes corresponding to a SVC field and a Tail field to the L_LENGTH field value and then dividing the same by 3 bytes which is a transmission amount of one symbol. When multiplying the acquired symbol number by 4 us which is one symbol duration and then adding 20 us which is consumed to transmit the L-STF, the L-LTF, and the L-SIG, the length of a corresponding PPDU, i.e., a receipt time (RXTIME) is acquired, which is expressed by Equation 1 below.

【Equation 1】

$$RXTIME(us) = \left( \left\lceil \frac{L\_LENGTH+3}{3} \right\rceil \right) \times 4 + 20$$

$\lceil x \rceil$

In this case, $\lceil x \rceil$ denotes the smallest natural number greater than or equal to x. Since the maximum value of the L_LENGTH field is 4095, the length of the PPDU can be set up to 5.464ms. The non-legacy terminal transmitting the PPDU should set the L_LENGTH field as shown in Equation 2 below.

【Equation 2】

$$L\_LENGTH(byte) = \left( \left\lceil \frac{TXTIME-20}{4} \right\rceil \right) \times 3 - 3$$

Herein, TXTIME is the total transmission time constituting the corresponding PPDU, and is expressed by Equation 3 below. In this case, TX represents the transmission time of X.

【Equation 3】

$$TXTIME(us) = T_{L-STF} + T_{L-LTF} + T_{L-SIG} + T_{RL-SIG} + T_{U-SIG} + (T_{EHT-SIG-A}) + (T_{EHT-SIG-B})$$

$$+ T_{EHT-STF} + N_{EHT-LTF} \cdot T_{EHT-LTF} + T_{DATA}$$

Referring to the above equations, the length of the PPDU is calculated based on a rounded up value of_LLENGTH/3. Therefore, for a random value of k, three different values of L_LENGTH={3k+1, 3k+2, 3(k+1)} indicate the same PPDU length.

Referring to FIG. 7(e), a universal SIG (U-SIG) field continues to exist in an EHT PPDU and a WLAN PPDU of a subsequent generation, and serves to classify a generation of a PPDU, which includes 11be. U-SIG is a 64 FFT-based OFDM 2 symbol and may transfer a total of 52 bits of information. In 52 bits, 43 bits excluding 9 bits for CRC/Tail are largely divided into a version independent (VI) field and a version dependent (VD) field.

A VI bit enables a current bit configuration to be maintained even later on, so that even if a PPDU of a subsequent generation is defined, current 1 1be terminals may obtain information on the PPDU via the VI fields of the PPDU. To this end, the VI field includes PHY version, UL/DL, BSS color, TXOP, and reserved fields. The PHY version field is 3 bits, and serves to sequentially classify 11be and subsequent generation wireless LAN standards into versions, 11be has a value of 000b. The UL/DL field identifies whether the PPDU is an uplink/downlink PPDU. BSS color indicates an identifier for each BSS defined in 1 1ax, and has a value of 6 bits or more. TXOP indicates transmit opportunity duration transmitted in a MAC header, wherein, by adding the TXOP to a PHY header, the PPDU may infer a length of the TXOP included therein without having to decode an MPDU, and the TXOP has a value of 7 bits or more.

The VD field is signaling information useful only for an 11be version of the PPDU, and may include a field commonly used in any PPDU format, such as PPDU format and BW, and a field defined differently for each PPDU format. The PPDU format is a classifier that classifies EHT single user (SU), EHT multiple user (MU), EHT trigger-based (TB), EHT extended range (ER) PPDU, etc. The BW field signals five basic PPDU BW options (BW, which is expressible in the form of an exponential power of 20*2, may be referred to as basic BW) of 20, 40, 80, 160 (80+80), and 320 (160+160) MHz and various remaining PPDU BWs configured via preamble puncturing. After being signaled at 320 MHz, signaling may be performed in a form in which some 80 MHz is punctured. A punctured and modified channel type may be signaled directly in the BW field, or may be signaled using the BW field with a field (e.g., a field within the EHT-SIG field) appearing after the BW field. If the BW field is configured to 3 bits, a total of 8 BW signaling may be performed, and therefore only up to 3 signaling may be performed in a puncturing mode. If the BW field is configured to 4 bits, a total of 16 BW signaling may be performed, and therefore up to 11 signaling may be performed in the puncturing mode.

A field located after the BW field varies depending on the type and format of the PPDU, an MU PPDU and an SU PPDU may be signaled in the same PPDU format, a field for classification between the MU PPDU and the SU PPDU may be located before an EHT-SIG field, and additional signaling may be performed for the same. Both the SU PPDU and the MU PPDU include the EHT-SIG field, but some fields that are not required in the SU PPDU may be compressed.

Information on the field to which the compression has been applied may be omitted or may have a size smaller than a size of an original field included in the MU PPDU. For example, in a case of the SU PPDU, a common field of the EHT-SIG may be omitted or replaced, or the SU PPDU may have a different configuration in which a user specific field is replaced, reduced to one, or the like.

Alternatively, the SU PPDU may further include a compression field indicating whether compression is performed, and a part of field (e.g., RA fields, etc.) may be omitted according to a value of the compressed field.

If a part of the EHT-SIG field of the SU PPDU is compressed, information to be included in the compressed field may be signaled also in an uncompressed field (e.g., the common field, etc.). The MU PPDU corresponds to a PPDU format for concurrent reception by multiple users, and therefore the EHT-SIG field is required to be transmitted subsequently to the U-SIG field, and the amount of signaled information may vary. That is, a plurality of MU PPDUs are transmitted to a plurality of STAs, so that the respective STAs should recognize locations of RUs, at which the MU PPDUs are transmitted, the STAs to which the RUs have been allocated respectively, and whether the transmitted MU PPDUs have been transmitted to the STAs themselves. Therefore, an AP should transmit information described above, by including the same in the EHT-SIG field. To this end, information for efficient transmission of the EHT-SIG field is signaled in the U-SIG field, and this may correspond to an MCS that is a modulation method and/or the number of symbols in the EHT-SIG field. The EHT-SIG field may include information on a size and location of an RU allocated to each user.

In the case of the SU PPDU, a plurality of RUs may be allocated to an STA, and the plurality of RUs may be continuous or discontinuous. If the RUs allocated to the STA are discontinuous, the STA should recognize a punctured RU in the middle in order to efficiently receive the SU PPDU. Accordingly, the AP may transmit the SU PPDU including information (e.g., a puncturing pattern of the RUs, etc.) of punctured RUs among the RUs allocated to the STA. That is, in the case of the SU PPDU, a puncturing mode field, which includes information indicating, in a bitmap format, etc., a puncturing pattern and whether the puncturing mode is applied, may be included in the EHT-SIG field, and the puncturing mode field may signal a discontinuous channel type appearing within a bandwidth.

The signaled discontinuous channel type is limited, and indicates discontinuous channel information and BW of the SU PPDU in combination with a value of the BW field. For example, the SU PPDU is a PPDU transmitted only to a single terminal, so that the STA may recognize a bandwidth allocated to itself via the BW field included in the PPDU, and the SU PPDU may recognize a punctured resource in the allocated bandwidth via the puncturing mode field of the EHT-SIG field or the U-SIG field included in the PPDU. In this case, the terminal may receive the PPDU in resource units remaining after excluding a specific channel of the punctured resource unit. The plurality of RUs allocated to the STA may be configured by different frequency bands or tones.

Only a limited discontinuous channel type is signaled in order to reduce signaling overhead of the SU PPDU. Puncturing may be performed for each 20 MHz sub-channel, so that if puncturing is performed for BW having a large number of 20 MHz sub-channels, such as 80, 160, and 320 MHz, a discontinuous channel (if puncturing of only edge 20 MHz is considered to be discontinuous) type should be signaled in the case of 320 MHz by expressing whether each of 15 20 MHz sub-channels remaining after excluding a primary channel is used. As such, allocating 15 bits to signal a discontinuous channel type of single user transmission may act as excessively large signaling overhead in consideration of a low transmission rate of a signaling part.

The present disclosure suggests a signaling technique of a discontinuous channel type of the SU PPDU and illustrates the discontinuous channel type determined according to the suggested technique. In addition, the present disclosure suggests a signaling technique of a puncturing type of each of a primary 160 MHz and a secondary 160 MHz in 320 MHz BW configuration of the SU PPDU.

In addition, an embodiment of the present disclosure suggests a technique which differs in the configuration of the PPDU indicating the preamble puncturing BW values according to the PPDU format signaled in the PPDU format field. If the length of the BW field is 4 bits, in case of the EHT SU PPDU or the TB PPDU, the EHT-SIG-A of 1 symbol may be additionally signaled after the U-SIG, or the EHT-SIG-A may be never signaled, so that by considering this, it is necessary to completely signal a maximum of 11 puncturing modes through only the BW field of the U-SIG. However, in case of the EHT MU PPDU, since the EHT-SIG-B is additionally signaled after the U-SIG, the maximum of 11 puncturing modes may be signaled by a method different from the SU PPDU. In case of the EHT ER PPDU, the BW field is configured as 1 bit to signal information on whether the PPDU uses 20 MHz or 10 MHz band.

FIG. 7(f) illustrates a configuration of a format-specific field of a VD field when the EHT MU PPDU is indicated in the PPDU format field of U-SIG. In the case of the MU PPDU, SIG-B, which is a signaling field for concurrent reception by multiple users, is essentially required, and SIG-B may be transmitted without separate SIG-A after U-SIG. To this end, information for decoding of SIG-B should be signaled in U-SIG. These fields include SIG-B MCS, SIG-B DCM, Number of SIG-B Symbols, SIG-B Compression, and Number of EHT-LTF Symbols.

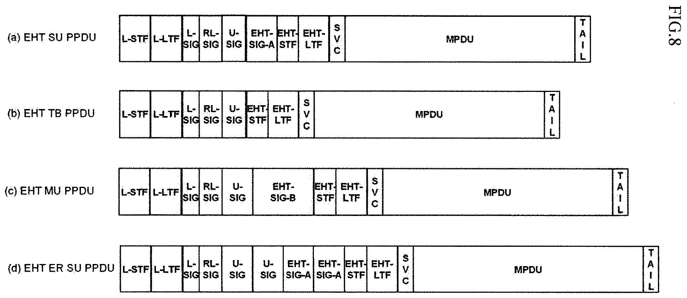

FIG. 8 illustrates an example of various extremely high throughput (EHT) physical protocol data unit (PPDU) formats and a method for indicating the same according to an embodiment of the present invention.

Referring to FIG. 8, a PPDU may include a preamble and a data part, and an EHT PPDU format, that is a PPDU type, may be classified according to a U-SIG field included in the preamble. Specifically, based on a PPDU format field included in the U-SIG field, whether the format of the PPDU is an EHT PPDU may be indicated.

FIG. 8(a) shows an example of an EHT SU PPDU format for a single STA. An EHT SU PPDU is a PPDU used for single user (SU) transmission between an AP and a single STA, and an EHT-SIG-A field for additional signaling may be located after the U-SIG field.

FIG. 8(b) shows an example of an EHT trigger-based PPDU format which corresponds to an EHT PPDU transmitted based on a trigger frame. An EHT Trigger-based PPDU is an EHT PPDU transmitted based on a trigger frame and is an uplink PPDU used for a response to the trigger frame. Unlike in the EHT SU PPDU, an EHT-SIG-A field is not located after a U-SIG field in the EHT PPDU.

FIG. 8(c) shows an example of an EHT MU PPDU format which corresponds to an EHT PPDU for multiple users. An EHT MU PPDU is a PPDU used to transmit the PPDU to one or more STAs. In the EHT MU PPDU format, an HE-SIG-B field may be located after a U-SIG field.

FIG. 8(d) shows an example of an EHT ER SU PPDU format used for single user transmission with an STA in an extended range. An EHT ER SU PPDU may be used for single user transmission with an STA of a wider range compared to the EHT SU PPDU described in FIG. 8(a), and a U-SIG field may be repeatedly located on a time axis.

The EHT MU PPDU described in FIG. 8(c) may be used by an AP to perform downlink transmission to a plurality of STAs. Here, the EHT MU PPDU may include scheduling information so that the plurality of STAs may concurrently receive the PPDU transmitted from the AP. The EHT MU PPDU may transfer, to the STAs, AID information of a transmitter and/or a receiver of the PPDU transmitted via a user specific field of EHT-SIG-B. Accordingly, the plurality of terminals having received the EHT MU PPDU may perform a spatial reuse operation based on the AID information of the user specific field included in a preamble of the received PPDU.

Specifically, a resource unit allocation (RA) field of the HE-SIG-B field included in the HE MU PPDU may include information on a configuration of a resource unit (e.g., a division form of the resource unit) in a specific bandwidth (e.g., 20 MHz, etc.) of a frequency axis. That is, the RA field may indicate configurations of resource units segmented in a bandwidth for transmission of the HE MU PPDU, in order for the STA to receive the PPDU. Information on the STA allocated (or designated) to each segmented resource unit may be included in the user specific field of EHT-SIG-B so as to be transmitted to the STA. That is, the user specific field may include one or more user fields corresponding to the respective segmented resource units.

For example, a user field corresponding to at least one resource unit used for data transmission among the plurality of segmented resource units may include an AID of a receiver or a transmitter, and a user field corresponding to the remaining resource unit(s) which is not used for data transmission may include a preconfigured null STA ID.

Two or more PPDUs illustrated in FIG. 8 may be indicated by a value indicating the same PPDU format. That is, two or more PPDUs may be indicated by the same PPDU format through the same value. For example, the EHT SU PPDU and the EHT MU PPDU may be indicated by the same value through the U-SIG PPDU format subfield. At this time, the EHT SU PPDU and the EHT MU PPDU may be divided by the number of the STAs receiving the PPDU. For example, the PPDU receiving one STA may be identified as the EHT SU PPDU, and when the number of the STAs is configured to receive two or more STAs, the PPDU may be identified as the EHT MU PPDU. In other words, two or more PPDU formats illustrated in FIG. 8 may be indicated through the same subfield value.

In addition, a part field among the fields illustrated in FIG. 8 or part information of the field may be omitted, and the case that the part field or the part information of the field is omitted may be defined as a compression mode or a compressed mode.

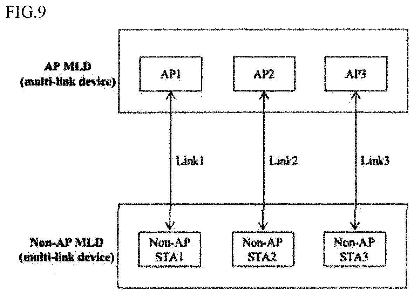

FIG. 9 illustrates a multi-link device according to an embodiment of the present invention.

Referring to FIG. 9, a concept of a device to which one or more STAs are affiliated may be defined. According to an embodiment of the present invention, as another embodiment, devices to which more than one STA (i.e., two or more STAs) are affiliated may be defined. In this case, the device may be a logical concept. Accordingly, the devices to which one or more STAs or more than one STA having such a concept are affiliated may be referred to as a multi-link device (MLD), a multi-band device, or a multi-link logical entry (MLLE).

Alternatively, the devices of the concept above may be referred to as a multi-link entity (MLE). In addition, the MLD may have one medium access control service access point (MAC SAP) until a logical link control (LLC), and the MLD may have one MAC data service.

It is possible for STAs included in the MLD to operate in one or more links or channels. That is, it is possible for the STAs included in the MLD to operate in multiple different channels. For example, it is possible for the STAs included in the MLD to operate using channels of different frequency bands of 2.4 GHz, 5 GHz, and 6 GHz. Accordingly, it is possible for the MLD to acquire gain in channel access, and increase the performance of the entire network. The conventional wireless LAN operates in a single link, but the MLD operation may acquire much more channel access opportunities by using multiple links, or an STA may efficiently operate in the multiple links in consideration of a channel condition.

In addition, when STAs affiliated to the MLD are APs, the MLD to which the APs are affiliated may be an AP MLD. However, when the STAs affiliated to the MLD are non-AP STAs, the MLD to which the non-APs are affiliated may be a non-AP MLD.

In addition, an AP multi-link device (MLD) may be a device including one or more wireless access points (APs), and may be a device connected to a higher layer through one interface. That is, the AP MLD may be connected to a logical link control (LLC) layer through one interface. Multiple APs included in the AP MLD may share some functions in a MAC layer. The respective APs in the AP MLD may operate in different links. An STA MLD may be a device including one or more non-AP STAs, and may be a device connected to a higher layer through one interface.

That is, the STA MLD may be connected to an LLC layer through one interface. Multiple STAs included in the STA MLD may share some functions in a MAC layer. In addition, the STA MLD may be also called a non-AP MLD. In this case, the AP MLD and the STA MLD may perform a multi-link operation of performing communication using multiple individual links. That is, when the AP MLD includes multiple APs, each of the APs configures a separate link to perform a frame transmission or reception operation using multiple links with each terminal included in the STA MLD. In this case, each link may operate in a 2.4 GHz, 5 GHz, or 6 GHz band, and a bandwidth extension operation may be performed in each link. For example, when the AP MLD sets up one link in the 2.4 GHz band and two links in the 5 GHz band, in the 2.4 GHz band, frame transmission may be performed in a 40 MHz band through a bandwidth extension scheme, and in each link using the 5 GHz band, frame transmission may be performed in a maximum of 320 MHz band by utilizing a non-consecutive bandwidth.

Meanwhile, in the AP MLD or the STA MLD, while one terminal in the MLD performs a transmission operation, another terminal may not be able to perform a reception operation, due to an interference problem inside the device. As such, an operation in which while one AP or terminal in an MLD performs a transmission operation, another AP or terminal in the MLD performs reception is referred to as simultaneous transmission and reception (STR). The AP MLD may perform an STR operation for all links. Alternatively, the STR operation may not be possible in some links of the AP MLD. A terminal MLD which can perform the STR operation may be associated with the AP MLD, and an MLD which cannot perform the STR operation for some or all links may be associated with the AP MLD. In addition, a terminal (for example, IEEE 802.11a/b/g/n/ac/ax terminal) not belonging to an MLD may be additionally associated with an AP included in an AP MLD.

In the scanning and association process described in FIG. 5, the AP MLD and the STA MLD may perform a negotiation process for a multi-link use operation. For example, in the scanning process described in FIG. 5, an AP included in the AP MLD may transmit a beacon frame including an indicator indicating that a multi-link operation is available, the number of available links, and information on multiple available links. Alternatively, a terminal belonging to the STA MLD may transmit a probe request frame including an indicator indicating that a multi-link operation is available, and an AP belonging to the AP MLD may include an indicator indicating that a multi-link operation is available, in a probe response frame. In this case, the AP may additionally include the number of available links during a multi-link operation, link information, etc., and transmit the same.

The STA MLD having identified, in the scanning process above, whether the multi-link operation is available for the AP MLD and the information on the available links may perform an association process with the AP MLD. In this case, the AP MLD and the STA MLD may start a negotiation process for the multi-link operation. In this case, the negotiation process for the multi-link operation may be performed in an association process between the AP belonging to the AP MLD and the terminal belonging to the STA MLD. That is, a random terminal (for example, STA1) belonging to the STA MLD may transmit an indicator indicating that a multi-link operation of the terminal is available and a request indicator for requesting to perform the multi-link operation to a random AP (for example, AP1) belonging to the AP MLD while transmitting an association request frame. The AP having received the association request frame from the terminal may identify the indicator for requesting the multi-link operation, and when the AP can perform the multi-link operation, the AP may include information on a link to be used for the multi-link operation, a parameter used in each link, etc. in an association response frame allowing the multi-link operation, and transmit the association response frame to the corresponding terminal. The parameter for the multi-link operation may include one or more of a band of each link, a bandwidth extension direction, a target beacon transmission time (TBTT), and whether an STR operation is performed. The AP MLD and the STA MLD between which the association request frame and the response frame have been exchanged and which have identified the use of the multi-link operation may perform a frame transmission operation using multiple links by using multiple APs included in the AP MLD and multiple terminals included in the STA MLD after the corresponding association process.

Referring to FIG. 9, there may be an MLD including multiple STAs, and the multiple STAs included in the MLD may operate in multiple links. In FIG. 9, an MLD including AP1, AP2, and AP3, which are APs, may be called an AP MLD, and an MLD including non-AP STA1, non-AP STA2, and non-AP STA3, which are non-AP STAs, may be called a non-AP MLD. The STAs included in the MLD may operate in Link 1, Link 2), Link 3), or some of Links 1 to 3.

According to an embodiment of the present invention, the multi-link operation may include a multi-link setup operation. The multi-link setup operation may be an operation corresponding to association performed in a single link operation. To exchange a frame in multiple links, the multi-link setup needs to performed first. The multi-link setup operation may be performed using a multi-link setup element. Here, the multi-link setup element may include capability information related to the multi-link, and the capability information may include information related to whether an STA included in an MLD can simultaneously receive a frame through one link while another STA included in the MLD transmits a frame through another link. That is, the capability information may include information related to whether STAs (non-AP STAs) and/or APs (or AP STAs) can simultaneously transmit/receive frames in different transmission directions through links included in the MLD. In addition, the capability information may further include information related to an available link and an operating channel. The multi-link setup may be performed through a negotiation between peer STAs, and the multi-link operation may be set up through one link.

According to an embodiment of the present invention, there may be a mapping relationship between links of a TID and an MLD. For example, when the TID is mapped to a link, the TID may be transmitted through the mapped link. The mapping between the TID and the link may be performed on the basis of a transmission direction. For example, the mapping may be performed for both directions between MLD 1 and MLD 2. In addition, there may be a default setup for the mapping between the TID and the link. For example, the mapping between the TID and the link may correspond to mapping of all TIDs to a link by default.

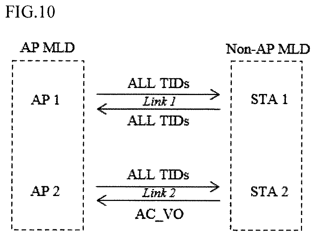

FIG. 10 illustrates an example of a TID-to-link mapping method according to an embodiment of the present invention.

Referring to FIG. 10, as described in FIG. 9, there may be a mapping relationship between a TID and a link. In addition, in the present invention, the mapping between the TID and the link may be referred to as TID-to-link mapping, TID to link mapping, TID mapping, link mapping, etc. A TID may be a traffic identifier. In addition, the TID may be an identifier (ID) for classifying traffic, data, etc. to support a quality of service (QoS).

In addition, the TID may be an ID used or allocated in a layer higher than a MAC layer. The TID may indicate traffic categories (TCs) and traffic streams (TSs). In addition, the TID may have 16 values, which can be indicated as, for example, values of 0 to 15. In addition, a used TID value may vary according to an access policy or channel access and medium access methods. For example, when an enhanced distributed channel access (EDCA) (hybrid coordination function (HCF) contention-based channel access) is used, a possible TID value may be 0 to 7. In addition, when the EDCA is used, the TID value may indicate a user priority (UP), and the UP may relate to a TC or a TS. In addition, the UP may be a value allocated in a layer higher than the MAC. In addition, HCF controlled channel access (HCCA) or SPCA is used, a possible TID value may be 8 to 15. In addition, when the HCCA or the SPCA is used, the TID may indicate a TSID. In addition, when HEMM or SEMM is used, a possible TID value may be 8 to 15. In addition, when the HEMM or the SEMM is used, the TID may indicate a TSID.

In addition, there may be a mapping relationship between the UP and an access category (AC). The AC may be a label for providing the QoS in the EDCA, or a label indicating a set of EDCA parameters. The EDCA parameter of the set of the EDCA parameters may be used for channel connection. The AC may be used by a QoS STA.

An AC value may be configured as one of AC_BK, AC_BE, AC_VI, and AC_VO. AC_BK, AC_BE, AC_VI, and AC_VO may indicate background, best effort, video, and voice, respectively. In addition, AC_BK, AC_BE, AC VI, and AC_VO may be subdivided. For example, AC_VI may be subdivided into AC_VI primary and AC_VI alternate. In addition, AC_VO may be subdivided into AC_VO primary and AC_VO alternate. In addition, the UP value or the TID value may be mapped to the AC value. For example, UP or TID values 1, 2, 0, 3, 4, 5, 6, and 7 may be mapped to AC_BK, AC_BK, AC_BE, AC_BE, AC_VI, AC_VI, AC_VO, and AC_VO, respectively. Alternatively, UP or TID values 1, 2, 0, 3, 4, 5, 6, and 7 may be mapped to AC_BK, AC_BK, AC_BE, AC_BE, AC_VI alternate, AC_VI primary, AC_VO primary, and AC_VO alternate, respectively. In addition, UP or TID values 1, 2, 0, 3, 4, 5, 6, and 7 may have sequentially have higher priorities. That is, a value near UP or TID value 1 may have a low priority, and a value near UP or TID value 7 may have a high priority. Accordingly, AC_BK, AC_BE, AC_VI, and AC_VO may have sequentially higher priorities. In addition, AC_BK, AC_BE, AC_VI, and AC_VO may correspond to AC indices (ACIs) 0, 1, 2, and 3, respectively.

Accordingly, there may be a relationship between the TID and the AC. Accordingly, the TID-to-link mapping of the present invention may correspond to a mapping relationship between an AC and a link. In addition, in the present invention, when the TID is mapped, it may mean that the AC is mapped, and when the AC is mapped, it may mean that the TID is mapped.

According to an embodiment of the present invention, there may be a TID mapped to each link of a multi-link. For example, there may be mapping relating to one of multiple links through which a TID or an AC is allowed to perform transmission and reception. In addition, such mapping may be defined separately for both directions of the link. In addition, as described above, there may be a default setup for the mapping between the TID and the link. For example, the mapping between the TID and the link may correspond to mapping of all TIDs to a link by default. In addition, according to an embodiment, at a specific time point, a TID or an AC may be mapped to at least one link. In addition, a management frame or a control frame may be transmitted in all links.

In the present invention, a data frame corresponding to a TID or an AC mapped to a direction of a link may be transmitted. In addition, a data frame corresponding to a TID or an AC not mapped to a direction of a link may not be transmitted.

According to an embodiment, the TID-to-link mapping may be applied to acknowledgement. For example, a block ack agreement may be based on the TID-to-link mapping. Alternatively, the TID-to-link mapping may be based on the block ack agreement. For example, there may be a block ack agreement for a TID for which the TID-to-link mapping is performed.

By performing the TID-to-link mapping, a QoS service can be provided. For example, by mapping an AC or a TID having a high priority to a link in which a channel state is good or there are small number of STAs, data of the corresponding AC or TID may be promptly transmitted. Alternatively, the TID-to-link mapping can assist in power saving (or entering into a doze state) by an STA of a specific link.

Referring to FIG. 10, there may be an AP MLD including AP 1 and AP 2. In addition, there may be a non-AP MLD including STA 1 and STA 2. In addition, in the AP MLD, there may be Link 1 and Link 2 which are multiple links. AP 1 and STA 1 may be associated in Link 1, and AP 2 and STA 2 may be associated in Link 2.

Accordingly, Link 1 may include a link for transmission from AP 1 to STA 1 and/or a link for transmission from STA 1 to AP 1, and Link 2 may include a link for transmission from AP 2 to STA 2 and/or a link for transmission from STA 2 to AP 2. In this case, each link may be mapped to a TID and/or an AC.

For example, all TIDs and all ACs may be mapped to the link for transmission from AP 1 to STA 1 in Link 1, and a link for transmission from STA 1 to AP 1 in Link 1. In addition, only AC_VO or a TID corresponding to AC_VO may be mapped to a link for transmission from STA 2 to AP 2 in Link 2. In addition, only data of the mapped TID and/or AC can be transmitted in the corresponding link. In addition, data of the TID or AC not mapped to a link cannot be transmitted in the corresponding link.

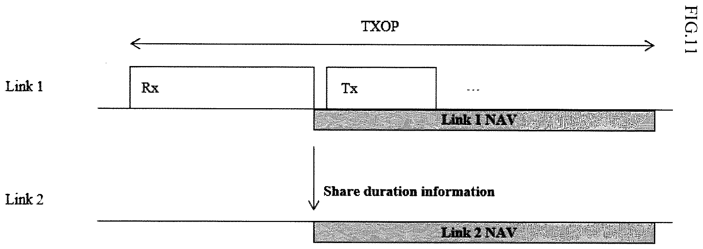

FIG. 11 illustrates an example of a multi-link NAV setup operation according to an embodiment of the present invention.

An operation of performing simultaneous transmission and reception (STR) by an MLD may be restricted, which may be associated with a frequency spacing between multiple links operating as a multi-link.

Accordingly, according to an embodiment of the present invention, when a spacing between links is m MHz, simultaneous transmission and reception may be restricted, and a spacing between links is n MHz (where, m is greater than n), simultaneous transmission and reception may not be restricted. This embodiment is provided to solve the problem that the simultaneous transmission and reception is restricted, and a redundant description can be omitted. In addition, this embodiment is appliable to an MLD which cannot perform the STR.

According to an embodiment of the present invention, duration information may be shared among links operating as a multi-link. In an embodiment, the duration information may be TXOP duration information transmitted in a signaling field of a preamble. The signaling field may be the above-described U-SIG field. Alternatively, the signaling field may be the above-described HE-SIG-A field. In another embodiment, the duration information may be duration information indicated by a duration/ID field included in a MAC header. In another embodiment, the duration information may be duration information indicated by a length field (L length field) included in an L-SIG field. According to an embodiment, the duration information indicated by the U-SIG field, the HE-SIG-A field, or the duration/ID field may be a value indicating a TXOP duration. According to an embodiment, the duration information indicated by the L-SIG field may be a value indicating the length of a physical layer protocol data unit (PPDU) including the L-SIG field or the end of the PPDU including the L-SIG field.

In addition, according to an embodiment of the present invention, it may be restricted to perform transmission or channel access in a period based on the duration information shard among the links. A method for restricting transmission or channel access may include setting up an NAV. Alternatively, to resume the transmission or channel access, the NAV may be reset. In this case, the NAV may be an intra-BSS NAV. The intra-BSS NAV may be an NAV set up by an intra-BSS frame (or PPDU). That is, an STA belonging to an MLD may set up an NAV on the basis of a frame (or PPDU) directed to another STA belonging to the MLD.

According to an embodiment of the present invention, there may be an inter-link NAV. The inter-link NAV may be an NAV used by STAs of multiple links belonging to an MLD in a case of operating as a multi-link. For example, transmission may not be performed in Link 2 on the basis of the inter-link NAV configured on the basis of the duration information received in Link 1. In addition, the inter-link NAV may exist or may be used for an MLD which cannot perform the STR. For example, when an inter-link NAV is set up, an MLD having set up the corresponding inter-link NAV may not perform transmission or channel access in multiple links (or all links used by the MLD).

In addition, as one of types of NAV, there may be a basic NAV other than the intra-BSS NAV. The basic NAV may be an NAV set up by an inter-BSS frame (or PPDU), and the basic NAV may be set up by a frame (or PPDU) which is not determined as either an intra-BSS or an inter-BSS.

In a case where an inter-link NAV is separately used, it may be advantageous in a situation in which an NAV setup is updated, compared to a case where the inter-link NAV is not used. For example, there may be a situation in which it is allowed to reset an NAV set up by another link. For example, it may be allowed to set up an inter-link NAV on the basis of a frame (or PPDU), and then reset the set inter-link NAV upon determination that the frame (or PPDU) is not directed to the same MLD. If there is an MLD operating in Link 1 and Link 2, an NAV for Link 1 may be set up on the basis of a frame received in Link 1. Thereafter, the NAV of Link 1 may be updated on the basis of the frame of Link 2. In addition, in a case where the NAV by the Link 2 does not need to be maintained, when the NAV of Link 1 is reset, information of the NAV set up on the basis of the frame received in Link 1 may be lost. If the inter-link NAV is used together with the NAV for each link, the NAV for each link can be maintained even though the inter-link NAV is reset, and thus such a problem can be solved.

In an embodiment of the present invention, the NAV setup is provided as an example, but the embodiment of the present invention is not limited thereof, and is applicable to a case of indicating suspension of channel access or indicating a channel state as busy to a physical layer. In addition, the present invention is not limited to a case of resetting an NAV, and is also applicable to a case of indicating continuing channel access to a physical layer or indicating a channel state as idle to a physical layer. In this case, the primitive exchanged between the physical layer and the MAC layer may be used. Alternatively, the primitive exchanged between one STA and another STA of an MLD may be used. Alternatively, the primitive exchanged between one MAC layer and another MAC layer of an MLD may be used.

According to an embodiment of the present invention, when an STA belonging to an MLD starts PPDU reception, another STA belonging to the MLD may need to stop performing channel access. As described above, the channel access can be stopped on the basis of the received duration information, but there may be a time required to acquire duration information from a time point at which the PPDU reception starts due to the location of a field including the duration information or a time required to perform decoding, etc. Accordingly, if the channel access is performed and the transmission starts during this time, the above-described problem may occur. Accordingly, according to an embodiment of the present invention, an STA of an MLD may suspend channel access from a time point at which another STA of the MLD starts to perform reception. In addition, when it is identified that a frame received after another STA of the MLD starts performing reception is not directed to another STA, channel access can be restarted.

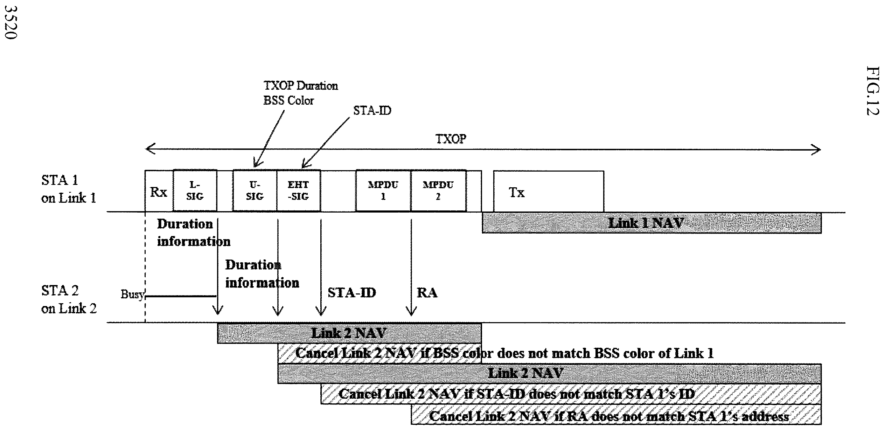

FIG. 12 illustrates another example of a multi-link NAV setup operation according to an embodiment of the present invention.

FIG. 12 is a detailed description of a specific method of the embodiment described in FIG. 11, and a redundant description can be omitted.

As described above, on the basis of a frame or a PPDU received by an STA belonging to an MLD, another STA belonging to the same MLD may suspend or resume channel access or transmission. In the present invention, suspending channel access or transmission may include an operation of setting up (updating) an NAV, determining a channel as busy, suspending CCA, etc. In addition, resuming channel access or transmission may include an operation of resetting an NAV, canceling a NAV setup, determining a channel as idle, performing CCA, etc. Hereinafter, such an operation may be indicated as suspending or resuming. In addition, hereinafter, it may be described that STA 1 and STA 2 belong to an MLD, and STA 1 and STA 2 operate in Link 1 and Link 2, respectively. In addition, a frame and a PPDU may be interchangeable indicated. In addition, the NAV in this case may be an intra-BSS NAV or an inter-link NAV as described in FIG. 11.

According to an embodiment of the present invention, when STA 1 starts receiving a frame, STA 2 may suspend channel access. In addition, when STA 1 acquires duration information from an L-SIG, STA 2 may continue the state of suspending the channel access. In this case, the state of suspending the channel access by STA 2 may be determined to last by the end of the frame received by STA 1. In addition, when STA 1 fails to accurately decode the L-SIG (in a case of invalid L-SIG), STA 2 may resume channel access.

In addition, a TXOP duration and a BSS color may be received from the U-SIG of the frame received by the STA 1. If the received BSS color indicates an intra-BSS or the BSS color is a BSS color corresponding to STA 1, channel access may be suspended. In an embodiment, in this case, a channel access suspending duration may last by the end of the received frame. In this case, it is advantageous in that channel access can be started faster after the received frame ends. In another embodiment, in this case, the channel access suspending duration may be a TXOP duration. In this case, the duration of the channel access suspended on the basis of the L-SIG may be updated. In this case, it is advantageous in that a sequence after the received frame can be better protected.

Alternatively, there may be a case where a TXOP duration and a BSS color are received from the U-SIG of the frame received by STA 1, and the received BSS color indicates non-intra-BSS, or the BSS color is not a BSS color corresponding to STA 1. Alternatively, there may be a case where STA 1 fails to successfully decode the U-SIG. In this case, STA 2 may resume channel access.

Alternatively, when information acquired from the U-SIG of the frame received by STA 1 indicates that the corresponding frame is a frame not received by STA 1, STA 2 may resume channel access. For example, when a PHY identifier acquired from the U-SIG is an ID corresponding to a future standard or an unrecognizable ID, STA 2 may resume channel access.

In addition, the case of receiving the U-SIG is described, but the same embodiment is also applicable to a case of receiving a HE PPDU and a case of receiving a HE-SIG-A. For example, the HE-SIG-A may include a TXOP duration and a BSS color, and accordingly, the operation as described above may be performed.

In addition, an STA-ID may be received from an EHT-SIG of the frame received by STA 1. If the received STA-ID is an indicator which needs to be received by STA 1, for example, if the STA-ID indicates STA 1, the STA-ID indicates a group to which STA 1 belongs, or the STA-ID indicates broadcast, STA 2 may continue the state of suspending the channel access.

Alternatively, an STA-ID may be received from an EHT-SIG of the frame received by STA 1. If the received STA-ID is an indicator not corresponding to STA 1, for example, if the STA-ID does not indicate an indicator corresponding to STA 1, the STA-ID does not indicate a group to which STA 1 belongs, or the STA-ID does not indicate broadcast, STA 2 may resume channel access. Alternatively, also in a case where STA 1 fails to successfully decode the EHT-SIG, STA 2 may resume channel access.

In addition, the case of receiving the EHT-SIG is described, but the same embodiment is also applicable to a case of receiving a HE PPDU and a case of receiving a HE-SIG-B. For example, the HE-SIG-B may include the STA-ID, and accordingly, the operation as described above may be performed.

In addition, a MAC header of the frame received by STA 1 may be received. If a receiver address (RA) or a destination address (DA) included in the received MAC header indicates a value which needs to be received by STA 1, for example, if the RA or DA indicates STA 1 or indicates a group to which STA 1 belongs to, or the STA-ID indicates broadcast, STA 2 may continue the state of suspending the channel access. In this case, the duration of the suspended channel access may be based on duration information included in the received MAC header. More specifically, the duration of the suspended channel access may be based on duration information indicated by a duration/ID field included in the received MAC header.

In addition, a MAC header of the frame received by STA 1 may be received. If an RA or DA included in the received MAC header is an indicator not corresponding to STA 1, for example, if the RA or DA does not indicate an indicator corresponding to STA 1, does not indicate a group to which STA 1 belongs to, or does not indicate broadcast, STA 2 may resume channel access. Alternatively, STA 1 may fail to receive all MAC headers. For example, STA 1 may fail to receive all MPDU included in an A-MPDU. In this case, STA 2 may resume channel access.

The suspending and resuming of the channel access, described in FIG. 12, may be sequentially performed according to an order of decoding as STA 1 starts receiving a frame (or PPDU) and sequentially performs decoding. The decoding order may be based on a PPDU format, a frame format, etc. For example, the decoding may be performed in the sequence of the L-SIG, the U-SIG, the EHT-SIG, and the MAC header (in a case of an EHT PPDU). Alternatively, the decoding may be performed in the sequence of the L-SIG, the HE-SIG-A, and the MAC header (in a case of a HE SU PPDU or a HE TB PPDU). Alternatively, the decoding may be performed in the sequence of the L-SIG, the HE-SIG-A, the HE-SIG-B, and the MAC header (in a case of a HE MU PPDU). Alternatively, the decoding may be performed in the sequence of the L-SIG and the MAC header (in a case of an 11a/g PPDU).

According to an embodiment of the present invention, the above-mentioned STA-ID may be a value indicating an intended receiver of a PPDU or a resource unit (RU). In addition, the STA-ID may be included in the EHT-SIG field, the HE-SIG-B field, or the like. In addition, the STA-ID may indicate a value corresponding to a single STA. For example, when multiple STAs are included in an MLD, the STA-ID may indicate a value corresponding to one of the multiple STAs. In addition, the STA-ID may be a value based on a MAC address or an AID of the STA.

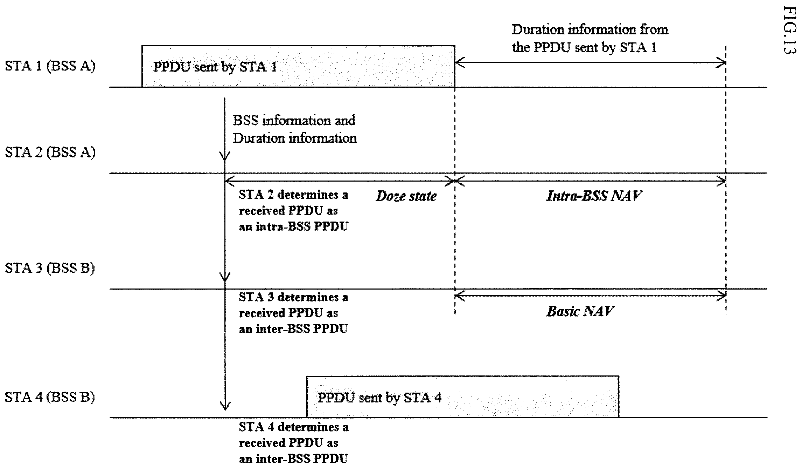

FIG. 13 illustrates an example of BSS classification and an operation based thereon according to an embodiment of the present invention.

According to an embodiment of the present invention, an STA may classify (or determine) a BSS on the basis of a received frame or a received PPDU. Classifying the BSS may include an operation of classifying whether the received frame or the received PPDU corresponds to a BSS to which the classifying STA belongs. Alternatively, classifying the BSS may mean an operation of classifying whether the received frame or the received PPDU has been transmitted from a BSS to which the classifying STA belongs. In addition, classifying the BSS may include an operation of classifying whether the received frame or the received PPDU corresponds to a BSS to which the classifying STA does not belong. Alternatively, classifying the BSS may mean an operation of classifying whether the received frame or the received PPDU has been transmitted from a BSS to which the classifying STA does not belong. In addition, classifying the BSS may include an operation of classifying a BSS to which the received frame or the received PPDU belongs. Alternatively, classifying the BSS may mean an operation of classifying a BSS from which the received frame or the received PPDU has been transmitted. According to an embodiment of the present invention, a BSS to which the classifying STA belongs may be called an intra-BSS. Alternatively, BSSs including a BSS to which the classifying STA belongs may be called an intra-BSS. In addition, a BSS other than the intra-BSS may be called an inter-BSS. Alternatively, a BSS other than the intra-BSS may be an inter-BSS or an unclassified BSS. Alternatively, the inter-BSS may include the unclassified BSS. In addition, a BSS to which the classifying STA does not belong may be called an inter-BSS.

According to an embodiment, when it is determined that the received frame or the received PPDU corresponds to the intra-BSS or has been transmitted from the intra-BSS, the received frame and the received PPDU may be called an intra-BSS frame and an intra-BSS PPDU, respectively. In addition, when it is determined that the received frame or the received PPDU corresponds to the inter-BSS or has been transmitted from the inter-BSS, the received frame and the received PPDU may be called an inter-BSS frame and an inter-BSS PPDU, respectively. In addition, a PPDU including

**EP 4 277 175 A1**

the intra-BSS frame may be an intra-BSS PPDU. In addition, a PPDU including the inter-BSS frame may be an inter-BSS PPDU.

According to an embodiment of the present invention, a BSS may be classified on the basis of one or more BSS classification conditions. For example, the BSS may be classified according to whether at least one of the one or more BSS classification conditions is satisfied.

The BSS classification condition may include a condition based on a BSS color. The BSS color may be an identifier for a BSS. In addition, the BSS color may be included in a preamble of a PPDU, more specifically, a signaling field (e.g., a HE-SIG-A field, a U-SIG field, or a VHT-SIG-A field). In addition, the BSS color may be included in TXVECTOR transferred from a MAC layer to a PHY layer of a transmitter. In addition, the BSS color may be included in RXVECTOR transferred from a PHY layer to a MAC layer of a receiver. Parameters included in TXVECTOR and RXVECTOR may be called a TXVECTOR parameter and an RXVECTOR parameter, respectively. In addition, the BSS color may be included in the TXVECTOR parameter or the RXVECTOR parameter. In addition, a BSS color configured by an AP may be notified to STAs. According to an embodiment, the BSS may be classified on the basis of a BSS color included in a received PPDU. If a BSS color included in a received PPDU differs from a BSS color of a BSS corresponding to an STA, the STA may classify the received PPDU as an inter-BSS PPDU. Alternatively, if a BSS color included in a received PPDU differs from a BSS color of a BSS corresponding to the STA and has a value other than 0, the STA may classify the received PPDU as an inter-BSS PPDU. In addition, if a BSS color included in a received PPDU is identical to a BSS color of a BSS corresponding to the STA, the STA may classify the received PPDU as an intra-BSS PPDU.

The BSS classification condition may include a condition based on a MAC address. The MAC address may be included in a MAC header of a frame. In addition, the MAC address may include a receiver address (RA), a transmitter address (TA), a BSSID, a source address (SA), a designation address (DA), etc. According to an embodiment, a BSS may be classified on the basis of a MAC address included in a received frame. If a MAC address included in a received frame differs from a BSSID of a BSS corresponding to an STA, the received frame may be classified as an inter-BSS frame. More specifically, if all MAC addresses included in the received frame differ from a BSSID of a BSS corresponding to the STA, the received frame may be classified as an inter-BSS frame. In addition, if a MAC address included in the received frame is identical to a BSSID of a BSS corresponding to the STA, the received frame may be classified as an intra-BSS frame. More specifically, if at least one of MAC addresses included in the received frame is identical to a BSSID of a BSS corresponding to the STA, the received frame may be classified as an intra-BSS frame.

The corresponding BSS may include an BSS to with which an STA is associated. In addition, the corresponding BSS may include a BSS included the same multiple-BSSID set as that of a BSS with which the STA is associated. In addition, the corresponding BSS may include a BSS included in the same co-hosted BSSID set as that of a BSS with which the STA is associated. In addition, one or more BSSs included in the same multiple-BSSID set or the same co-hosted BSSID set may transfer information relating to the one or more BSSs through a frame.

The BSS classification condition may include a condition based on a partial AID field value included in a VHT PPDU. The partial AID field may be included in a preamble of the VHT PPDU. In addition, the partial AID field may be included in a VHT-SIG-A field included in the VHT PPDU. According to an embodiment, the partial AID field may indicate a part of a BSS color. For example, when a partial BSS color function is used, the partial AID field may indicate a part of the BSS color. Alternatively, when an AID assignment rule is used, the partial AID field may indicate a part of the BSS color. The AID assignment rule may be a method for assigning an AID on the basis of a BSS color. In addition, when a group ID field included in the VHT-SIG-A field of the VHT PPDU has a pre-configured value (for example, when the group ID field is configured as 63), the partial AID field may indicate a part of the BSS color. According to an embodiment, when a partial AID field of a received PPDU indicates a part of the BSS color and a received partial AID field value differs from the part of the BSS color corresponding to the receiving STA, the received PPDU may be classified as an inter-BSS PPDU.

In addition, when a partial AID field of a received PPDU indicates a part of the BSS color and a received partial AID field value is identical to the part of the BSS color corresponding to the receiving STA, the received PPDU may be classified as an intra-BSS PPDU. In addition, in this case, the part of the BSS color may be 4 LSBs of the BSS color. According to another embodiment, the partial AID field may indicate a part of a BSSID. For example, when a group ID field included in the VHT-SIG-A field of the VHT PPDU has a pre-configured value (for example, when a group ID field is configured as 0), the partial AID field may indicate a part of a BSSID. According to an embodiment, when a partial AID field of a received PPDU indicates a part of the BSSID and a received partial AID field value differs from the part of the BSSID corresponding to the receiving STA, the received PPDU may be classified as an inter-BSS PPDU. In addition, when a partial AID field of a received PPDU indicates a part of the BSSID and a received partial AID field value is identical to the part of the BSSID corresponding to the receiving STA, the received PPDU may be classified as an intra-BSS PPDU. In addition, in this case, the part of the BSSID may be 9 MSBs of the BSSID. In addition, the partial AID field value may be included in TXVECTOR parameter PARTIAL _AID or RXVECTOR parameter PARTIAL AID. In addition, the group ID field value may be included in TXVECTOR parameter GROUP_ID and RXVECTOR parameter GROUP_ID.

The BSS classification condition may include a condition for receiving a PPDU of a pre-configured condition

17

by an AP. For example, the PPDU of the pre-configured condition may include a downlink PPDU. According to an embodiment, the downlink PPDU may include a VHT MU PPDU. In addition, the downlink PPDU may include a PPDU in which signaling indicating either an uplink or a downlink is configured as a pre-configured value. The signaling indicating either the uplink or the downlink may be included in a signaling field of a HE PPDU. Alternatively, the signaling indicating either the uplink or the downlink may be included in a U-SIG. The U-SIG may be included in a preamble of an EHT PPDU or a PPDU after the EHT standard.

In addition, there may be a case where classification into an intra-BSS PPDU or an inter-BSS PPDU cannot be made. For example, when both the condition for making classification into an intra-BSS PPDU and the condition for making classification into an inter-BSS PPDU, which are described above, fail to be satisfied, classification into the intra-BSS PPDU or the inter-BSS PPDU cannot be made.

In addition, in a case where classification results upon multiple conditions do not match when classifying the BSS, a final result may be determined according to a pre-configured condition. For example, when a result upon the condition based on the BSS color and a result upon the condition based on the MAC address do not match, the result upon the condition based on the MAC address is prioritized, or the result upon the condition based on the MAC address may be determined as a final result. Alternatively, when both the condition for making classification into the intra-BSS PPDU and the condition for making classification into the inter-BSS PPDU are satisfied, classification into an intra-BSS PPDU can be made.

According to an embodiment of the present invention, an STA may perform an operation based on a classified BSS. The operation based on the classified BSS may include an intra-PPDU power save operation. The intra-PPDU power save operation may be a power save operation based on a received PPDU. When a pre-configured condition is satisfied, the intra-PPDU power save operation may be performed. The pre-configured condition may include a condition for classifying the received PPDU as an intra-BSS PPDU. In addition, the pre-configured condition may include a condition in which an intended receiver of the received PPDU is not an STA having received the PPDU. For example, when an ID or an address included in a PPDU does not correspond to an STA having received the PPDU, an intended receiver of the PPDU may not be the STA having received the PPDU. The ID may be included in a preamble of a PPDU. For example, the ID may be STA_ID included in a preamble of a PPDU. In addition, STA_ID may be included in a HE MU PPDU or an EHT PPDU. In addition, the address may be the above-described MAC address. In addition, when the signaling indicating either the uplink or the downlink, which is included in the received PPDU, indicates the uplink, the intended receiver of the PPDU may not be the STA having received the PPDU. In addition, when a configuration of the received PPDU is not supported by the STA having received the PPDU, the intended receiver of the PPDU may not be the STA having received the PPDU. The configuration of the received PPDU may include an MCS of the PPDU, the number of spatial streams, a channel width, etc. In addition, when the configuration of the received PPDU is not supported by the STA having received the PPDU, the PHY-RXEND.indication (UnsupportedRate) primitive may be received. In addition, when the received PPDU has a pre-configured format, the intended receiver of the PPDU may not be the STA having received the PPDU. The pre-configured format may include a TB PPDU. The TB PPDU may include a HE TB PPDU and an EHT TB PPDU. In addition, the TB PPDU may be a PPDU transmitted as a response to a triggering frame. The triggering frame may include a trigger frame. The triggering frame may include a frame including information to be triggered. The information to be triggered may be included in a MAC header, for example, an A-control field. In addition, the information to be triggered or information included in the trigger frame may include the length of a responding PPDU, an RU to be used during responding, a PHY configuration and a MAC configuration to be used during responding, etc. The intra-PPDU power save operation may be an operation of entering into a doze state by the end of the received PPDU. In another embodiment, when it is determined that an intended receiver of a received PPDU or frame is not an STA, the STA may suspend reception or decoding of the PPDU or frame.

The operation based on the classified BSS may include an operation of setting up (or updating) a NAV. According to an embodiment, an STA may operate one or more NAVs. In addition, when an STA receives a PPDU or a frame, the STA may set up a NAV corresponding to a BSS classified on the basis of the received PPDU or the received frame. For example, an intra-BSS VAN may be a NAV corresponding to an intra-BSS PPDU. In addition, a basic NAV may be a NAV corresponding to a PPDU other than the intra-BSS PPDU. Alternatively, the basic NAV may be a NAV corresponding to an inter-BSS PPDU. In addition, when a NAV is set up on the basis of the received PPDU or the received frame, duration information included in the received PPDU or the received frame may be used. The duration information may include a TXOP. The TXOP may mean a value included in a TXOP field. The TXOP field may be included in a preamble of a PPDU. For example, the TXOP field may be included in a HE-SIG-A field of a HE PPDU. Alternatively, the TXOP field may be included in a U-SIG field of an ETH PPDU or a PPDU of a standard after the EHT. In addition, the duration information may be included in a MAC header. For example, the duration information may be included in a duration/ID field included in the MAC header.

The operation based on the classified BSS may include a spatial reuse operation. In addition, the operation based on the classified BSS may include a channel access operation. The spatial reuse operation may be a channel access operation. When an STA receives a PPDU or a frame and a pre-configured condition is satisfied, the spatial reuse operation may be performed. The pre-configured condition may include a condition in which a received PPDU or a received frame corresponds to an inter-BSS. In addition, the pre-configured condition may include a condition in which a signal strength of the received PPDU or the received frame is less than a threshold. For example, the threshold may be variable. In addition, the threshold may be a threshold for an OBSS PD-based spatial reuse operation. In addition, the threshold may be a value equal to or greater than a CCA threshold. In addition, the threshold may be a value based on power at transmission is to be performed. The spatial reuse operation may include an operation of transmitting a PPDU. In addition, the spatial reuse operation may include an operation of resetting a PHY. For example, the PHY resetting operation may be an operation of issuing the PHY-CCARESET.request primitive. In addition, the spatial reuse operation may include an operation of not setting up a NAV on the basis of a received PPDU or a received frame. If an STA performs the spatial reuse operation, the STA may transmit a PPDU while the received PPDU or the received frame is transmitted or received.

Referring to FIG. 13, there may be BSS A and BSS B, and BSS A and BSS B may be different from each other. In addition, each of BSS A and BSS B may correspond to an inter-BSS. That is, a PPDU or a frame transmitted by an STA associated with BSS A in BSS B may be classified as an inter-BSS PPDU or an inter-BSS frame. In addition, there may be STA 1 and STA 2 belonging to BSS A (or associated with an AP operating BSS A). There may be STA 3 and STA 4 belonging to BSS B (or associated with an AP operating BSS B). Referring to FIG. 13, STA 1 may transmit a PPDU. In addition, a PPDU transmitted by STA 1 may include information on a BSS. For example, the information on the BSS may be the above-described information for classifying the BSS. In addition, a PPDU transmitted by STA 1 may include duration information.

STA 2 may receive the PPDU transmitted by STA 1 and classify a BSS for the PPDU. In addition, STA 2 and STA 1 belong to BSS A, and thus the PPDU received by STA 2 may be classified as an inter-BSS PPDU. In addition, the PPDU received by STA 2 may be a UL PPDU or a PPDU, the intended receiver of which is not the STA. Accordingly, according to the above-described embodiment, STA 2 may perform intra-PPDU power saving. Referring to FIG. 13, STA 2 may enter into a doze state by the end of the received PPDU. In addition, STA 2 may set up a NAV on the basis of duration information included in the received PPDU. STA 2 has classified the received PPDU as the intra-BSS PPDU, the NAV may be set up as an intra-BSS NAV.

STA 3 may receive the PPDU transmitted by STA 1 and classify a BSS for the PPDU. In addition, STA 3 and STA 1 belong to BSS B and BSS A, respectively, and thus the PPDU received by STA 3 may be classified as an inter-BSS PPDU. In addition, STA 3 may set up a NAV on the basis of duration information included in the received PPDU. STA 3 has classified the received PPDU as the inter-BSS PPDU, the NAV may be set up as a basic NAV.

STA 4 may receive the PPDU transmitted by STA 1 and classify a BSS for the PPDU. In addition, STA 4 and STA 1 belong to BSS B and BSS A, respectively, and thus the PPDU received by STA 4 may be classified as an inter-BSS PPDU. In addition, a signal strength of the PPDU received by STA 4 may be less than a threshold. Accordingly, the PPDU received by STA 4 has been classified as the inter-BSS PPDU and the signal strength of the PPDU received by STA 4 is less than the threshold, and thus STA 4 may perform a spatial reuse operation. Accordingly, STA 4 may perform channel access and a backoff procedure, and start performing transmission. For example, STA 4 may start performing transmission at a time point at which the PPDU transmitted by STA 1 does not end.

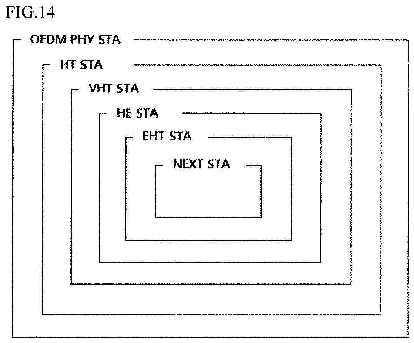

FIG. 14 illustrates a wireless LAN function according to an embodiment of the present invention.

Referring to FIG. 14, a wireless LAN of one standard may include a wireless LAN function of another standard. Alternatively, a wireless LAN of one standard may be a wireless LAN of another standard. Here, the wireless LAN may mean an STA. Additionally, here, the wireless LAN may mean an MLD including an STA. For example, a wireless LAN standard may include a standard function of a previous generation, and may include an additional function. For example, an HT STA may be an OFDM PHY STA as well. In addition, the HT STA may perform not only a function of an OFDM PHY STA but also an additional function. For example, a VHT STA may be an HT STA. In addition, the VHT STA may perform not only a function of the HT STA but also an additional function. For example, a HE STA may be a VHT STA as well. In addition, the HE STA may perform not only a function of the VHT STA but also an additional function. In addition, an EHT STA may be a HE STA as well. In addition, the EHT STA may perform not only a function of the HE STA but also an additional function. In addition, there may be standards after the EHT standard. In the present invention, a standard after the EHT standard may be called a NEXT standard, and an STA following the NEXT standard may be called a NEXT STA. The NEXT STA may be an EHT STA as well. In addition, the NEXT STA may perform not only a function of the EHT STA but also an additional function.

FIG. 14 is a diagram illustrating a relationship among STAs of respective standards. Referring to FIG. 14, an EHT STA may be a HE STA, a VHT STA, a HT STA, and an OFDM PHY STA. In addition, a NEXT STA may be an EHT STA, a HE STA, a VHT STA, an HT STA, and an OFDM PHY STA.

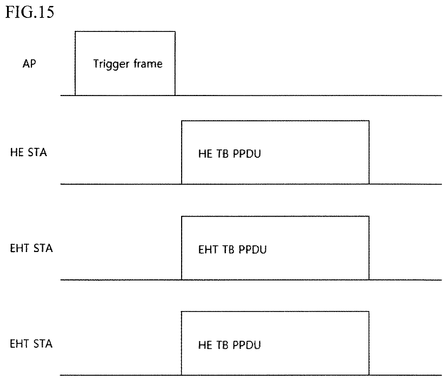

FIG. 15 illustrates an uplink (UL) multi-user (MU) operation according to an embodiment of the present invention.

Referring to FIG. 15, an AP may indicate a PPDU to at least one STA through a specific frame (for example, a triggering frame), and the at least one STA may simultaneously transmit PPDUs having the same format or different formats on the basis of the specific frame transmitted from the AP.

Specifically, as illustrated in FIG. 15, a frame for soliciting or triggering multi-user (MU) transmission may be transmitted, and one or more STAs may perform transmission on the basis of the frame, or may respond to the frame. In this case, when the one or more STAs transmit a response of the frame, the one or more STAs may simultaneously transmit immediate responses, and the response to the frame may start to be transmitted after an SIFS at the end of a PPDU including the frame. For example, when the frame solicits an immediate response, the one or more STAs may immediately transmit the response to the frame. The frame for soliciting or triggering transmission to the one or more STAs may be a trigger frame or a frame including, in a MAC header, information indicating that uplink transmission is solicited or triggered to the one or more STAs. In this case, the frame may include, in the MAC header, information (for example, a TRS control subfield) triggering or soliciting uplink transmission to one STA only.

For example, the information soliciting or triggering the uplink transmission, the information being included in the MAC header, may be triggered response scheduling (TRS) included in a HT control field, a control subfield, or an A-control subfield, or may be a TRS control subfield.

The frame for indicting or triggering the uplink transmission may be transmitted by an AP, and when the frame for soliciting or triggering the uplink transmission is a trigger frame, a response thereto may be transmitted through a trigger-based PPDU (TB PPDU). In this case, the TB PPDU may include not only the HE TB PPDU and the EHT TB PPDU, described above, but also a NEXT TB PPDU which can be defined in the next standard.

The HE TB PPDU may include a preamble, data, and packet extension (PE), the preamble may sequentially include L-STF, L-LTF, L-SIG, RL-SIG, HE-SIG-A, HE-STF, and HE-LTF.

Each of the EHT TB PPDU and the NEXT TB PPDU may also include a preamble, data, PE, etc., and a preamble of each of the EHT TB PPDU and the NEXT TB PPDU may sequentially include L-STF, L-LTF, L-SIG, RL-SIG, U-SIG, (EHT-/NEXT-)STF, and (EHT-/NEXT-)LTF.

A frame for soliciting or triggering transmission of a PPDU to one or more STAs may include information required for the one or more STAs to transmit the TB PPDU. For example, when a type subfield included in the frame is "01" (B3 B2) and a subtype subfield is "0010" (B7 B6 B5 B4), a frame including the type subfield and the subtype subfield may be a trigger frame corresponding to a control frame.

When a response to the TB PPDU is solicited or triggered to multiple STAs, and formats of the PPDU that the multiple STAs respond are different from each other, a problem that the AP having solicited or triggered the response has difficulty receiving the PPDU corresponding the response transmitted from the multiple STAs may occur. Alternatively, when pieces of information included in a preamble of the PPDU that the multiple STAs respond are different according to a format, a problem that the AP having solicited or triggered the response has difficulty receiving a PPDU corresponding to a response transmitted from the multiple STAs may occur.

Accordingly, to solve such problems, when the multiple STAs respond to the frame of the AP, the responding the formats of the responding PPDU and/or the types of information included in the preamble of the PPDU may be configured to be identical to each other. For example, when the multiple STAs transmit HE TB PPDUs as a response to the frame of the AP, the AP may transfer information or a promise about information included in the HE TB PPDU may be made so that information included in L-STF, L-LTF, L-SIG, RL-SIG, and HE-SIG-A is identical and thus the AP can successfully receive the preambles transmitted by the multiple STAs. However, when the HE TB PPDU, the EHT TB PPDU, and the NEXT TB PPDU are simultaneously transmitted through overlapping subbands, the TB PPDU formats thereof are different, and thus a problem that the AP has difficulty receiving the PPDUs may occur.

According to an embodiment of the present invention, the HE STA may transmit the HE TB PPDU. In addition, the EHT STA may transmit the EHT TB PPDU or the HE TB PPDU. In addition, the NEXT STA may transmit the NEXT TB PPDU, the EHT TB PPDU, or the HE TB PPDU. This is because an STA in one standard may include a function of the previous standard, as described above in FIG. 14.

As illustrated in FIG. 15, when the AP transmits a frame for scheduling transmission of the TB PPDU to the HE STA and the EHT STA and solicits or triggers transmission of the TB PPDU through the frame, an accurate instruction or protocol for the TB PPDU format may not exist. In this case, the HE STA may transmit the HE TB PPDU as a response to the frame, and the EHT STA may respond with the EHT TB PPDU or the HE TB PPDU. In this case, the AP may be difficult to receive the TB PPDUs transmitted by the STAs, and a problem that the AP fails to successfully receive the TB PPDUs from the multiple STAs and successful transmission fails but a medium is occupied and transmission opportunities of other STAs are reduced may occur.

Hereinafter, in the present invention, soliciting to the STA may mean soliciting a response from the STA, and the triggering and the soliciting may be used to indicate the same meaning.

In addition, the HE trigger frame, the EHT trigger frame, and the NEXT trigger frame may be trigger frames defined in the HE, EHT, and NEXT standards, respectively. In addition, in the present invention, the HE TRS, the EHT TRS, and the NEXT TRS may be TRSs defined in the HE, EHT, and NEXT standards, respectively.

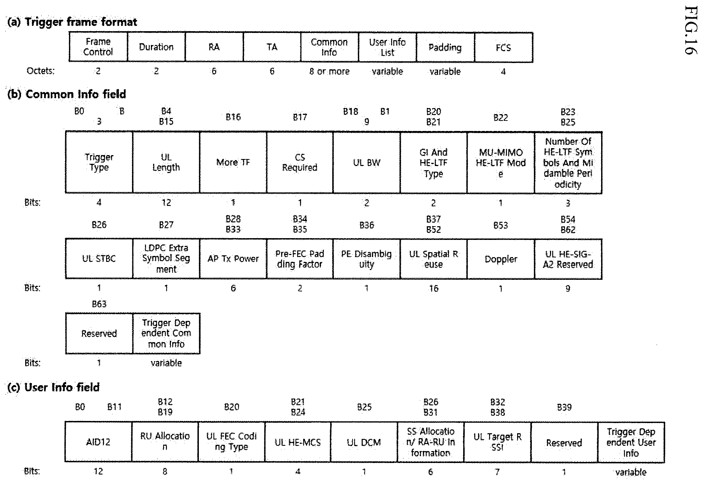

FIG. 16 illustrates a trigger frame format according to an embodiment of the present invention.

FIG. 16(a) illustrates a trigger frame format, FIGS. 16(b) and (c) illustrate a common information (info) field and a user info field corresponding to fields each included a trigger frame.

Referring to FIG. 16(a), a frame may include, as a trigger MAC header, a frame control field, a duration field, and an address filed, and may include a common information field and a user info list field. The address field may include a resource allocation (RA) field and a transmitter address (TA) field.

The common info field may include pieces of information corresponding to all STAs in common, the STAs solicited by the trigger frame. FIG. 16(b) illustrates an example of a common info field.

The user info list field may include zero or more user info fields, and a user info list field of a trigger frame except for a specific type of trigger frame may include one or more user info fields. FIG. 16(c) illustrates an example of a user info field.

The trigger frame may further include a padding field and a frame check sequence (FCS) field. The padding field may be used to increase the length of a frame to secure a time required for an STA receiving a trigger frame to prepare a response to the trigger frame, and may be selectively included in the trigger frame.

Referring to FIG. 16(b), the common info field may include a trigger type subfield. The trigger type subfield may be used to identify a trigger frame variant. Alternatively, the type of the trigger frame may be indicated on the basis of a value of a trigger frame subfield. In addition, the length and information included in a trigger dependent common info subfield and a trigger depended user info subfield, illustrated in FIG. 14, may be determined on the basis of the trigger type subfield. For example, the trigger type subfield may be indicated through bits B0 to B3 of the common info field.

The common info field may include an uplink (UL) length subfield. The UL length subfield may include information on the length of a TB PPDU corresponding to a response to the trigger frame, and include information on the length of a frame responding to the trigger frame. In addition, the UL length subfield may indicate a value to be included in an L-SIG length subfield of a TB PPDU responding to the trigger frame. Accordingly, an STA receiving the trigger frame and responding with the TB PPDU may configure a value of the length subfield included in the L-SIG of the TB PPDU on the basis of the value of the UL length subfield included in the received trigger frame. Specifically, the STA responding with the TB PPDU may configure a length subfield included in the L-SIG of the TB PPDU as a value of the UL length subfield included in the received trigger frame. For example, the STA may transmit the TB PPDU by configuring the length subfield included in the L-SIG of the TB PPDU, on the basis of the values of bits B4 to B15 of the common information field indicating the UL length subfield.

In addition, the common info field may further include an uplink bandwidth (UL BW) subfield. The UL BW subfield may indicate a value of a BW included in a signaling field (for example, HE-SIG-A, U-SIG, or the like) of the TB PPDU transmitted as a response to the trigger frame, and may indicate a maximum BW of the TB PPDU transmitted as a response to the trigger frame. Accordingly, the STA may configure a value of a BW included in a signaling field of a TB PPDU on the basis of a value of the UL BW subfield included in the trigger frame.

In addition, the common info field may additionally include information to be included in the signaling field of the TB PPDU corresponding to a response to the trigger frame. Accordingly, after receiving the trigger frame, the STA may configure information included in the TB PPDU on the basis of the information included in the trigger frame.

Referring to FIG. 16(c), the user info field may include an AID12 subfield. The AID12 subfield may be used to indicate a function of the user info field or an intended receiver of the user info field including the AID12 subfield. Accordingly, the AID12 subfield may also perform a role of indicating the function of the trigger frame or the intended receiver of the trigger frame including the AID12 subfield. For example, when a value of the AID12 subfield is a pre-configured value, the user info field may indicate a random access resource unit (RA-RU). That is, the pre-configured value of the AID12 subfield may indicate that the user info field indicates the RA-RU. Specifically, when the value of the AID 12 subfield is "0", the user info field may indicate the RA-RU for associated STAs. For example, when the value of the AID12 subfield is "0", the user info field may indicate the RA-RU for the associated STAs, and when the value of the AID12 subfield is "2045", the user info field may indicate the RA-RU for unassociated STAs. A response may be indicated by the user info field including the AID12 subfield and the trigger frame including the AID subfield to the STA corresponding to an STA ID (for example, association ID (AID)) indicated by the value of the AID12 subfield. For example, the AID12 subfield may indicate an AID or 12 LSBs of the AID. The STA corresponding to a value indicated by the AID12 subfield may transmit a TB PPDU as a response to the received trigger frame. In this case, the value of the AID12 subfield may be in the range of "1" to "2007" (including 1 and 2007), and when the AID12 subfield has a pre-configured value (for example, "2046", etc.), an RU corresponding to the pre-configured value of the AID12 subfield may not be allocated to any STAs. In addition, the AID subfield has a pre-configured value (for example, "4095", etc.), the pre-configured value may indicate that padding of the trigger frame is started.

Pieces of information of the user info field including the AID12 subfield may be pieces of information corresponding to the STAs indicated by the AID12 subfield. For example, a resource unit (RU) allocation subfield may indicate the size, the location, or the like of the RU. In this case, the value of the RU allocation subfield of the user info field including the AID12 subfield may be information corresponding to the STA indicated by the AID12 subfield. That is, the RU indicated by the RU allocation subfield of the AID12 subfield may be an RU allocated to the STA indicated by the AID12 subfield.

In addition, the user info field may indicate a coding method (UL FEC coding type), a modulation method (UL HE-MCS and UL DCM), power (UL target RSSI), etc. for generation of the TB PPDU transmitted as a response to the trigger frame.

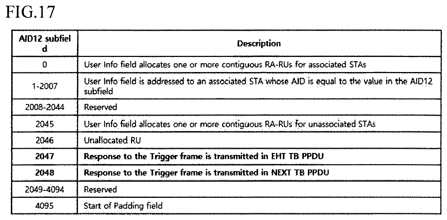

FIG. 17 illustrates a method for soliciting a trigger-based (TB) PPDU format according to an embodiment of the present invention.

Referring to FIG. 17, an STA may selectively transmit PPDUs having different formats on the basis of the soliciting made by a triggering frame which solicits transmission of a PPDU.

Specifically, an EHT STA may selectively transmit not only a legacy PPDU (for example, HE TB PPDU) but also an EHT TB PPDU, and a NEXT STA may selectively transmit a HE TB PPDU, an EHT TB PPDU, and/or a NEXT TB PPDU. In this case, STAs to which serveral standards are applied, respectively, may be individually scheduled by one frame or one PPDU. In the wireless LAN, STAs to which multiple standards are applied use a common resource, and thus such a method can be advantageous. For example, the HE STA (HE STA rather than EHT STA) and the EHT STA may be allowed to respond with the HE TB PPDU through one frame. That is, a non-AP STA may transmit a triggering frame to indicate transmission of the HE TB PPDU to not only the HE STA but also the EHT STA.

In addition, information for selecting the TB PPDU format may be included in a trigger frame corresponding to a triggering frame, TRS, a PPDU including the trigger frame, or a PPDU including a TRS control subfield. That is, an AP STA transmits a triggering frame to at least one non-AP STA by including information for selecting the format of the TB PPDU in the triggering frame, and the non-AP STA may select the format of the PPDU to be transmitted as a response, on the basis of the information included in the transmitted triggering frame. Thereafter, the at least one non-AP STA may transmit a PPDU to the AP on the basis of the selected format.

Information on the format (TB PPDU format) of the PPDU corresponding to a response to the triggering frame may exist at a MAC level, a trigger frame corresponding to one of triggering frames may be distinguished as a HE trigger frame, an EHT trigger frame, and a NEXT trigger frame, and a response to each of the trigger frames may be distinguished as a HE TB PPDU, an EHT TB PPDU, and a NEXT TB PPDU.

In addition, distinguishing the trigger frame as the HE trigger frame, the EHT trigger frame, and the NEXT trigger frame may have the same meaning as distinguishing the format of the TB PPDU corresponding to the response to the trigger frame as the HE TB PPDU, the EHT TB PPDU, and the NEXT TB PPDU.

Whether the format of the trigger frame for distinguishing the format of the TB PPDU is a HE trigger frame, an EHT trigger frame, or a NEXT trigger frame may be identified on the basis of a frame control field included in a MAC header. Specifically, the format of the trigger frame may be distinguished on the basis of a type subfield, a subtype subfield, and/or a control frame extension subfield. In addition, when the type subfield, the subtype subfield, and/or the control frame extension subfield has a pre-configured value, the trigger frame may be identified as a HE trigger frame, and when the type subfield, the subtype subfield, and/or the control frame extension subfield has another pre-configured value, the trigger frame may be identified as an EHT trigger frame. In addition, when the type subfield, the subtype subfield, and/or the control frame extension subfield has another pre-configured value, the trigger frame may be identified as a NEXT trigger frame.

For example, when the type subfield is 01 (B3 B2) and the subtype subfield is 0010 (B7 B6 B5 B4), the format of the frame including the type subfield and the subtype subfield may be a HE trigger frame. In this case, entries of the type subfield (2 bits), the subtype subfield (4 bits), and/or the control frame extension subfield (4 bits) to which a limited number of bits are allocated may need to be additionally used in the EHT standard and the NEXT standard.

Alternatively, whether the format of the trigger frame is a HE trigger frame or an EHT trigger frame may be identified on the basis of the common info field included in the trigger frame. That is, the format of the PPDU to be transmitted as a response to the trigger frame may be determined on the basis of a value of a specific subfield (first subfield) included in the common info field. For example, the non-AP STA may select the HE TB PPDU or the EHT TB PPDU according to the value of the common info field and transmit the selected PPDU through an allocated RU. In this case, not only the common info field but also a specific subfield (second subfield) of the user info field may be additionally used to identify the format of the PPDU.

That is, a variant for determining the format of the PPDU corresponding to a response to the trigger frame may be determined on the basis of the common info field of the trigger frame, and the format of the PPDU may be determined according to the determined variant. For example, when the variant for determining the format of the PPDU is determined as a HE variant by the common info field, the non-AP STA may respond with the HE TB PPDU, and when the variant for determining the format of the PPDU is determined as an EHT variant by the common info field, the non-AP STA may respond with the EHT TB PPDU.

In this case, for the variant for determining the format of the PPDU, not only the common info field but also the user info field may be additionally used.

For example, the trigger frame may be distinguished as a HE trigger frame, an EHT trigger frame, or a NEXT trigger frame according to a trigger type subfield. For example, when the trigger type subfield has a pre-configured value, the trigger frame may be a HE trigger frame. In addition, when the trigger type subfield has a pre-configured value, the trigger frame may be an EHT trigger frame. When the trigger type subfield has a pre-configured value, the trigger frame may be a NEXT trigger frame.

For example, when the trigger type subfield value is one of 0 to 7, the trigger frame is a HE trigger frame, and when the trigger type subfield value is a value other than 0 to 7, the trigger frame may be an EHT trigger frame or a NEXT trigger frame. The trigger type subfield may indicate various trigger frame types, but in this case, it may be disadvantageous in that limited trigger type subfield spaces need to be used.

According to another embodiment, whether the trigger frame is a HE trigger frame, an EHT trigger frame, or a NEXT trigger frame may be distinguished on the basis of a UL length subfield of the trigger frame. For example, whether the trigger frame is a HE trigger frame, an EHT trigger frame, or a NEXT trigger frame may be distinguished on the basis of a value obtained by applying a mod (remainder) operation to the UL length subfield value. That is, whether the format of the PPDU to be transmitted as a response to the trigger frame is a HE PPDU or an EHT PPDU may be determined using the value of the UL length subfield.

More specifically, whether the trigger frame is a HE trigger frame, an EHT trigger frame, or a NEXT trigger frame may be distinguished on the basis of a value (a remainder obtained by dividing the UL length subfield by 3) obtained by applying a mod (remainder) 3 operation to the UL length subfield value. For example, when a result obtained by applying a mod 3 operation to the UL length subfield value is not 0, the trigger frame may be a HE trigger frame. Alternatively, when a result obtained by applying a mode 3 operation to the UL length subfield value is 1, the trigger frame may be a HE trigger frame. Alternatively, when a result obtained by applying a mod 3 operation to the UL length subfield value is 0, the trigger frame may not be a HE trigger frame. Alternatively, when a result obtained by applying a mod 3 operation to the UL length subfield value is 0, the trigger frame may be an EHT trigger frame or a NEXT trigger frame.

That is, when a value obtained by applying a mod 3 operation to a value of a UL length subfield of a trigger fame is not 0, a response to the trigger frame may be transmitted using a HE TB PPDU, and when a value obtained by applying a mod 3 operation to a value of a UL length subfield is 1, a response to the trigger frame may be transmitted using a HE TB PPDU.

In addition, when a value obtained by applying a mode 3 operation to a value of a UL length subfield of a trigger frame is 0, the format of a PPDU to be transmitted as a response to the trigger frame may be an EHT TB PPDU.

In addition, in addition to such a method, it is possible to distinguish whether the trigger frame is a HE trigger frame, an EHT trigger frame, or a NEXT trigger frame, by also using a trigger frame distinguishing method. For example, it is possible to distinguish whether the trigger frame is a HE trigger frame, an EHT trigger frame, or a NEXT trigger frame, by also using the distinguishing method described in FIG. 16.

According to an embodiment, whether the format of the trigger frame is a HE trigger frame, an EHT trigger frame, or a NEXT trigger frame may be distinguished on the basis of a user info field of the trigger frame.

That is, similar to the above-described common info field, whether the format of the trigger frame is a HE trigger frame or an EHT trigger frame may be identified on the basis of the user info field included in the trigger frame. That is, the format of the PPDU to be transmitted as a response to the trigger frame may be determined on the basis of a value of a specific subfield (second subfield) included in the user info field. For example, according to the value of the user info field, the non-AP STA may select a HE TB PPDU or an EHT TB PPDU and transmit the selected PPDU through an allocated RU. In this case, not only the user info field but also a specific subfield (first subfield) of the common info field may be additionally used to identify the format of the PPDU.

That is, a variant for determining the format of the PPDU corresponding to a response to the trigger frame may be determined on the basis of the user info field of the trigger frame, and the format of the PPDU may be determined according to the determined variant. For example, when the variant for determining the format of the PPDU is determined as a HE variant by the user info field, a non-AP STA may respond with a HE TB PPDU, and when the variant for determining the format of the PPDU is determined as a an EHT variant by the user info field, the non-AP STA may respond with an EHT TB PPDU.

In this case, to determine the variant for determining the format of the PPDU, not only the user info field but also the common info field may be additionally used.

For example, whether the trigger frame is a HE trigger frame, an EHT trigger frame, or a NEXT trigger frame may be distinguished on the basis of an AID12 subfield. According to an embodiment, whether the trigger frame is a HE trigger frame, an EHT trigger frame, or a NEXT trigger frame may be distinguished according to whether the AID12 subfield having a pre-configured value is included. In addition, in this case, there may be a problem that in order to determine the format of a trigger frame, an STA indicated by a user info field needs to continuously identify an AID12 subfield existing after the user info field. To solve such a problem, a user info field including an AID12 subfield indicating the type of a trigger frame may exist in the front of a user info list. In addition, to avoid a HE STA which cannot understand such a signaling method from malfunctioning, a user info field including an AID12 subfield indicating the type of a trigger frame may exist after user info fields corresponding to the HE STA.

In addition, in this case, information of other subfields remaining after excluding the AID12 subfield included in the user info field may not be needed for a TB PPDU response, and thus subfields of the user info field including the AID12 subfield indicating the type of a trigger frame can be omitted. That is, the length of the user info field may vary on the basis of the AID12 subfield. Referring to FIG. 15, the AID12 subfield may perform a role of indicating a responding TB PPDU format. For example, when an AID12 subfield has a pre-configured value, a response to a trigger frame including the AID12 subfield having the pre-configured value may be an EHT TB PPDU. For example, when the AID12 subfield value is 2047, a response to a trigger frame including the AID 12 subfield may be an EHT TB PPDU. In addition, when the AID12 subfield has a pre-configured value, a response to the trigger frame including the AID12 subfield having the pre-configured value may be a NEXT TB PPDU. For example, when the AID12 subfield value is 2048, a response to the trigger frame including the AID12 subfield may be a NEXT TB PPDU.

According to another embodiment, when a response is transmitted on the basis of a user info field existing at a pre-configured position from an AID12 subfield having a pre-configured value, a TB PPDU format corresponding to the pre-configured value may be transmitted as the response. For example, when a response is transmitted on the basis of a user info field existing after an AID12 subfield having a pre-configure value, a TB PPDU format corresponding to the pre-configured value may be transmitted as the response. When there are multiple values indicating the TB PPDU and a response is transmitted on the basis of a user info field existing after both pre-configured value 1 and pre-configure value 2, a TB PPDU format corresponding to pre-configured value 1 and a TB PPDU format corresponding to pre-configured value 2 may be transmitted as responses. Referring to FIG. 15, when a response is transmitted on the basis of a user info field existing after an AIDI2 subfield configured with 2047, an EHT TB PPDU may be transmitted as the response. In addition, when a response is transmitted on the basis of a user info field existing after an AID12 subfield configure with 2048, a NEXT TB PPDU may be transmitted as the response. In addition, when a response is transmitted on the basis of a user info field existing after both an AID12 subfield configured with 2047 and an AID12 subfield configured with 2048, a NEXT TB PPDU may be transmitted as the response. In addition, a response is transmitted on the basis of a user info field existing before both an AID12 subfield configured with 2047 and an AID12 subfield configured with 2048, a HE TB PPDU may be transmitted as the response.

In this embodiment, indicating the type of trigger frame by the AID12 subfield is described as an example, but the present invention is not limited thereto, and the type of trigger frame may be indicated through another subfield of the user info field.

According to an embodiment, whether a trigger frame is a HE trigger frame, an EHT trigger frame, or a NEXT trigger frame may be distinguished on the basis of a padding field of the trigger frame. For example, whether a trigger frame is a HE trigger frame, an EHT trigger frame, or a NEXT trigger frame may be determined whether a padding field includes a pre-configured value indicating whether a trigger frame is a HE trigger frame, an EHT trigger frame, or a NEXT trigger frame.

According to an embodiment of the present invention, in combination with the method of distinguishing multiple trigger frames, described in the present invention, it is possible to distinguish whether a trigger frame is a HE trigger frame, an EHT trigger frame, or a NEXT trigger frame. In addition, the description made in relation to the trigger frame in the present invention is not limited thereto, but is also applicable to the TRS.

In another embodiment of the present invention, an AP cannot indicate both transmissions of the EHT PPDU and the HE PPDU through the triggering frame. That is, the EHT AP cannot transmit a trigger frame indicating both the HE TB PPDU and the EHT TB PPDU, and can indicate only one PPDU format.

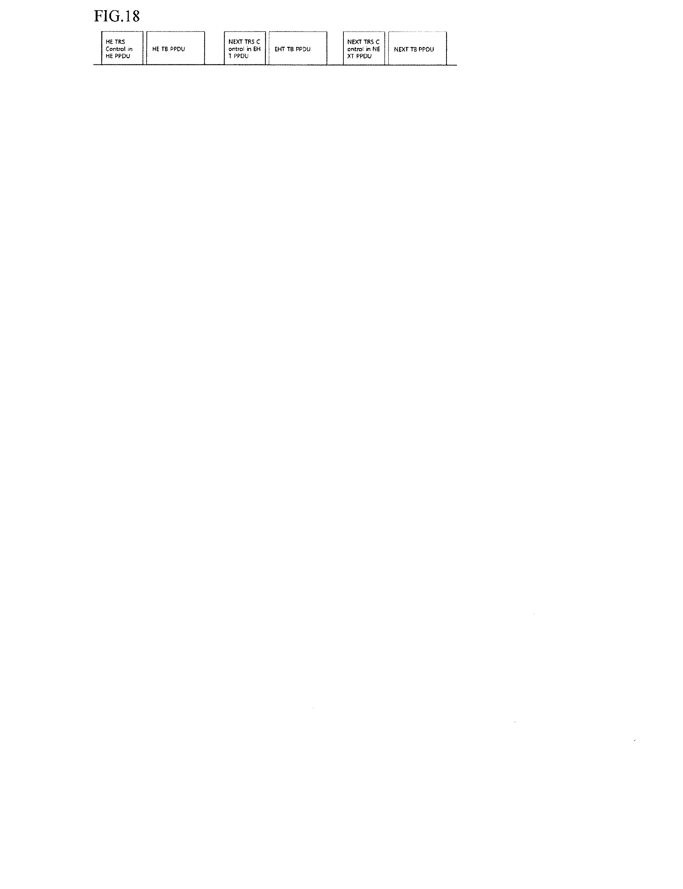

FIG. 18 illustrates a UL MU operation according to an embodiment of the present invention.

As described above, transmission of a TB PPDU may be indicated through not only a trigger frame but also a TRS. In addition, the TRS may be included in an HT control field as described above. For example, when the HT control field includes an A-control field, the TRS may be included. The TRS may be transferred by the TRS control subfield. The A-control field may have a form in which control list fields can be consecutively connected. In addition, the control list field may include the TRS.

In addition, an intended receiver of a frame including the TRS may respond to the TRS. For example, an STA corresponding to an RA included in a frame including the TRS may respond to the TRS. The TRS may include information (UL data symbols) relating to the length of the frame or the PPDU transmitted to the TRS as a response, the location and the size (RU allocation) of an RU to be used when responding to the TRS, information (AP tx power and UL target RSSI) relating to power when responding to the TRS, information (UL HE-MCS) relating to a modulation method when responding to the TRS, etc.

The embodiment of FIG. 18 may be a method for solving the problems described in FIGS. 14 and 15. In addition, as described above, the embodiment for the trigger frame is also applicable to the TRS. In addition, the description made above can be omitted.

According to an embodiment of the present invention, other than a TRS (HE TRS) defined in a HE standard, a TRS (EHT TRS or NEXT TRS) defined in an EHT standard or a NEXT standard may exist. Accordingly, a responding TB PPDU may be a HE TB PPDU, an EHT TB PPDU, or a NEXT TB PPDU according to whether the indicated TRS is a HE TRS, an EHT TRS, or a NEXT TRS. For example, a standard in which the TRS is defined may be determined through a control ID subfield of an A-control subfield. In an additional embodiment, the TRS may be divided into two TRSs including a HE TRS and a TRS other than the HE TRS.

Alternatively, for example, a standard in which the TRS is defined may be determined whether the HT control field is the HE variant, the EHT variant, the NEXT variant. In addition, the determination may be made according to whether the HT control field is the HE variant, the EHT variant, or the EHT variant by using a value of a pre-configured bit of the HT control field. For example, when B0 and B1 of the HT control field is 1 and 1, respectively, the HE control field is the HE variant. In addition, the determination may be made according to whether the HT control field is the HE variant, the EHT variant, or the NEXT variant by using B0, B1, and an additional bit of the HT control field.

According to an embodiment of the present invention, the format of a TB PPDU transmitted as a response to a TRS may be determined on the basis of a PPDU format including the TRS. That is, when a PPDU indicating transmission of a PPDU includes a TRS control subfield, the format of the PPDU may be determined on the basis of the format of a PPDU including a TRS control subfield. For example, when the format of the PPDU including the TRS control subfield is a HE PPDU, the format of the indicated PPDU may be a HE PPDU. However, when the format of the PPDU including the TRS control subfield is an EHT PPDU, the format of the indicated PPDU may be an EHT PPDU.

Referring to FIG. 18, when a TRS is transferred through a HE PPDU, a TB PPDU transmitted as a response to the TRS may be a HE TB PPDU. In addition, when a TRS is transferred through an EHT PPDU, a TB PPDU transmitted as a response to the TRS may be an EHT TB PPDU. In addition, when a TRS is transferred through a NEXT PPDU, a TB PPDU transmitted as a response to the TRS may be a NEXT TB PPDU.

According to an embodiment of the present invention, the interpretation of a subfield included in a TRS may vary on the basis of a PPDU format including the TRS. For example, when a TRS is included in a HE PPDU, a UL HE-MCS subfield (or a subfield relating to MCS) included in the TRS may indicate a value corresponding to a HE MCS table. When a TRS is included in an EHT PPDU, a UL HE-MCS subfield (a subfield relating to MCS) included in the TRS may indicate a value corresponding to an EHT MCS table. When a TRS is included in a NEXT PPDU, a UL HE-MCS subfield (a subfield relating to MCS) included in the TRS may indicate a value corresponding to a NEXT MCS table. In addition, the interpretation of an RU allocation subfield may also vary on the basis of a PPDU format including a TRS.

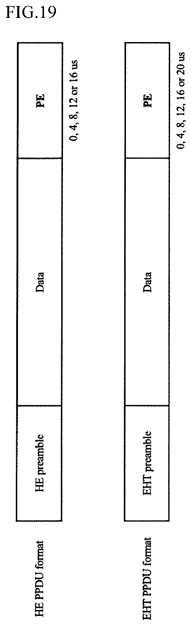

FIG. 19 illustrates an example of a packet extension (PE) field for providing a processing time according to an embodiment of the present invention.

Referring to FIG. 19, in transmitting a PPDU, a specific field which requires no decoding to provide an additional processing time for a reception device to process a received PPDU may be included at the end of the PPDU.

Specifically, a reception device for receiving a PPDU may decode the PPDU to interpret the PPDU and transmit a response to the PPDU to a transmission device. However, when a time for processing the PPDU increases due to performance deterioration, etc. of the reception device, the reception device may fail to transmit a response within a time for transmitting the response to the PPDU. Accordingly, to secure such a processing time, the PPDU may include a field requiring no decoding, and the filed may be called a PE field.

The PE field requires no separate decoding, and thus the reception device may secure a time for decoding and processing the PPDU for a duration of the PE field, and transmit a response to the PPDU to the transmission device within a pre-configured time. That is, the PE field may be positioned at the end of the PPDU to provide an additional processing time to a terminal corresponding to the reception device.

Accordingly, to provide an additional processing time, the PE field may be positioned at the very last of the PPDU, or may be positioned after a data field. For example, a preamble, a data field, and a PE field may be sequentially included in the PPDU. The description of the preamble and the data field may be identical to the description made in the embodiment above. For a HE PPDU, a preamble may include L-STF, L-LTF, L-SIG, RL-SIG, HE-SIG-A, HE-SIG-B, HE-STF, and HE-LTF. For an EHT PPDU, a preamble may include L-STF, L-LTF, L-SIG, RL-SIG, U-SIG, EHT-SIG, EHT-STF, and EHT-LTF. A PPDU including a PE field may be a HE PPDU, an EHT PPDU, or a PPDU in the standard defined after the EHT standard.

When the PE field is not included in the PPDU, the reception device (for example, STA) performing reception may be difficult to respond within a pre-configured time at the end of the received PPDU due to a time for processing the received PPDU when the performance of the reception device is not high. The pre-configured time may be after an interframe space (IFS) or a short interframe space (SIFS) at the end of the received PPDU. Accordingly, it may be possible to position the PE field corresponding to a field requiring no decoding, at the end of the received PPDU to secure a time for processing the received PPDU. That is, by positioning the field requiring no decoding at the end of the PPDU, the PPDU can be promptly processed. Accordingly, processing the PPDU including the PE field and transmitting an immediate response to the PPDU on time may be possible. In this case, the immediate response may be transmitted after an SIFS from the end of the PPDU including the PE field.

In addition, power for transmitting the PE field may be based on power for transmitting the data field. For example, power for transmitting the PE field may be identical to average power for transmitting the data field.

A random content may be included in the PE field and transmitted. In addition, the position and the size for transmission of the PE field in the frequency domain may be identical to that for the data field or that for a resource unit (RU) through which the data field is transmitted.

According to an embodiment of the present invention, the duration of the PE field may be 0 us or multiples of 4 us. For example, the duration of the PE field may be one of 0, 4, 8, 12, 16, and 20 us. In this case, a maximum value of the duration of the PE field may vary according to the format of the PPDU in which the PE field is included. For example, in a case of a HE PPDU, the duration of the PE field may be one of 0, 4, 8, 12, and 16 us, and in a case of an EHT PPDU, the duration of the PE field may be one of 0, 4, 8, 12, 16, and 20 us. The duration 0 us of the PE field may be identical to when the PE field is not included.

According to an embodiment, a PE field having a pre-configured duration may be used only for a configuration that is pre-configured. For example, the pre-configured duration may be 20 us or more. The pre-configured duration may be based on a modulation and coding scheme (MCS) or a modulation scheme. That is, the PE field having the pre-configured duration may be configured according to a pre-configured MCS index, MCS, or modulation scheme, and may be included in the PPDU.

Alternatively, for an MCS index, modulation or an MCS equal to or greater than the pre-configured MCS index, the pre-configured modulation, or the pre-configured MCS, the PE field having the pre-configured duration may be included in the PPDU. For example, the pre-configured MCS index, the pre-configured modulation, or the pre-configured MCS may be based on 4096-QAM.

The pre-configured value of the duration of the PE field may be based on not only the MCS or modulation scheme but also the number of spatial streams. For example, more than eight spatial streams are used, the pre-configured value of the duration of the PE field may be used.

In addition, the pre-configured value may be based on a channel width, a bandwidth, or the size of an RU. For example, when the channel width for transmission, the bandwidth, or the size of the RU is configured with a pre-configured value, the duration of the PE field may be determined as the pre-configured specific value.

According to an embodiment, the channel width or the bandwidth may be a value corresponding to the PPDU. Alternatively, the channel width or the bandwidth may be a value corresponding to a PPDU simultaneously transmitted by multiple STAs or the entire PPDU. For example, when the channel width or the bandwidth is 320 MHz, use of the pre-configured specific value may be allowed to be used as a duration value of the PE field of the PPDU. For example, the duration of 20 us may be allowed to be used only when the channel width or the bandwidth is 320 MHz.

According to another embodiment, the channel width or the bandwidth which allows the user of a specific value may be a value greater than 160 MHz, and the RU size may be greater than 2x996. In addition, the RU size may be for all RUs used for transmission. That is, when multiple RUs are used, the RU size may be a sum of sizes of the multiple RUs.

That is, the pre-configured specific value for the duration of the PE field may be used or configured under a specific condition only. For example, as described above, the duration of the PE field may be configured as one of 0 us, 4 us, 8 us, 12 us, 16 us, and 20 us, and a specific value among the values above may be used or configured for the PPDU under the following conditions.

- PPDU modulated using 4096-QAM modulation scheme
- PPDU transmitted using eight or more spatial streams (in at least one RU/ MRU)
- 320 MHz PPDU in case where at least one allocated RU or MRU size is 2x996 or greater
- Trigger frame-based EHT TB PPDU (i.e., format of PPDU indicated by trigger frame)

For example, the duration of the PE field may be configured differently according to the format of the PPDU indicated by a frame for triggering transmission of the PPDU. Specifically, when a PPDU indicated by the frame is a HE TB PPDU, the duration of the PE field of the HE TB PPDU may be configured as one of 0 us, 4 us, 8 us, 12 us, and 16 us. However, when a PPDU indicated by the frame is an EHT TB PPDU, the duration of the PE field of the EHT TB PPDU may be configured as one of 0 us, 4 us, 8 us, 12 us, 16 us, and 20 us. That is, a value (or a maximum value) which can be configured for the duration of the PE field may vary according to the format of the PPDU indicated by the frame.

For example, as described above, 20 us may be allowed under a specific condition only.

For example, in the description above, the pre-configured specific value may be 20 us. That is, the PE field duration of 20 us may be allowed only under the specific condition or specific case described above.

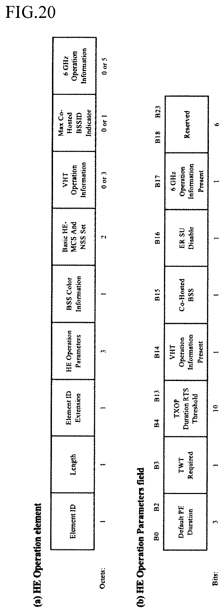

FIG. 20 illustrates an example of a high efficiency (HE) operation element and a default PE duration subfield according to an embodiment of the present invention.

Referring to FIG. 20, an AP STA (or an AP) may indicate a duration value of a PE field through an operation element.

Specifically, information related to a duration for a PE field of a PPDU may be included in an operation element and transmitted. The information related to the duration of the PE field may be a duration of a PE field included in a PPDU. For example, the AP may configure a value of a control ID as a value indicating a TRS to trigger transmission of the PPDU, and a non-AP STA may transmit a PPDU as a response to the PPDU for the TRS. In this case, the PPDU may include the above-described PE field for providing an additional processing time, and the information related to the duration of the PE field may be transmitted to the non-AP STA through a specific field (for example, a default PE duration field) of the operation element.

In this case, the duration of the PE field or the pre-configured information related to the duration of the PE field may be called a default PE duration, and the default PE duration may be indicated by the default PE duration subfield.

A value of the default PE duration subfield and/or the PE field value may be configured by TXVECTOR parameter DEFAULT_PE_DURATION corresponding to a transmission parameter. In the present invention, the terms "TRS" and "TRS control" may be interchangeably used.

The operation element may include information related to an operation of a BSS, and may be a HE operation element or an EHT operation element according to the format. Such an operation element may be included in a beacon frame, a probe request frame, a probe response frame, an association request frame, an association response frame, a reassociation request frame, and a reassociation response frame, and transmitted.

The default PE duration subfield included in the operation element may indicate the duration of the PE field in a predetermined unit (or pre-configured unit). In this case, the predetermined unit or the pre-configured unit may be 4 us, and when the value of the default PE duration subfield is N, the duration of the PE field, indicated by the default PE duration subfield, may be N*4 us. For example, when the value of the default PE duration subfield is "4", the duration of the PE field, indicated by the default PE duration subfield, may be 16 us.

FIG. 20(a) illustrates an example of a HE operation element. Referring to FIG. 20(a), the HE operation element may include a HE operation parameters field. FIG. 20(b) illustrates an example of a HE operation parameters field. Referring to FIG. 20(b), the HE operation parameters field may include a default PE duration subfield. In this case, the default PE duration subfield may be 3 bits, and values 5 to 7 may be reserved. That is, the values 5 to 7 of the default PE duration subfield are reserved, and thus only values 0 to 4 are only valid values. Accordingly, the duration which can be indicated by the default PE duration subfield may be 0, 4, 8, 12, and 16 us. When a reserved value 5 is used, the default PE duration subfield may be indicated up to 20 us.

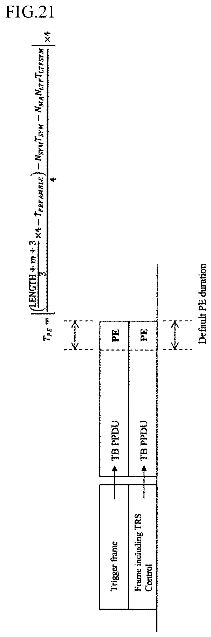

FIG. 21 illustrates an example of a method for configuring a duration of a PE field according to an embodiment of the present invention.

Referring to FIG. 21, when a non-AP STA transmits a PPDU as a response to a TRS of an AP, the non-AP STA may configure a duration of a PE field of the PPDU as a default PE duration acquired from the AP.

Specifically, a terminal having received a frame (for example, a frame including a control ID subfield having a value soliciting a TRS, or a trigger frame for soliciting for triggering transmission of the PPDU) may include a PE field for providing an additional processing time in the PPDU and transmit the same. As described above, the PE field may be configured in a predetermined time unit or a pre-configured time unit (for example, 0 us, 4 us, 8 us, 12 us, 16 us, or 20 us). In this case, as described above, 20 us may be allowed to be used in a specific case only.

The duration of the PE field may be configured as a value solicited by a default PE duration solicited by a default PE duration field transmitted from the AP, in this case, the default PE duration may be identical to the default PE duration described in FIG. 20, and the same description as that in FIG. 20 is omitted. As described in FIG. 20, the default PE duration field may be included in an operation element, and may be transmitted and solicited.

That is, when the non-AP STA responds to the TRS of the AP, the duration of the PE field of the PPDU may be determined on the basis of the default PE duration transmitted and solicited by the AP. In this case, the PPDU may be a HE TB PPDU or an EHT TB PPDU which corresponds to a PPDU based on a trigger frame, or may be a TB PPDU of a later version, and the AP may be an AP associated with the non-AP STA.

As illustrated in FIG. 21, the STA may receive a trigger frame for triggering or soliciting transmission of a PPDU, and a frame including a TRS control field, and may transmit a TB PPDU as a response to the received trigger frame or frame.

As described in FIGS. 19 and 20 above, the TB PPDU may include a PE field to provide an additional processing time, and the duration of the PE field may be configured in a predetermined time unit. When the default PE duration is solicited to the STA from the AP by the default PE duration subfield, the STA may configure the duration of the PE field as the solicited default PE duration. For example, the default PE duration may be a value included in an operation element (for example, a HE operation element, an EHT operation element, etc.) transmitted from the AP. The STA (AP or AP STA) having transmitted the default PE duration may be identical to the STA (AP or AP STA) having transmitted the TRS control field.

When the STA receives a trigger frame from the AP and transmits a TB PPDU as a response thereto, the TB PPDU may include a PE field, and $T_{PE}$ corresponding to the duration of the PE field may be calculated by Equation 4 below.

【Equation 4】

$$T_{PE} = \left\lfloor \frac{\left(\frac{\text{LENGTH} + m + 3}{3} \times 4 - T_{\text{PREAMBLE}}\right) - N_{SYM}T_{SYM} - N_{MA}N_{LTF}T_{LTFSYM}}{4} \right\rfloor \times 4$$

That is, in Equation 4, ⌊ ⌋ is a floor operator, and indicates floor operation. The largest integer smaller than or equal to x is indicated by floor(x). LENGTH indicates a value based on a length field (for example, UL length subfield) included in the trigger frame. For example, LENGTH may be a value indicated by the UL length subfield included in the common info field of the trigger frame.

m is a value changing according to the format of a PPDU, and for example, a value of m for a TB PPDU may be 2.

TPPREAMBLE indicates the length of a preamble of the transmitted TB PPDU. When a HE TB PPDU is transmitted, TPREAMBLE may be a sum of lengths of L-STF, L-LTF, L-SIG, RL-SIG, HE-SIG-A, HE-STF, and HE-LTF. When an EHT PPDU is transmitted, TPREAMBLE may be the length of an EHT preamble. That is, when an EHT TB PPDU is transmitted, TPREAMBLE may be a sum of lengths of L-STF, L-LTF, L-SIG, RL-SIG, U-SIG, EHT-STF, and EHT-LTF.

NSYM may indicate the number of data OFDM symbols included in the transmitted PPDU. For example, NSYM may be determined by Equation 5 below.

【Equation 5】

$$N_{SYM} = floor\left(\frac{\frac{LENGTH + m + 3}{3} \times 4 - T_{PREAMBLE} - N_{MA}N_{LTF}T_{LTFSYM}}{T_{SYM}}\right) - b_{PE\_Disambiguity}$$

$$T_{PE} = \left\lfloor \frac{\left(\frac{LENGTH + m + 3}{3} \times 4 - T_{PREAMBLE}\right) - N_{SYM}T_{SYM} - N_{MA}N_{LTF}T_{LTFSYM}}{4} \right\rfloor \times 4$$

| Trigger frame | → TB PPDU | PE |
| Frame including TRS Control | → TB PPDU | PE |

Default PE duration

In Equation 5, bPE_Disambiguity may be a TXVECTOR parameter TB_PE_DISAMBIGUITY value. Alternatively, bPE_disambiguity may be a value of a PE disambiguity subfield included in a trigger frame. In addition, TXVECTOR parameter TB_PE_DISAMBIGUITY may be TXVECTOR parameter HE_TB_PE_DISAMBIGUITY when a HE PPDU is transmitted. TXVECTOR parameter TB_PE_DISAMBIGUITY may be TXVECTOR parameter EHT_TB_PE_DISAMBIGUITY when an EHT PPDU is transmitted. In addition, a PE disambiguity subfield included in the trigger frame may be configured on the basis of whether a pre-configured equation is satisfied.

TSYM may be the length of an OFDM symbol. In addition, TSYM may be a value including a guard interval (GI).

NMA may be the number of midambles, or the number of midamble periods. When a Doppler field is 0, NMA may be 0. In addition, for an EHT PPDU, the Doppler field may be 0, or NMA may be 0. The midamble may be inserted in the middle of the data field. In addition, the midamble may include multiple LTFs. The midamble may exist to assist channel estimation of a receiver.

NLTF may be the number of LTFs included in a preamble. In this case, the LTF may be a HE-LTF when a HE PPDU is transmitted. Alternatively, in this case, the LTF may be an EHT-LTF when an EHT PPDU is transmitted.

TLTFSYM may be the length of an OFDM symbol of the LTF. In this case, the LTF may be a HE-LTF when a HE PPDU is transmitted. Alternatively, the LTF may be an EHT-LTF when an EHT PPDU is transmitted. In addition, TLTFSYM may be a value including a GI.

According to the described embodiment, when the midamble does not exist, the TPE may be determined by Equation 6 below.

【Equation 6】

$$T_{PE} = floor\left(\frac{\left(\frac{LENGTH + m + 3}{3} \times 4 - T_{PREAMBLE}\right) - N_{SYM}T_{SYM}}{4}\right) \times 4$$

As illustrated in FIG. 21, when transmission of a TB PPDU is solicited by a trigger frame, the STA may transmit a PPDU including a PE field having a duration of TPE, as a response to the trigger frame.

When the frame including the TRS and the trigger frame soliciting the transmission of the PPDU are included in a single PPDU and transmitted, values of respective fields included in the trigger frame may be configured so that a duration of a PE field included in a PPDU transmitted as a response to the single PPDU is identical to the default PE duration. For example, through adjustment (or configuration) of values of the UL length subfield and the PE disambiguity subfield of the trigger frame, the value of the TPE may become identical to the default PE duration.

That is, when transmission of a PPDU is triggered by a trigger frame or a TRS, a duration of a PE field of a PPDU transmitted as a response thereto may be configured as a value indicated by the default PE duration subfield. In this case, values of fields for calculating the TPE included in the trigger frame may be configured so that the value of the TPE becomes identical to a value indicated by the default PE duration subfield.

For example, when a trigger frame and a TRS soliciting transmission of a TB PPDU to different STAs, respectively, are included in a single PPDU, a maximum value of a duration of a PE field included in a TB PPDU, the transmission of which is solicited by the trigger frame only may be 20 us (i.e., in a case where a 20 us PE field duration is allowed), the duration of the PE field included in the TB PPDU triggered by the TRS may have a maximum value corresponding to 16 us by the default PE subfield. In this case, values of subfields (for example, the LENGTH field, the PE disambiguity subfield, etc.) for calculating the TPE included in the trigger frame may be configured so that the value of the duration by the default PE subfield becomes identical to the value of the TPE.

In other words, when transmission of an EHT TB PPDU is solicited by a trigger frame, a duration of a PE field of the EHT TB PPDU may be determined as one of 0 us, 4 us, 8 us, 12 us, 16 us, and 20 us. However, when the PPDU including the trigger frame also includes a TRS soliciting transmission of an EHT TB PPDU, a default PE duration subfield for the EHT TB PPDU solicited by the TRS may be configured as one of 0 us, 4 us, 8 us, 12 us, and 16 us. In this case, a terminal in which transmission of a TB PPDU is triggered by a trigger frame may be STA 1, and a terminal in which transmission of a TB PPDU is triggered by a TRS may be STA 2.

In this case, the terminal in which the transmission of the TB PPDU is triggered by the TRS may configure a duration of a PE field by using a value indicated by a default PE duration included in an operation element. However, the terminal in which the transmission of the TB PPDU is triggered by the trigger frame may configure the duration of the PE field included in the TB PPDU by using a TPE value calculated using subfields (for example, the LENGTH field, the PE disambiguity subfield, etc.) included in the trigger frame. In this case, values of the subfields for calculating the TPE value included in the trigger frame may be configured so that the value indicated by the default PE duration becomes identical to the TPE value.

That is, when a trigger frame and a TRS for triggering transmission of a TB PPDU to different STAs, respectively, are included in a single PPDU and a maximum value of a duration of a PE field of the TB PPDU by the trigger frame and a maximum value of a PE field indicated by a default PE duration subfield by the TRS are different, values of subfields for calculating a duration of a PE field included in the TB PPDU included in the trigger frame may be configured (or adjusted) so that the calculated value becomes identical to the value indicated by the default PE duration subfield.

In this case, when the default PE duration subfield is configured as a one of 0 us, 4 us, 8 us, 12 us, and 16 us (or one of 0 us, 4 us, 8 us, 12 us, 16 us, and 20us), a TPE value calculated by the trigger frame may be identical to a value indicated by the default PE duration subfield.

Accordingly, according to an embodiment of the present invention, when a trigger frame and a TRS for triggering transmission of a TB PPDU to different STAs, respectively, are included in a single PPDU, a duration of a PE field included in a PPDU transmitted as a response to the TRS may be identical to that of a PE field included in a PPDU transmitted as a response to the trigger frame. That is, in FIG. 21, the TPE value and the default PE field duration value may be identical.

According to the above-described embodiment, when responding to the TRS or responding to the trigger frame included in the PPDU including the TRS, the responding may be performed by including a PE field having a pre-configured duration. In this case, the pre-configured duration may be default PE duration. Accordingly, to successfully receive a PPDU or to successfully respond to a received PPDU, the AP may configure the default PE duration with a sufficiently large value. However, as described above, some values of the duration of the PE field may be used under a pre-configured configuration only. For example, the PE field duration of 20 us may be used under a pre-configured configuration only. Accordingly, when responding to the TRS or responding to the trigger frame included in the PPDU including the TRS, the default PE duration having a larger value may need to be configured to use the pre-configured configuration. For example, to use the pre-configured configuration, the default PE duration may need to be configured as 20 us. In such a case, even though the pre-configured configuration is not used, a longer default PE duration needs to be used, which may be redundant. That is, even though a long PE field is not used, a long PE field may need to be included for a PPDU as well under the configuration enabling reception. This may be a waste of airtime.

In addition, a maximum value among values which can be indicated by the default PE duration subfield included in the HE operation element may be 16 us. Accordingly, a problem that it is difficult for a TRS or a trigger frame included in a PPDU including the TRS to trigger a configuration requiring a PE field longer than 16 us may occur. When a reserved value of the default PE duration subfield included in the HE operation element is used, a HE STA receiving the value may fail to interpret the same and fail to properly operate.

The following embodiments describe a method for solving the problem.

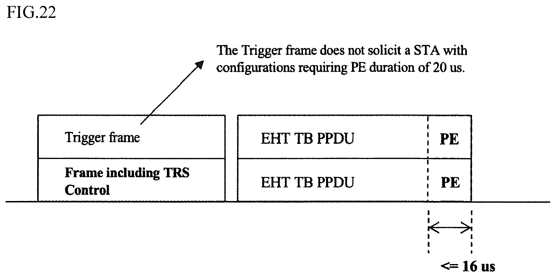

FIG. 22 illustrates another example of a method for configuring a duration of a PE field and a UL MU operation according to an embodiment of the present invention.

Referring to FIG. 22, to solve the problem described in FIG. 21, a value of a PE field of a PPDU triggered by a trigger frame or a TRS may be restricted.

Specifically, when triggering a response of an STA, it may be solicited to respond with a restricted configuration. For example, when performing triggering using a TRS or triggering using a trigger frame included in a PPDU including the TRS, it may be solicited to respond using a restricted configured. In addition, in this case, the soliciting method may include performing soliciting through a subfield included in the TRS or the trigger frame. In addition, in this case, the soliciting method may include performing implicit soliciting when responding to the TRS or the trigger frame included in the PPDU such as the TRS. In such a case, the restricted configuration may be a configuration requiring no PE field having a pre-configured length. In an embodiment, the pre-configured length may be the length equal to or greater than 20 us. Specifically, the pre-configured length may be the length of 20 us. In another embodiment, the pre-configured length may be the length exceeding 16 us. Accordingly, the STA responding to the TRS or the trigger frame included in the PPDU including the TRS may respond using a restricted configuration.

In this case, the duration of the PE field included in the PPDU transmitted as a response may be less than the pre-configured length. For example, in this case, the duration of the PE field included in the PPDU transmitted as a response may be 16 us or less.

In addition, the restricted configuration may be based on the pre-configured configuration described in FIG. 19. For example, the restricted configuration may be a configuration rather than the pre-configured configuration described in FIG. 19. Alternatively, the restricted configuration may be a configuration rather than the configuration, described in FIG. 19, which allows the use of the PE field having a pre-configured duration. Alternatively, the restricted configuration may be a configuration not requiring a PE field having a pre-configured duration, described in FIG. 19. For example, the restricted configuration may be based on at least one of the following items.

    1) MCS or modulation
    2) Number of spatial streams
    3) Channel width, bandwidth, or RU size

Accordingly, according to an embodiment, when transmitting a TRS or a trigger frame included in a PPDU including the TRS, it may be solicited to respond using an MCS index or modulation equal to or less than a pre-configured MCS index or pre-configured modulation. Alternatively, when transmitting a TRS or a trigger frame included in a PPDU including the TRS, it may not be solicited to respond using 4096-QAM. Alternatively, when transmitting a TRS or a trigger frame included in a PPDU including the TRS, it may be solicited to respond using MCS not corresponding to 4096-QAM.

Alternatively, when transmitting a TRS or a trigger frame included in a PPDU including the TRS, it may be solicited to respond using a pre-configured number or less of spatial streams. For example, the pre-configured number may be eight.

Alternatively, when transmitting a TRS or a trigger frame included in a PPDU including the TRS, it may be solicited to respond using a channel width, a bandwidth, or a RU size equal to or smaller than a pre-configured size. For example, the pre-configured size may be 160 MHz or 320 MHz. Alternatively, the pre-configured size may be a 2x996 size (tone number).

When transmitting a trigger frame included in a PPDU not including a TRS, the above-described restricted configuration may not be used.

Referring to FIG. 22, the AP may transmit a frame including a TRS control. In addition, a PPDU including such a frame may include a trigger frame. In this case, the TRS control and the trigger frame may solicit the restricted configuration. For example, it may not be solicited to use configuration requiring high capability during reception. Accordingly, the PE field included in the EHT TB PPDU responding to the TRS control and the EHT TB PPDU responding to the trigger frame may be 16 us or less. Accordingly, a waste of an unnecessary resource due to a long PE field can be prevented.

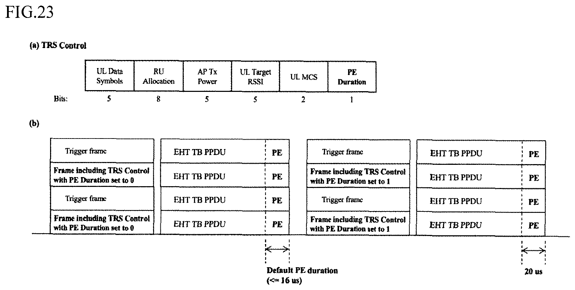

FIG. 23 illustrates another example of a method for configuring a duration of a PE field and an UL MU operation according to an embodiment of the present invention.

Referring to FIG. 23, when a duration of a PE field of a PPDU solicited by a trigger frame and a duration of a PE field of a PPDU solicited by a TRS are different from each other, the duration of the PE field may be configured by the PE duration solicited by the TRS.

Specifically, TRS control including a TRS soliciting transmission of a PPDU may solicit a duration of a PE field of a PPDU through a PE duration subfield. For example, an STA responding to a TRS control field may determine a duration of a PE field included in a PPDU transmitted as a response, on the basis of a PE duration subfield included in the TRS control field.

According to an embodiment, the PE duration subfield may solicit one of 0, 4, 8, 12, 16, and 20 us. In such a case, the PE duration subfield may be 3 bits. In this case, it is advantageous in that a PE field having a duration required whenever transmission of the PPDU is triggered by the TRS can be individually solicited. For example, the minimum required duration may be solicited.

According to another embodiment, the PE duration subfield may solicit whether the use of a PE field of 20 us is allowed. In this case, the PE duration subfield may be 1 bit. This method is advantageous in that a small number of bits of the PE duration subfield are included in the TRS. According to an embodiment, when the PE duration subfield included in the TRS control solicit 20 us, the duration of the PE field included in the PPDU may be 20 us. In addition, when the PE duration subfield included in the TRS control does not allow the use of the PE field of 20 us, the duration of the PE field may be configured by the duration solicited by the default PE duration subfield included in the operation element, described in FIGS. 20 and 21, and transmitted through the PPDU.

The PE field duration of 20 us may be restricted to be used only for an EHT TB PPDU. When a HE TB PPDU is transmitted as a response, the duration of the PE field cannot be configured as 20 us. In this case, the terminal may recognize whether the TB PPDU, the transmission of which is triggered by the TRS or the trigger frame, is an EHT TB PPDU or a HE TB PPDU on the basis of the TB PPDU format signaling described in FIGS. 17, 18, etc. For example, the STA may identify whether the format of the triggered PPDU is an EHT TB PPDU or a HE TB PPDU on the basis of a value of a specific field included in the trigger frame.

The TRS control may include signaling through which whether the TRS control or the trigger frame using the configuration requiring the PE field of 20 us is included in the PPDU including the TRS control is solicited. When it is solicited that the TRS control or the trigger frame using the configuration requiring the PE field of 20 us is included, responding may be made using the PPDU including the PE field of 20 us. When it is solicited that the TRS control or the trigger frame using the configuration requiring the PE field of 20 us is not included, the duration of the PE field may be configured by the default PE duration.

According to another embodiment, when responding to the TRS, it is possible to always respond with the PPDU including the PE field having a pre-configured duration. For example, the pre-configured duration may be 20 us. In addition, the present embodiment may be limited only to a case of responding with an EHT TB PPDU. When responding with a HE TB PPDU, the PE field of 20 us may not be used. That is, when responding with the EHT TB PPDU, the PE field of 20 us may be included in the EHT TB PPDU and transmitted, and when responding with the HE TB PPDU, the PE field configured by the default PE duration may be included in the HE TB PPDU and transmitted.

In the above-described embodiments, the trigger frame included in the PPDU including the TRS may be configured to indicate the duration of the PE field, indicated in the above-described embodiments. For example, the UL length subfield and the PE disambiguity subfield of the trigger frame included in the PPDU including the TRS may solicit a value which causes the duration of the PE field becomes the duration of the PE field, indicated in the above-described embodiments. In this case, the duration of the PE field may be determined by the TPE described in FIG. 21.

In addition, according to an embodiment, multiple TRSs included in a single PPDU may solicit the same duration of a PE field. For example, the multiple TRSs included in a single PPDU may include a PE duration subfield configured with the same value. The multiple TRSs may be included in multiple A-MPDUs of the PPDU.

FIG. 23(a) illustrates a TRS control field. Referring to FIG. 23(a), a TRS control field may include a UL data symbols subfield, an RU allocation subfield, an AP tx power subfield, a UL target RSSI subfield, a UL MCS subfield, and a PE duration subfield. The description of each subfield may be identical to the deceptions made in FIGS. 18 to 23. In addition, the PE duration subfield may solicit whether to respond with the PE field of 20 us. In this case, the PE duration subfield may be 1 bit.

Referring to FIG. 23(b), the AP may transmit a PPDU including a trigger frame or a frame including a TRS control field. A PE duration subfield included in the TRS control field may be configured as 0. The PE duration subfield configured as 0 may solicit that 20 us is not used, or may solicit that the default PE duration is to be used. In addition, another PE duration subfield included in the PPDU including the PE duration subfield configured as 0 may be also configured as 0. In addition, a trigger frame included in the PPDU including the PE duration subfield configured as 0 may be configured so that the duration of the PE field of the PPDU transmitted as a response to the trigger frame is identical to the duration solicited by the PE duration subfield configured as 0. Referring to FIG. 23(b), 1) the PE duration subfield configured as 0, or 2) the duration of the PE field included in the PPDU transmitted as a response to the trigger frame included in the PPDU including the PE duration subfield configured as 0 may be a default PE duration. Alternatively, 1) the PE duration subfield configured as 0, or 2) the duration of the PE field included in the PPDU transmitted as a response to the trigger frame included in the PPDU including the PE duration subfield configured as 0 may be 16 us or less. In this case, the PPDU transmitted as a response may be an EHT TB PPDU. Alternatively, when a HE TB PPDU is transmitted as a response to the TRS or the trigger frame, a PE field of the default PE duration may be used.

Referring to FIG. 23(b), the AP may transmit a PPDU including a trigger frame or a frame including a TRS control field. A PE duration subfield included in the TRS control field may be configured as 1. The PE duration subfield configured as 1 may solicit that 20 us is used, or may solicit that the default PE duration is not used. In addition, another PE duration subfield included in the PPDU including the PE duration subfield configured as 1 may be also configured as 1. In addition, a trigger frame included in the PPDU including the PE duration subfield configured as 1 may be configured so that the duration of the PE field of the PPDU transmitted as a response to the trigger frame is identical to the duration solicited by the PE duration subfield configured as 1. Referring to FIG. 23(b), 1) the PE duration subfield configured as 1, or 2) the duration of the PE field included in the PPDU transmitted as a response to the trigger frame included in the PPDU including the PE duration subfield configured as 1 may be 20 us. Alternatively, 1) the PE duration subfield configured as 1, or 2) the duration of the PE field included in the PPDU transmitted as a response to the trigger frame included in the PPDU including the PE duration subfield configured as 1 may not be the default PE duration. In this case, the PPDU transmitted as a response may be an EHT PPDU. Alternatively, in this case, the PPDU transmitted as a response may be an EHT TB PPDU. That is, it may be limited to a case of responding with an EHT TB PPDU.

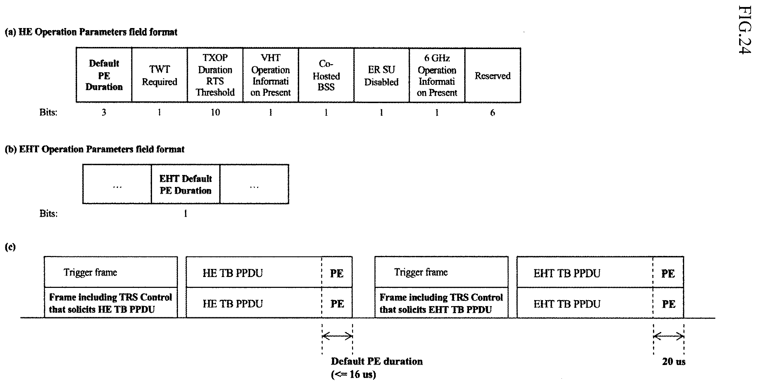

FIG. 24 illustrates another example of a method for configuring a duration of a PE field and a UL MU operation according to an embodiment of the present invention.

Referring to FIG. 24, a duration of a PE field included in a TB PPDU may be configured as a value solicited by a PE duration field solicited by a TRS control field, or may be configured as a value solicited by a default PE duration subfield included in an operation element. Alternatively, when a TB PPDU is triggered by a trigger frame only, a duration of a PE field of the TB PPDU may be configured according to a specific condition (an MCS method, an RU size, the number of used spatial streams, and/or a solicited format of a PPDU (for example, whether an EHT TB PPDU or a HE TB PPDU is solicited)).

For example, only when the TB PPDU satisfies the above-described specific condition (for example, when an EHT TB PPDU is solicited, when eight or more spatial streams are used, when at least one RU size is greater than 2x996, when bandwidth in which an EHT PPDU (or an EHT MU PPDU) is transmitted is 320 MHz, or when a PPDU is modulated using 4096-QAM), 20 us may be allowed as the duration of the PE field.

When transmission of a PPDU is solicited by a TRS, a duration of a PE field included in the PPDU may be configured as a value solicited by a default PE duration subfield included in an operation element (for example, a HE operation element, an EHT operation element, etc.), or solicited by a PE duration subfield included in a TRS control field.

In a case where the TRS and the trigger frame are included in a single PPDU and both solicit transmission of the PPDU, when a maximum value of a duration of a PE field in a case where the PPDU is solicited by the trigger frame is identical to a maximum value of a duration of a PE field in a case where the PPDU is solicited by the TRS, the duration may be configured as a value solicited by a default PE duration subfield, or a value solicited by a PE duration subfield included in the TRS.

However, when a TRS and a trigger frame are included in a single PPDU and both solicit transmission of the PPDU, a maximum value of a duration of a PE field in a case where the PPDU is solicited by the trigger frame may not be identical to a maximum value of a duration of a PE field in a case where the PPDU is solicited by the TRS. For example, since a TB PPDU solicited by the trigger frame and/or the TRS satisfies a specific condition, a maximum value of the duration of the PE field may be a first maximum value (for example, a case where 20 us is allowed), and a maximum value of a duration of a PE field solicited by a default PE subfield included in an operation element may be a second maximum value (for example, 16 us). In this case, the duration of the PE field may be configured as a value solicited by the default PE subfield, or a value solicited by the PE subfield included in the TRS.

In this case, the PE duration subfield may solicit that 20 us is allowed as a maximum value of the duration of the PE field, or may solicit configuration of the duration the PE field with a value of the default PE duration subfield included in the operation element.

In other words, according to an embodiment of the present invention, the duration of the PE field may be determined on the basis of the format of a PPDU transmitted as a response to the TRS. According to an embodiment, when responding to the TRS with a HE PPDU, the duration of the PE field may be a HE default PE duration. In addition, when responding to the TRS with an EHT PPDU, the duration of the PE field may be a value solicited by an EHT default PE duration. For example, the HE PPDU may be a HE TB PPDU. Alternatively, the HE PPDU may be a HE SU PPDU. In addition, the EHT PPDU may be an EHT TB PPDU. Alternatively, the EHT PPDU may be an EHT MU PPDU. In addition, the HE default PE duration may be the default PE duration described in FIGS. 20 and 21. For example, the HE default PE duration may be a value solicited by a HE operation element. More specifically, the HE default PE duration may be a value solicited by the default PE duration subfield included in the HE operation element.

In addition, the EHT default PE duration may be a value solicited by the EHT operation element. More specifically, the EHT default PE duration may be a value solicited by the EHT default PE duration subfield included in the EHT operation element.

According to an embodiment, the EHT default PE duration subfield may solicit whether the duration of the PE field is 20 us. In such a case, the EHT default PE duration subfield may be 1 bit.

According to another embodiment, the EHT default PE duration subfield may solicit whether or not the duration of the PE field is identical to the HE default PE duration. In such a case, the EHT default PE duration subfield may be 1 bit. For example, when the EHT default PE duration subfield solicits that the duration of the PE field is identical to the HE default PE duration, the EHT default PE duration may be the default PE duration solicited by the HE operation element. In addition, when the EHT default PE duration subfield solicits that the duration of the PE field is not identical to the HE default PE duration, the EHT default PE duration may be 20 us.

According to another embodiment, the EHT default PE duration subfield may solicit one value of the duration of the PE field among 0, 4, 8, 12, 16, and 20 us. In such a case, the EHT default PE duration subfield may be 3 bits.

According to another embodiment, the EHT default PE duration may be 20 us.

Referring to FIG. 24(a), a HE operation element may include a default PE duration subfield. In addition, the default PE duration subfield may be included in a HE operation parameters field included in a HE operation element. FIG. 24(a) may be identical to FIG. 24(b).

Referring to FIG. 24(b), an EHT operation element may include an EHT default PE duration subfield. In addition, the EHT default PE duration subfield may be included in an EHT operation parameters field included in an EHT operation element. For example, the EHT default PE duration subfield may be 1 bit.

Referring to FIG. 24(c), there may be a case of transmitting a HE PPDU, and a case of transmitting an EHT PPDU, as a response to a TRS control. When the HE PPDU is transmitted as a response, a duration of a PE field included in the HE PPDU may be a default PE duration. The default PE duration may be a value solicited in FIG. 24(a). In addition, the default PE duration may be a value equal to or less than 16 us. When the EHT PPDU is transmitted as a response, a duration of a PE field included in the EHT PPDU may be an EHT default PE duration. The EHT default PE duration may be configured on the basis of an EHT operation element or a HE operation element. For example, the EHT default PE duration may be configured as 1) a pre-configured value on the basis of the EHT default PE duration subfield included in the EHT operation element, or 2) a value based on the default PE duration subfield included in the HE operation element. The pre-configured value may be 20 us. Referring to FIG. 24(c), when responding to the TRS with the EHT PPDU, a PE field of 20 us may be included in the PPDU and transmitted.

According to an embodiment of the present invention, multiple PPDUs may be multiplexed in the frequency domain. Such multiple PPDUs may be called an aggregated PPDU (A-PPDU). When the A-PPDU is transmitted, multiple PPDUs may be simultaneously transmitted. For example, a HE PPDU and an EHT PPDU may constitute the A-PPDU. More specifically, a HE TB PPDU and an EHT TB PPDU may constitute the A-PPDU. For example, it may be triggered to transmit the A-PPDU including the HE TB PPDU and the EHT TB PPDU by multiple STAs.

According to an embodiment of the present invention, durations of PE fields included in PPDUs constituting the A-PPDU may be identical to each other. For example, a duration of a PE field included in the HE TB PPDU may be identical to a duration of a PE field included in the EHT TB PPDU. In this case, a method for configuring a duration may follow the method described in FIGS. 20 to 24. Accordingly, an operation of an STA for receiving the A-PPDU may become simple.

In another example, durations of PE fields included when one STA transmits an A-PPDU including a HE PPDU and a EHT PPDU may be identical to each other. Accordingly, the implementation may become simple when configuring the A-PPDU.

According to an embodiment of the present invention, it may be possible to transmit a PPDU other than a TB PPDU, as a response to a trigger frame or a TRS. For example, an SU PPDU or an MU PPDU may be transmitted. For example, the MU PPDU may be an EHT MU PPDU or a HE MU PPDU. The SU PPDU may be a HE SU PPDU or a non-HT PPDU. According to an embodiment, a PE field duration configuration method may vary according to whether a TB PPDU is transmitted, or a PPDU other than the TB PPDU is transmitted, as a response to the trigger frame or the TRS. For example, when transmitting the TB PPDU, the duration configuration method described in FIGS. 20 to 24 may be used. In addition, when the PPDU other than the TB PPDU is transmitted, the duration may be configured as a nominal PE duration.

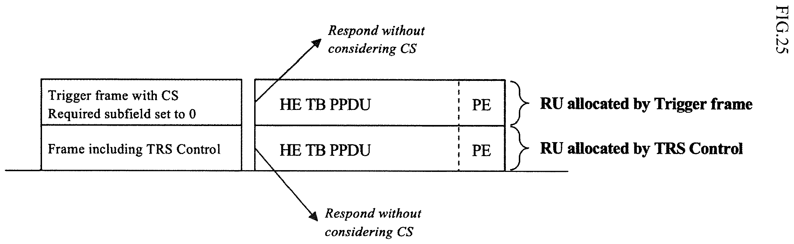

FIG. 25 illustrates an example of a method for configuring a CS required subfield according to an embodiment of the present invention.

Referring to FIG. 25, it is possible to perform carrier sensing (CS) when responding to a trigger frame. For example, when the trigger frame is received, an STA may determine whether to respond to the trigger frame on the basis of a CS result. Here, the CS may include physical CS and virtual CS. The physical CS may include clear channel assessment (CCA). For example, the physical CS performed when determining whether to respond to the trigger frame may be energy detection (ED). In addition, the virtual CS may mean considering a NAV. The CS performing when determining whether to respond to the trigger frame may be performed for an SIFS (or within an SIFS) for the end of a PPDU (or after a PPDU) including the trigger frame.

According to an embodiment of the present invention, there may be signaling for soliciting to determine whether or not to respond, on the basis of a CS result when responding to the trigger frame. For example, the CS required subfield including the trigger frame illustrated in FIG. 16 may correspond to signaling for soliciting to determine whether or not to respond, on the basis of the CS result when responding to the trigger frame. For example, in a case where the CS required subfield is configured as 1, whether to respond may be determined on the basis of the CS result when responding to the trigger frame including the CS required subfield.

For example, in a case where the CS required subfield is configured as 1, when the CS result is busy at the time of responding to the trigger frame including the CS required subfield, responding to the trigger frame may not be performed. In a case where the CS required subfield is configured as 1, when the CS result is idle at the time of responding to the trigger frame including the CS required subfield, responding to the trigger frame may be performed. For example, in a case where the CS required subfield is configured as 0, when responding to the trigger frame including the CS required subfield, whether to respond may be determined regardless of the CS result. A case where the CS result is busy may be a case where at least one of the physical CS and the virtual CS may be busy. A case where the CS result is idle may be a case where both the physical CS and the virtual CS are idle.

In addition, when responding to a TRS control field, it is possible to determine whether to respond regardless of the CS result.

In addition, the trigger frame included in the same PPDU of the TRS control field may configure the CS required subfield as 0 or 1. Alternatively, a trigger frame included in the same PPDU as the frame including the TRS control field may configure the CS required subfield as 0 or 1.

As illustrated in FIG. 25, the trigger frame and the frame including the TRS control may be transmitted through the same PPDU. In this case, the CS required subfield including the trigger frame may be configured as 0. Accordingly, when responding to the trigger frame, it is possible to respond regardless of the CS result. In addition, when responding to the TRS control, it is possible to respond regardless of the CS result.

According to an embodiment of the present invention, when transmitting the trigger frame, the CS required subfield may be configured. For example, the CS required subfield may be configured on the basis of the length of a response solicited by the trigger frame. The UL length subfield illustrated in FIG. 16 may solicit the length of the response solicited by the trigger frame. The length of a TB PPDU transmitted as a response to the trigger frame may be based on a value of the UL length subfield included in the trigger frame. In addition, configuring the CS required subfield on the basis of the UL length subfield may be limited to a case where the trigger frame is a pre-configured type. The type of the trigger frame may be solicited by the trigger type subfield illustrated in FIG. 16. For example, when the trigger frame is a basic, BSRP, MU-BAR, BQRP, GCR MU-BAR, or BFRP trigger frame, the CS required subfield may be configured on the basis of the UL length subfield.

According to an embodiment, when a value of the UL length subfield is a pre-configured value or smaller (or is equal to or smaller than a pre-configured value), the CS required subfield may be configured as 0 or 1. In a more specific embodiment, when the UL length subfield value is a pre-configured value or smaller, the CS required subfield may be configured as 0. In addition, when the UL length subfield value exceeds (or is greater than) a pre-configured value, the CS required subfield may be configured as 1. When the UL length subfield value exceeds (or is greater than) a pre-configured value, the CS required subfield may not be configured as 0.

According to an embodiment of the present invention, the pre-configured value may be 418. For example, when a condition based on the UL length subfield is used together with condition 1 or condition 2 below, the pre-configured value may be 418.

(Condition 1) A receiver address (RA) of a trigger frame is a MAC address of an individually addressed STA, and the trigger frame is aggregated with 1) a QoS data frame configured so that an ack policy needs to respond to a TB PPDU with an acknowledgement (HETP ack), or 2) a management frame soliciting the acknowledgement, as a single A-MPDU.

(Condition 2) A trigger frame is an MU-BAR or GCR MU-BAR trigger frame.

Condition 1 may be used together with a condition in which the trigger frame is a basic, BSRP, MU-BAR, BQRP, or GCR MU-BAR trigger frame.

The pre-configured value 418 may be a value corresponding to PPDU length 584 us. In addition, 584 us may be a maximum TB PPDU duration which can be solicited by the TRS control. 584 us may be a maximum HE TB PPDU duration which can be solicited by the TRS control. 584 us may be a sum of lengths of L-STF, L-LTF, L-SIG, RL-SIG, HE-SIG-A, HE-STF, HE-LTF, data, and PE fields of the TB PPDU. L-STF, L-LTF, L-SIG, and RL-SIG may be 8, 8, 4, and 4 us, respectively. HE-SIG-A may be 8 us. HE-STF may be 8 us for a TB PPDU. HE-LTF may be 16 us in the TB PPDU responding to the TRS control. 4xHE-LTF having a guard interval (GI) of 3.2 us may be 16 us. A maximum value of a data field which can be solicited by the TRS control may be a value solicited by a maximum symbol number having the GI of 3.2 us. When the maximum number of symbols which can be solicited is 32, the maximum value of the data field which can be solicited by the TRS control may be 32*16 us, i.e., 512 us. In addition, the maximum value of the PE field may be 16 us. Accordingly, the maximum TB PPDU duration which can be solicited by the TRS control may be (8+8+4+4+8+8+16+512+16) us, i.e., 584 us.

Accordingly, a trigger frame included in the same PPDU as a frame including the TRS control may configure the CS required subfield as 0 on the basis of whether the UL length subfield value is 418 or less. This may be because the trigger frame included in the same PPDU and the frame including the TRS control need to solicit the same response RB PPDU duration. Accordingly, the trigger frame included in the same PPDU as the frame including the TRS control may solicit the length equal to or less than the maximum length which can be solicited by the TRS control, the UL length subfield value is equal to or less than the preconfigured value 418, and thus the CS required subfield may be configured as 0. The embodiment illustrated in FIG. 25 may be also a case where the CS required subfield is configured as 0 according to the described method.

When the CS required subfield of the trigger frame included in the same PPDU as the frame including the TRS control is configured as 1, the STA responding to the TRS control responds without considering the CS result, the STA responding to the trigger frame responds on the basis of the CS result, and thus a result that a resource allocated by the trigger frame is wasted may occur when responding to the trigger frame fails.

According to another embodiment, the pre-configured value may be 76. For example, the condition based on the UL length subfield is used together with condition 1 or condition 2 below, the pre-configured value may be 76.

(Condition 1) A trigger frame is a basic, BSRP, MU-BAR, BQRP, or GCR MU-BAR trigger frame.

(Condition 2) A trigger frame is a BFRP trigger frame.

The pre-configured value 76 may be a value corresponding to 128 us. In addition, 128 us may be a duration of a HE TB PPDU having a PE field and 4x HE-LTF.

In an embodiment of the present invention, a pre-configured value of the length corresponding to Time us may be calculated by Equation 7 or Equation 8.

$$\text{【Equation 7】}$$

$$\text{Length} = {}^{\text{Ceil}\left(\frac{(\text{Time} - \text{SignalExtension} - 20)}{4}\right) \times 3 - 3 - 2}$$

$$\text{【Equation 8】}$$

$$\text{Length} = {}^{\text{Ceil}\left(\frac{(\text{Time} - 20)}{4}\right) \times 3 - 3 - 2}$$

In an embodiment of the present invention, Ceil(x) may be the smallest integer greater than or equal to x. SignalExtention may be the length of signal extension. The length of the signal extension may be 0 us in the 5 GHz band or 6 GHz band. The length of signal extension may be 6 us in the 2.4 GHz band.

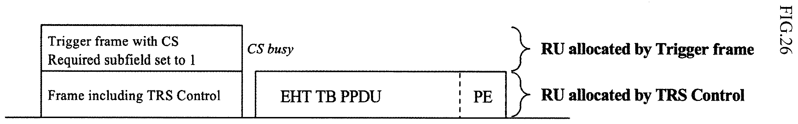

FIG. 26 illustrates an example of a UL MU operation and configuration of a CS required subfield according to an embodiment of the present invention. In FIG. 26, the same description as the descriptions made in FIGS. 1 to 25 is omitted.

According to the above-described embodiment, there may be a case where the trigger frame solicits responding with a HE TB PPDU and a case where the trigger framed solicits responding with an EHT TB PPDU. In addition, there may be a case where the TRS control solicits responding with a HE TB PPDU and a case where the TRS control solicits responding with an EHT TB PPDU.

According to an embodiment of the present invention, a maximum TB PPDU duration which can be solicited by the TRS control field soliciting the EHT TB PPDU response may be different from a maximum TB PPDU duration which can be solicited by the TRS control soliciting the HE TB PPDU response. For example, the maximum TB PPDU duration which can be solicited by the TRS control soliciting the EHT TB PPDU response may be longer than the maximum TB PPDU duration which can be solicited by the TRS control soliciting the HE TB PPDU response. This may be because the EHT PPDU may include a PE field of 20 us, as described above. Alternatively, this may be because the length soliciting method of the TRS control soliciting the EHT TB PPDU is different from that of the TRS control soliciting the HE TB PPDU response.

Accordingly, also in a case of configuring the CS required subfield on the basis of the UL length subfield and soliciting the EHT TB PPDU, a result that a resource is wasted may occur when the same pre-configured value (threshold) as that in the description in FIG. 25 is used.

For example, when responding to the TRS control soliciting the EHT TB PPDU response, the responding may be performed without considering the CS result. There may be a case where the trigger frame is included in the same PPDU as the frame including the TRS control soliciting the EHT TB PPDU response. In this case, the trigger frame and the TRS control soliciting the EHT TB PPDU response may solicit the same response length.

In this case, the trigger frame may configure the CS required subfield on the basis of a value based on the maximum HE TB PPDU length which can be solicited by the TRS control, as described in FIG. 25. In this case, the trigger frame may configure the CS required subfield on the basis of a value smaller than the maximum EHT TB PPDU length which can be solicited by the TRS control. Accordingly, the UL length subfield value included in the trigger frame is greater than the pre-configured value used when configuring the CS required subfield, and thus the CS required subfield may be configured as 1.

As illustrated in FIG. 26, the trigger frame may configure the CS required subfield as 1. In addition, there may be a TRS control included in the same PPDU as the trigger frame. In this case, the TRS control and the trigger frame may indicate the EHT TB PPDU. In this case, the STA responding to the TRS control may respond with the EHT TB PPDU without considering the CS result, and the STA responding to the trigger frame may determine whether to respond with the EHT TB PPDU on the basis of the CS result. Accordingly, the STA responding to the trigger frame may fail to respond since the CS result is busy. In this case, a resource allocated by the trigger frame may be wasted. Since some resources are used for responding to the TRS control, another STA may be difficult to utilize resources.

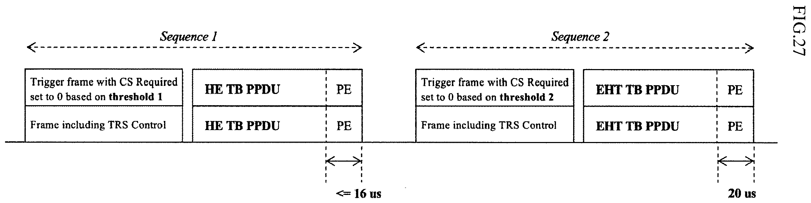

FIG. 27 illustrates another example of a UL MU operation and a configuration of a CS required subfield according to an embodiment of the present invention.

The embodiment of FIG. 27 may be a method for solving the problems described in FIGS. 25 to 26. In addition, the description made above can be omitted in the embodiment of FIG. 27.

According to an embodiment of the present invention, the pre-configured value used when configuring the CS required subfield on the basis of the UL length subfield, described in FIGS. 25 and 26, may vary according to a TB PPDU solicited by the trigger frame. Alternatively, the pre-configured value used when configuring the CS required subfield on the basis of the UL length subfield may vary according to a TB PPDU solicited by the TRS control included in the same PPDU as the trigger frame. According to an embodiment, when the trigger frame or the TRS control solicits a HE TB PPDU, the pre-configured value may be threshold 1, and when the trigger frame or the TRS control solicits an EHT TB PPDU, the pre-configured value may be threshold 2.

Alternatively, according to an embodiment of the present invention, when the HE TB PPDU is solicited, the pre-configured value may be threshold 1. In addition, the pre-configured value may be determined by also using the method described in FIGS. 22 to 24. For example, when the EHT TB PPDU is solicited and a PE duration is 16 us or less, the pre-configured value may be threshold 1. When the EHT TB PPDU is solicited and the PE duration is 20 us, the pre-configured value may be threshold 2.

According to an embodiment, threshold 1 may be the pre-configured value described in FIG. 25. That is, threshold 1 may be 418 or 76, and the pre-configured value may be 418 or 76 according to the condition described in FIG. 25.

According to an embodiment, threshold 2 may be a value greater than threshold 1. This may be because a maximum duration of a TB PPDU which can be solicited by the TRS control soliciting the EHT TB PPDU is greater than a maximum duration of a TB PPDU which can be solicited by the TRS control soliciting the HE TB PPDU. For example, threshold 2 may be equal to a value obtained by applying a Time value calculated by Equation 9 to Time in Equation 7 or Equation 8.

【Equation 9】

$$Time = (L\text{-}STF \text{ length}) + (L\text{-}LTF \text{ length}) + (L\text{-}SIG \text{ length}) + (RL\text{-}SIG \text{ length}) + (U\text{-}SIG \text{ length}) + (EHT\text{-}STF \text{ length}) + (EHT\text{-}LTF \text{ length}) + (Data \text{ field length}) + (PE \text{ field length})$$

In Equation 9 above, the L-STF length may be 8 us. The L-LTF length may be 8 us. The L-SIG length may be 4 us. The RL-SIG length may be 4 us. The U-SIG length may be 8 us. The EHT-STF length may be 8 us.

The EHT-LTF length may be the 4x EHT-LTF length using the GI of 3.2 us. Accordingly, the EHT-LTF length may be 16 us.

The data field length may be based on a maximum length which can be solicited by the TRS control soliciting the EHT TB PPDU. For example, the data field length may be based on a maximum number of OFDM symbols which can be solicited by the TRS control soliciting the EHT TB PPDU. The data field length may be based on a value obtained by multiplying the OFDM symbol length and the maximum number of OFDM symbols which can be solicited by the TRS control soliciting the EHT TB PPDU. The data field length may be based on a value obtained by multiplying a maximum OFDM symbol length and a maximum number of OFDM symbols which can be solicited by the TRS control soliciting the EHT TB PPDU. The maximum number of OFDM symbols may be 32. The maximum OFDM length may be the length of symbol using the GI of 3.2 us. The maximum OFDM symbol length may be 16 us. Accordingly, the data field length may be 32*16 us (512 us).

According to an embodiment, the maximum length which can be solicited by the TRS control soliciting the EHT TB PPDU may be identical to the maximum length which can be solicited by the TRS control soliciting the HE TB PPDU. The maximum length which can be solicited by the TRS control soliciting the EHT TB PPDU may be identical to the maximum number of OFDM symbols which can be solicited by the TRS control soliciting the HE TB PPDU. Accordingly, the EHT STA may perform the same operation as the HE STA on the basis of the TRS control, and accordingly, the EHT STA can be easily implemented.

According to another embodiment, the maximum length which can be solicited by the TRS control soliciting the EHT TB PPDU may be different from the maximum length which can be solicited by the TRS control soliciting the HE TB PPDU. The maximum length which can be solicited by the TRS control soliciting the EHT TB PPDU may be different from the maximum number of OFDM symbols which can be solicited by the TRS control soliciting the HE TB PPDU. This may be because a signaling space that the TRS control can include may be limited. For example, the TRS control soliciting the EHT TB PPDU may including signaling that the TRS control soliciting the HE TB PPDU does not include. Accordingly, a resolution to the maximum length or the length which can be solicited by the TRS control soliciting the EHT TB PPDU may be defined differently from the TRS control soliciting the HE TB PPDU.

The PE field length may be the maximum PE field length according to an embodiment. The PE field length may be 20 us. According to another embodiment, the PE field length may be the PE field length according to the method described in FIGS. 22 to 24. For example, the PE field length may be 16 us when the PE field of 16 us or less is used according to the method described in FIGS. 22 to 24. In addition, the PE field length may be 20 us when the PE field of 20 us is used according to the method described in FIGS. 22 to 24.

Accordingly, according to the described embodiment, the Time value may be acquired as Equation 10 below.

【Equation 10】

$$Time = 8 + 8 + 4 + 4 + 8 + 8 + 16 + (\text{Data field length}) + (\text{PE field length}) = 8 + 8 + 4 + 4 + 8 + 8 + 16 + (\text{Data field length}) + 20 = 8 + 8 + 4 + 4 + 8 + 8 + 16 + 512 + 20 = 588$$

In addition, threshold 2 may be 421 when applying the Time value in Equation 10 to Equation 8

A description together with the embodiment described in FIG. 25 may be made below. When the UL length subfield is greater than threshold 2, the trigger frame soliciting the EHT TB PPDU may configure the CS required subfield as 1. In addition, when the UL length subfield is equal to or less than threshold 2, the trigger frame soliciting the EHT TB PPDU may configure the CS required subfield as 0 or 1. Threshold 2 may be a value greater than 418. Threshold 2 may be 421. In addition, threshold 2 may be used together with the condition described in FIG. 25. For example, a condition based on the UL length subfield is used together with condition 1 and condition 2 below, threshold 2 (for example, a value of 421) may be used.

(Condition 1) A receiver address (RA) of a trigger frame is a MAC address of an individually addressed STA, and the trigger frame is aggregated with 1) a QoS data frame configured so that an ack policy needs to respond to a TB PPDU with an acknowledgement (HETP ack), or 2) a management frame soliciting the acknowledgement, as a single A-MPDU.

(Condition 2) A trigger frame is an MU-BAR or GCR MU-BAR trigger frame.

Condition 1 may be used together with a condition in which the trigger frame is a basic, BSRP, MU-BAR, BQRP, or GCR MU-BAR trigger frame.

That is, in a case where the EHT TB PPDU is solicited in a condition where the pre-configured value of 418 is used when soliciting the HE TB PPDU, the pre-configured value of 421 may be used instead of 418.

According to another embodiment, threshold 2 may be 79. Threshold 2 having a value of 2 may be a value corresponding to 132 us. Threshold 2 having a value of 79 may be a length value obtained by applying 132 us to the Time value in Equation A or Equation B. In addition, 132 us may be an EHT TB PPDU duration having the 4x EHT-LTF and the PE field.

A description together with the embodiment described in FIG. 25 may be made below. When the UL length subfield is greater than threshold 2, the trigger frame soliciting the EHT TB PPDU may configure the CS required subfield as 1. In addition, when the UL length subfield is equal to or less than threshold 2, the trigger frame soliciting the EHT TB PPDU may configure the CS required subfield as 0 or 1. Threshold 2 may be a value greater than 76. Threshold 2 may be 79. In addition, threshold 2 may be used together with the condition described in FIG. 25. For example, a condition based on the UL length subfield is used together with condition 1 or condition 2 above, threshold 2 (for example, a value of 79) may be used.

(Condition 1) A trigger frame is a basic, BSRP, MU-BAR, BQRP, or GCR MU-BAR trigger frame.

(Condition 2) Trigger frame is a BFRP trigger frame.

That is, in a case where the EHT TB PPDU is solicited in a condition that a pre-configured value of 76 is used when the HE TB PPDU is solicited, a pre-configured value of 79 may be used instead of 76.

As illustrated in FIG. 27, the trigger frame may be included in the same PPDU as the frame including the TRS control and transmitted.

The trigger frame and the TRS control included in the sequence indicated as sequence 1 may solicit the HE TB PPDU. Accordingly, in this case, the PE field included in the solicited HE TB PPDU may be 16 us or less. In addition, the trigger frame included in sequence 1 may configure the CS required subfield on the basis of threshold 1. For example, the trigger frame included in sequence 1 may configure the CS required subfield on the basis of whether the UL length subfield value is less than or equal to threshold 1. Threshold 1 may be 418 or 76. When the UL length subfield value is less than or equal to threshold 1, the trigger frame included in sequence 1 may configure the CS required subfield as 0 or 1. Accordingly, the CS required subfield may be configured as 0. When the UL length subfield value is greater than threshold 1, the trigger frame included in sequence 1 may configure the CS required subfield as 1. Accordingly, the CS required subfield may not be configured as 0. Accordingly, in the embodiment of the drawing, both an STA responding to a TRS control and an STA responding to a trigger frame may transmit a TB PPDU response without considering a CS result when scheduling is made.

The trigger frame and the TRS control included in the sequence indicated as sequence 2 may solicit the EHT TB PPDU. Accordingly, in this case, the PE field included in the solicited EHT TB PPDU may be 20 us or less. In addition, the trigger frame included in sequence 2 may configure the CS required subfield on the basis of threshold 2. In a more specific embodiment, the trigger frame included in sequence 2 may configure the CS required subfield on the basis of threshold 2 when the TB PPDU response including the PE field of 20 us is solicited. When the trigger frame included in sequence 2 may configure the CS required subfield on the basis of threshold 1 when the TB PPDU response including the PE field of 16 us or less is solicited. Hereinafter, an embodiment for a case of using threshold 2 may be described below. For example, the trigger frame included in sequence 2 may configure the CS required subfield on the basis of whether the UL length subfield value is less than or equal to threshold 2. Threshold 2 may be 421 or 79. When the UL length subfield value is less than or equal to threshold 2, the trigger frame included in sequence 2 may configure the CS required as 0 or 1. Accordingly, the CS required subfield may be configured as 0. Accordingly, when the frame including the TRS control is included in the same PPDU as the trigger frame, the UL length subfield of the trigger frame may be configured as a value equal to or less than threshold 2, and accordingly, the CS required subfield included in the trigger frame may be configured as 0. Accordingly, as described in FIG. 26, the STA responding to the TRS control may transmit the TB PPDU without considering the CS result, and the STA responding to the trigger frame may not respond with the TB PPDU on the basis of the CS result, whereby a problem that a resource is wasted can be solved. When the UL length subfield value is greater than threshold 2, the trigger frame included in sequence 2 may configure the CS required subfield as 1. Accordingly, the CS required subfield may not be configured as 0. Accordingly, in the embodiment of the drawing, both the STA responding to the TRS control and the STA responding to the trigger frame may transmit the TB PPDU response without considering the CS result when scheduling is made.

According to another embodiment, threshold 2 may be a value smaller than threshold 1. In this case, it is advantageous in that unnecessarily configuring the CS required subfield as 1 for a short PPDU or a short frame can be avoided. For example, when the maximum response length or the maximum number of OFDM symbols which can be solicited by the TRS control soliciting the EHT TB PPDU is less than the TRS control soliciting the HE TB PPDU, threshold 2 may be smaller than threshold 1. For example, when the maximum number of OFDM symbols which can be solicited by the TRS control soliciting the EHT TB PPDU is 16, threshold 2 may be equal to a value obtained by applying the following Time value to Equation 7 or Equation 8.

$$\text{Time} = 8 + 8 + 4 + 4 + 8 + 8 + 16 + 16*16 + 16 = 328$$

$$\text{Time} = 8 + 8 + 4 + 4 + 8 + 8 + 16 + 16*16 + 20 = 332$$

Accordingly, threshold 2 may be 226 or 229.

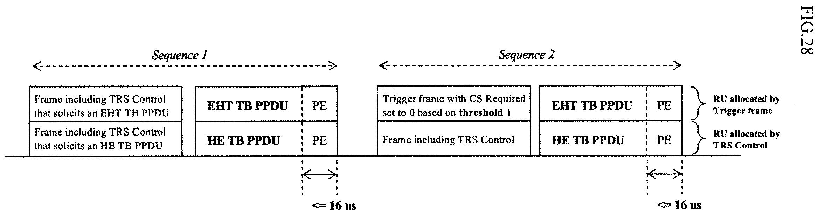

FIG. 28 illustrates an example of a method for configuring a PE field when an aggregated (A)-PPDU is used according to an embodiment of the present invention.

As described in FIG. 24, PPDUs included in an A-PPDU may have the same PE field duration. Accordingly, a duration of a PE field included in an EHT PPDU included the A-PPDU may be 16 us or less. More specifically, a duration of a PE field included in an EHT TB PPDU included in the A-PPDU may be 16 us or less. More specifically, a duration of a PE field included in an EHT TB PPDU included in the A-PPDU may be configured as a value of a default PE duration subfield included in a HE operation element.

To achieve this, when a TRS control soliciting the EHT TB PPDU transmitted as the A-PPDU (or included in the A-PPDU) is transmitted, signaling soliciting a PE duration may be configured as a value of 16 us or less. Alternatively, when the TRS control soliciting the EHT TB PPDU transmitted as the A-PPDU (or included in the A-PPDU) is transmitted, signaling soliciting a PE duration may be configured to use a value of a default PE duration subfield included in a HE operation element, as the duration of the PE field.

Alternatively, when responding to the TRS control soliciting the EHT TB PPDU transmitted as the A-PPDU (or included in the A-PPDU), the PE duration of the transmitted PE field may be configured as a value of 16 us or less. To this end, a responding STA may need to know whether the TB PPDU is transmitted as the A-PPDU (or is included in the A-PPDU).

Alternatively, the TRS control soliciting the EHT TB PPDU may not be included in the PPDU when soliciting the A-PPDU. This may be because there is no method of identifying whether or not the responding STA responds to the A-PPDU. In addition, this may be because signaling soliciting the PE duration is not included in the TRS control.

In the embodiment of FIG. 28, the same description as those made in FIGS. 1 to 27 can be omitted.

According to an embodiment of the present invention, a pre-configured value used when configuring the CS required subfield on the basis of the UL length subfield described in FIGS. 25 to 27 may vary on the basis of whether the trigger frame soliciting the EHT TB PPDU solicits the EHT TB PPDU included in the A-PPDU, or solicits the EHT TB PPDU not included in the A-PPDU. That is, a pre-configured value used when configuring the CS required subfield on the basis of the UL length subfield may vary on the basis of whether or not the trigger frame soliciting the EHT TB PPDU includes a frame soliciting whether a PPDU including the trigger frame is a HE TB PPDU.

According to an embodiment of the present invention, when the trigger frame soliciting the EHT TB PPDU is not included in the A-PPDU, the method described in FIG. 27 may be used. That is, when the trigger frame soliciting the EHT TB PPDU is not included in the A-PPDU, threshold 2 described in FIG. 27 may be used. More specifically, when the trigger frame soliciting the EHT TB PPDU is not included in the A-PPDU, the CS required subfield may be configured on the basis of 421 or 79 corresponding to the pre-configured value described in FIGS. 25 to 27.

In addition, when the trigger frame soliciting the EHT TB PPDU is included in the A-PPDU, the method described in FIGS. 25 to 26 may be used. Alternatively, when the trigger frame soliciting the EHT TB PPDU is included in the A-PPDU, threshold 1 described in FIG. 27 may be used. More specifically, when the trigger frame soliciting the EHT TB PPDU is included in the A-PPDU, the CS required subfield may be configured on the basis of 418 or 76 corresponding to the pre-configured value described in FIGS. 25 to 27. When the trigger frame soliciting the EHT TB PPDU is included in the A-PPDU, the CS required subfield may be configured on the basis of the same pre-configured value as in the case of the trigger frame soliciting the HE TB PPDU.

Referring to FIG. 28, one frame included in one PPDU or multiple frames included in one PPDU may solicit the A-PPDU. For example, the HE TB PPDU and the EHT TB PPDU may be simultaneously solicited. For example, referring to sequence 1, a TRS control soliciting the HE TB PPDU and a TRS control soliciting the EHT TB PPDU may be included in a PPDU. In such a case, PE fields of the PPDU responding to the TRS control soliciting the HE TB PPDU and the PPDU responding to the TRS control soliciting the EHT TB PPDU may have the same duration. The same duration may be the length of 16 us or less. Alternatively, the same duration may be a value solicited by the default PE duration subfield included in the HE operation element.

Referring to sequence 2, the trigger frame may solicit the EHT TB PPDU included in the A-PPDU. In such a case, the CS required subfield included in the trigger frame may be configured on the basis of threshold 1 described in FIG. 27. Threshold 1 may be a pre-configured value used when configuring the CS required subfield included in the trigger frame soliciting the HE TB PPDU, on the basis of the UL length subfield value. Threshold 1 may be 418 or 76. The trigger frame soliciting the EHT TB PPDU may solicit a response having the same length as the TRS control soliciting the HE TB PPDU or the trigger frame soliciting the HE TB PPDU. In addition, the trigger frame soliciting the EHT TB PPDU may configure the CS required subfield on the basis of the same pre-configured value as the trigger frame soliciting the HE TB PPDU. Accordingly, the trigger frame soliciting the EHT TB PPDU and the trigger frame soliciting the HE TB PPDU may configure the CS required subfield thereof as the same value. In addition, the trigger frame soliciting the EHT TB PPDU configures the CS required subfield on the basis of threshold 1 when being transmitted together with the TRS control soliciting the HE TB PPDU, the CS required subfield may be configured as 0 or 1. That is, the CS required subfield may be configured as 0. Accordingly, according to an embodiment of the present invention, the HE TB PPDU among the solicited A-PPDU may be transmitted without consideration of the CS result, and a situation of determining whether to respond with the EHT TB PPDU on the basis of the CS result can be avoided.

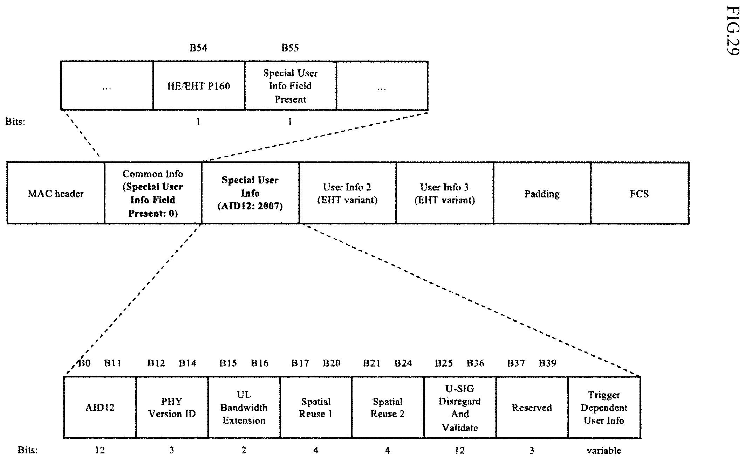

FIG. 29 illustrates an example of a method for soliciting a format of a TB PPDU according to an embodiment of the present invention.

As described in the embodiments above, a method in which a format of a PPDU to be transmitted as a response is solicited by a frame triggering a PPDU may be required. For example, the format of the PPDU may mean a format of a TB PPDU. The embodiment of FIG. 29 may be a detailed embodiment of the above-described TB PPDU format soliciting method. In addition, the description made above can be omitted in this embodiment.

According to an embodiment of the present invention, the format of a PPDU transmitted as a response to a trigger frame may be determined on the basis of a user info field included in the trigger frame. Alternatively, the format of a PPDU transmitted as a response to a trigger frame may be solicited through a user info field included in the trigger frame. In the present invention, the user info field for determining or soliciting the format of the PPDU may be called a special user info field.

According to an embodiment, the special user info field may be a user info field in which an AID12 subfield included in the special user info field is configured as a pre-configured value. For example, the pre-configured value may be 2007. In addition, the pre-configured value may be a value not allocated as an association ID (AID) by an AP. In addition, the special user info field may have a format different from other user info fields. That is, the special user info field may have different subfields included therein, from other user info fields. In addition, the special user info field and other user info fields may include AID 12 subfields in common at the same position. For example, the most preceding 12 bits of each of the special user info field and a user info field other than the special user info field may correspond to an AID12 subfield. For example, B0 to B11 of each of the special user info field and a user info field other than the special user info field may be an AID 12 subfield.

In addition, the trigger frame may include a subfield soliciting whether the special user info field is included. The subfield soliciting whether special user info field is included may be called a special user info field present subfield. For example, the special user info field present subfield may exist in a common info field. For example, bit b55 of the common info field may be the special user info field present subfield. When the special user info field present subfield is configured as 1, the trigger frame may not include the special user info field. In addition, when the special user info field present subfield is configured as 0, the trigger frame may include the special user info field. This may be because B55 of the common info field is configured as a pre-configured value of 1 in the 802.11ax standard.

An STA receiving the trigger frame may determine whether the special user info field is included, on the basis of the special user info field present subfield, and thus implementation of determining whether the special user info field present subfield is included may be easier compared to a case where the special user info field present subfield does not exist. In addition, when an STA not associated with an AP having transmitted a trigger frame receives the trigger frame, whether a user info field having the AID12 subfield configured as a pre-configured value soliciting the special user info field is the special user info field (indicates 12 LSBs of the actual AID) may be determined on the basis of the special user info field present subfield. For example, in a case of soliciting an RA-RU for an unassociated STA, when the STA unassociated with the AP having transmitted the trigger frame receives the trigger frame, the STA may operate according to the trigger frame. In addition, the STA may perform a spatial reuse operation on the basis of a TB PPDU or a trigger frame from an unassociated BSS.

In addition, when the trigger frame includes a special user info field, the special user info field may exist at the foremost position among user info fields. Alternatively, the special user info field may be positioned immediately after the common info field. This may be for enabling the STA receiving the trigger frame to easily perform parsing.

According to an embodiment of the present invention, the format of a PPDU transmitted as a response to a trigger frame may be determined on the basis of whether the trigger frame includes a special user info field. For example, when a trigger frame includes a special user info field, the format of a PPDU transmitted as a response to the trigger frame may be an EHT TB PPDU. In addition, when a trigger frame does not include a special user info field, the format of a PPDU transmitted as a response to the trigger frame may be a HE TB PPDU. In addition, as described above, there may be a special user info field present subfield corresponding to signaling which indicates whether a trigger frame includes a special user info field. Accordingly, the format of a PPDU transmitted as a response to a trigger frame may be determined on the basis of a special user info field present subfield. For example, when the special user info field present subfield is configured as 0, the format of the PPDU transmitted as a response to the trigger frame may be an EHT TB PPDU. In addition, when the special user info field present subfield is configured as 1, the format of the PPDU transmitted as a response to the trigger frame may be a HE TB PPDU.

In addition, when a trigger frame includes a special user info field, a user info field including the trigger frame may be an EHT variant user info field. In addition, when a trigger frame does not include a special user info field, the trigger frame may not include an EHT variant user info field. When a trigger frame does not include a special user info field, the trigger frame may include a HE variant user info field only.

When the user info field is the EHT variant or the HE variant, an RU soliciting method may vary. For example, a method of interpreting an RU allocation subfield included in a user info field may vary according to whether the user info field is the EHT variant or the HE variant. For example, the RU allocation subfield included in the EHT variant user info field may be encoded to solicit RUs supported in the EHT standard. In addition, the RU allocation subfield included in the HE variant user info field may be encoded to solicit RUs supported in the HE standard.

In addition, when interpreting an RU solicited on the basis of an EHT variant user info field, the interpretation may be based on two or more subfields. The two or more subfields may include an RU allocation subfield and a PS160 subfield. The RU allocation subfield may be positioned immediately after the AID12 subfield as shown in FIG. 16. In addition, the RU allocation subfield may be 8 bits. The PS160 subfield may solicit a subchannel in which an RU solicited by an RU allocation subfield exists. Alternatively, the PS160 subfield may solicit a subchannel in which an RU solicited by a user info field exists. In this case, a unit for indicting a subchannel may be a 160 MHz subchannel. The PS160 subfield may solicit whether the solicited RU exists in a primary 160 MHz channel or a secondary 160 MHz channel. The PS160 subfield may exist immediately before a trigger dependent user info field. The PS160 subfield may be bit B39 of the user info field. The PS160 subfield may be one bit.

In addition, when interpreting an RU solicited on the basis of a HE variant user info field, the interpretation may be based on one subfield. The one subfield may be an RU allocation subfield. That is, the position of an RU solicited by a HE variant user info field may be determined on the basis of only an RU allocation subfield included in the HE variant user info field.

Referring to FIG. 29, a trigger frame may include a special user info field. Whether a user info field is a special user info field may be determined on the basis of an AID12 subfield included in the user info field. For example, when an AID12 subfield included in a user info field is a pre-configured value, the user info field may be the special user info field. Referring to FIG. 29, the pre-configured value may be 2007. In addition, referring to FIG. 29, the special user info field may exist immediately after a common info field or at the foremost position among user info fields. In addition, there may be a special user info field present subfield corresponding to signaling soliciting whether a trigger frame includes a special user info field. Referring to FIG. 29, the special user info field present subfield may be included in the common info field. If the special user info field present subfield is configured as 0, the trigger frame includes the special user info field. As described in FIG. 29, when the trigger frame includes the special user info field, the format of a PPDU corresponding to a response to the trigger frame may be an EHT TB PPDU.

In addition, according to an additional embodiment, the format of a PPDU transmitted as a response to a trigger frame may be determined on the basis of a subfield soliciting a TB PPDU format and whether the trigger frame includes a special user info field. In the present invention, a subfield soliciting the TB PPDU format may be referred to as a HE/EHT P160 subfield. According to a more specific embodiment, a HE/EHT P160 subfield may solicit a TB PPDU format for a pre-configure channel. For example, the HE/EHT P160 subfield may solicit a TB PPDU format for a primary 160 MHz channel (P160 channel). For example, when a value of the HE/EHT P160 subfield is 1, the value may solicit responding with a HE TB PPDU. In addition, when a value of the HE/EHT P160 subfield is 0, the value may solicit responding with an EHT TB PPDU. The HE/EHT P160 subfield may be one bit.

Referring to FIG. 29, the HE/EHT P160 subfield may be included in the common info field. More specifically, the HE/EHT P160 subfield may be included at the position of bit B55 of the common info field.

Accordingly, the following operations may be performed when a TB PPDU format is solicited or determined on the basis of a special user info field and a HE/EHT P160 subfield. When the HE/EHT P160 subfield solicits an EHT TB PPDU, an EHT TB PPDU may be transmitted as a response when responding to a trigger frame. That is, when the HE/EHT P160 subfield solicits an EHT TB PPDU, an EHT TB PPDU may be transmitted as a response when responding to a trigger frame, regardless of the position of an allocated RU. In addition, when the HE/EHT P160 subfield solicits an EHT TB PPDU, a special user info field may be always included. That is, a special user info field present subfield may also solicit that the special user info field is included.

If the HE/EHT P160 subfield solicits a HE TB PPDU, a TB PPDU format may be solicited or determined on the basis of the position of an allocation RU when responding to a trigger frame. If the HE/EHT P160 subfield solicits a HE TB PPDU and an allocation RU is included in a pre-configured channel (e.g., P160 channel) solicited by the HE/EHT P160 subfield, the HE TB PPDU may be transmitted as a response. In addition, if the HE/EHT P160 subfield solicits a HE TB PPDU and an allocated RU is not included in a pre-configured channel (e.g., P160 channel) solicited by the HE/EHT P160 subfield (e.g., an allocation RU is included in a secondary 160 MHz channel (S160 channel)), the EHT TB PPDU may be transmitted as a response. In addition, whether an allocation RU is included in a pre-configure channel may be based on an RU allocation subfield and a PS160 subfield. More specifically, when the preconfigured channel is a P160 channel, whether an allocation RU is included in the pre-configured channel may be based on the PS160 subfield.

In addition, soliciting or determining a TB PPDU on the basis of the position of an allocated RU and a HE/EHT P160 subfield may be limited to a case where a trigger frame includes a special user info field. If a trigger frame includes a special user info field, the trigger frame may include a HE/EHT P160 subfield and a PS160 subfield. If a trigger frame does not include a special user info field, a HE TB PPDU may be always used to respond to the trigger frame. In addition, as described above, whether the special user info field is included may be based on a special user info field present subfield. Accordingly, when a trigger frame includes or does not include a special user info field, it may mean that a special user info field present subfield is configured to be included or is configured not to be included in the special user info field.

A description in the present invention that using an EHT TB PPDU is solicited and determined when responding to a trigger frame may be replaced with a description that using an EHT TB PPDU or a NEXT TB PPDU is solicited and determined. In addition, whether to use either the EHT TB PPDU or the NEXT TB PPDU may be determined on the basis of a format identifier subfield. That is, a TB PPDU format solicited by the format identifier subfield may be used. For example, when the format identifier subfield solicits EHT, an EHT TB PPDU may be used.

A special user info field may include an AID12 subfield and information required when responding to and a trigger frame. The information required to respond to the trigger frame may include information included in a preamble of a PPDU transmitted as a response to the trigger frame. For example, the information required when responding to the trigger frame may include information included in a U-SIG field of a PPDU transmitted as a response to the trigger frame. FIG. 29 may include an example of information included in the U-SIG field. Referring to FIG. 29, the special user info field may include AID12, PHY version ID, UL bandwidth extension, spatial reuse 1, spatial reuse 2, U-SIG disregard and validate, reserved, trigger dependent user information fields. In addition, the above-mentioned fields may be positioned according to the mentioned order. In addition, the number of bits of the respective fields may be 12, 3, 2, 4, 4, 12, 3, and variable, respectively. A PHY version ID field may be the above-described format identifier subfield, a PHY version identifier subfield, or a PHY version field. An STA responding to a trigger frame may configure a U-SIG field included in a PPDU transmitted as a response, on the basis of a special user info field included in the trigger frame. For example, a value of a subfield included in a special user info field may be copied to a subfield included in a responding U-SIG field. Subfields copied to the subfield included in the U-SIG field may be PHY version ID, spatial reuse 1, spatial reuse 2, U-SIG disregard and validate subfields.

Alternatively, a subfield included in a U-SIG field of a PPDU transmitted as a response may be configured on the basis of a value of a subfield included in a special user info field. Subfields for configuring the U-SIG field on the basis of the subfield included in the special user info field may be UL bandwidth extension subfields. For example, a bandwidth (BW) subfield included in the U-SIG field of a PPDU transmitted as a response may be configured on the basis of a UL BW subfield (see FIG. 16) included in the common info field and a UL bandwidth extension subfield included in the special user info field.

In addition, the existence and the length of a trigger dependent user info field included in a special user info field may be based on the type of a trigger frame. That is, the existence and the length of a trigger dependent user information field included in a special user info field may be based on the type of variant to which the trigger frame corresponds. The type of the trigger frame may be solicited and determined by the trigger type subfield (see FIG. 16) included in the common info field.

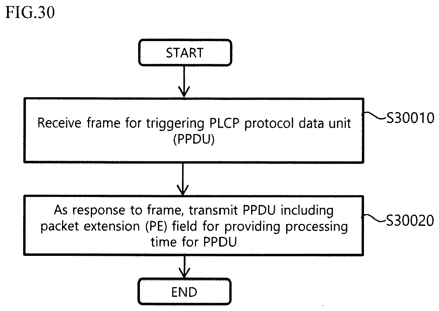

FIG. 30 is a flowchart illustrating an example of an operation of a terminal according to an embodiment of the present invention.

First, a terminal corresponding to a non-AP STA may receive a frame for triggering transmission of a physical layer protocol data unit (PPDU) from an AP (or an AP STA) (S30010).

In this case, the frame for triggering the PPDU may be a trigger frame or a frame including a TRS.

Thereafter, the non-AP STA may generate a PPDU to be transmitted as a response to the frame. In this case, a duration of a PE field included in the PPDU may be configured.

The PE field is a field for providing an additional processing time for the PPDU, and requires no separate decoding. In this case, the PE field may be positioned at the end of the PPDU, and may be transmitted at average power of a data field.

The duration of the PE field may be configured through the method described with reference to FIGS. 19 to 29 above. For example, the duration of the PE field may be configured according to the format of a PPDU solicited by the frame, and a maximum value of the duration of the PE field may be determined differently according to the format of the PPDU.

Specifically, the duration of the PE field may be configured as a value solicited by a PE duration field solicited by a TRS control field, or may be configured as a value solicited by a default PE duration subfield included in an operation element. Alternatively, when a TB PPDU is triggered by the trigger frame only, a duration of a PE field of the TB PPDU may be configured according to a specific condition (an MCS method, an RU size, the number of spatial streams, and/or the format of a solicited PPDU (for example, whether an EHT TB PPDU or a HE TB PPDU is solicited)).

For example, only when the TB PPDU satisfies the above-described specific condition (for example, when an EHT TB PPDU is solicited, when eight or more spatial streams are used, when at least one RU size is greater than 2x996, when bandwidth in which an EHT PPDU (or an EHT MU PPDU) is transmitted is 320 MHz, or when a PPDU is modulated using 4096-QAM), 20 us may be allowed as the duration of the PE field.

When transmission of a PPDU is solicited by a TRS, a duration of a PE field included in the PPDU may be configured as a value solicited by a default PE duration subfield included in an operation element (for example, a HE operation element, an EHT operation element, etc.), or solicited by a PE duration subfield included in a TRS control field.

In a case where the TRS and the trigger frame are included in a single PPDU and both solicit transmission of the PPDU, when a maximum value of a duration of a PE field in a case where the PPDU is solicited by the trigger frame is identical to a maximum value of a duration of a PE field in a case where the PPDU is solicited by the TRS, a duration may be configured as a value solicited by a default PE duration subfield, or a value solicited by a PE duration subfield included in the TRS.

However, when a TRS and a trigger frame are included in a single PPDU and both solicit transmission of the PPDU, a maximum value of a duration of a PE field in a case where the PPDU is solicited by the trigger frame may not be identical to a maximum value of a duration of a PE field in a case where the PPDU is solicited by the TRS. For example, since a TB PPDU solicited by the trigger frame and/or the TRS satisfies a specific condition, the duration of the PE field may be a first maximum value (for example, a case where 20 us is allowed), and a maximum value of a duration of a PE field solicited by a default PE subfield included in an operation element may be a second maximum value (for example, 16 us). In this case, the duration of the PE field may be configured as a value solicited by the default PE subfield, or a value solicited by the PE subfield included in the TRS.

In this case, the PE duration subfield may solicit that 20 us is allowed as a maximum value of the duration of the PE field, or may solicit configuration of the duration the PE field with a value of the default PE duration subfield included in the operation element.

In other words, according to an embodiment of the present invention, the duration of the PE field may be determined on the basis of the format of a PPDU transmitted as a response to the TRS. According to an embodiment, when responding to the TRS with a HE PPDU, the duration of the PE field may be a HE default PE duration. In addition, when responding to the TRS with an EHT PPDU, the duration of the PE field may be a value solicited by an EHT default PE duration. For example, the HE PPDU may be a HE TB PPDU. Alternatively, the HE PPDU may be a HE SU PPDU. In addition, the EHT PPDU may be an EHT TB PPDU. Alternatively, the EHT PPDU may be an EHT MU PPDU. In addition, the HE default PE duration may be the default PE duration described in FIGS. 20 and 21. For example, the HE default PE duration may be a value solicited by a HE operation element. More specifically, the HE default PE duration may be a value solicited by the default PE duration subfield included in the HE operation element.

In addition, the EHT default PE duration may be a value solicited by the EHT operation element. More specifically, the EHT default PE duration may be a value solicited by the EHT default PE duration subfield included in the EHT operation element.

According to an embodiment, the EHT default PE duration subfield may solicit whether the duration of the PE field is 20 us. In such a case, the EHT default PE duration subfield may be 1 bit.

According to another embodiment, the EHT default PE duration subfield may solicit whether or not the duration of the PE field is identical to the HE default PE duration. In such a case, the EHT default PE duration subfield may be 1 bit. For example, when the EHT default PE duration subfield solicits that the duration of the PE field is identical to the HE default PE duration, the EHT default PE duration may be the default PE duration solicited by the HE operation element. In addition, when the EHT default PE duration subfield solicits that the duration of the PE field is not identical to the HE default PE duration, the EHT default PE duration may be 20 us.

According to another embodiment, the EHT default PE duration subfield may solicit one value of the duration of the PE field among 0, 4, 8, 12, 16, and 20 us. In such a case, the EHT default PE duration subfield may be 3 bits. According to another embodiment, the EHT default PE duration may be 20 us.

Thereafter, the non-AP STA may transmit, as a response to the frame, a PPDU including a packet extension (PE) field for providing a processing time for the PPDU (S30020).

In this case, when the format of the PPDU, solicited by the frame, corresponds to a high efficiency (HE) PPDU, the maximum value of the duration for the PE field is a first value, and when the format of the PPDU, solicited by the frame, corresponds to an extremely high throughput (EHT) PPDU, the maximum value of the duration for the PE field is a second value.

The first value is "16 us", and the second value is "20 us".

The non-AP STA may receive an operation element from the AP. The operation element includes a default PE duration subfield soliciting the duration for the PE field, and in a case where a value of a control identifier (ID) subfield included in the frame indicates triggered response scheduling (TRS) for triggering transmission of the PPDU, when the format of the PPDU is solicited as an EHT PPDU by the frame and a maximum value of the duration solicited by the default PE duration subfield is different from a maximum value of the duration in the case where the format of the PPDU is solicited as the EHT PPDU by the frame, the maximum value of the duration of the PE field is determined by the default PE duration subfield.

When a value of a control ID subfield included in the frame indicates triggered response scheduling (TRS) for triggering transmission of a PPDU for another STA, a value of each of multiple subfields included in the frame used for calculation of the duration of the PE field is configured so that the duration of the PE field calculated by the multiple subfields is to be identical to a duration of a PE field of the PPDU for another STA.

The operation element includes an EHT default PE duration subfield indicating whether a maximum value of a duration for a PE field of an EHT PPDU is identical to a maximum value of a duration for a PE field of a HE PPDU.

When the EHT default PE duration subfield solicits that the maximum value of the duration for the PE field of the EHT PPDU is not identical to the maximum value of the duration for the PE field of the HE PPDU, the duration for the PE field, solicited by the EHT default PE duration subfield, is "20 us".

When the PPDU is modulated using 4096-QAM, a spatial stream number is eight or more, or a channel bandwidth is 320 MHz and a size of a resource unit (RU) allocated for transmission of the PPDU is 2x996 or more, the maximum value of the duration of the PE field is "20 us".

The above-mentioned description of the present invention is for illustrative purposes, and it will be understood that those who skilled in the art to which the present invention belongs can easily modify the present invention in other specific forms, without altering the technical ideas or essential characteristics of the present invention. Therefore, the embodiments described above are illustrative and are not limited in all aspects. For example, each element described as a single entity may be distributed and implemented, and likewise, elements described as being distributed may also be implemented in a combined form.

The scope of the present invention is defined by the appended claims rather than the above detailed description, and all changes or modifications derived from the meaning and range of the appended claims and equivalents thereof should be interpreted as being included within the scope of the present invention.

**Claims**

1. A terminal of a wireless communication system, the terminal comprising:

   a communication module; and
   a processor configured to control the communication module,
   wherein the processor is configured to:

   receive a frame for triggering transmission of a physical layer protocol data unit (PPDU) from an access point (AP); and
   as a response to the frame, transmit a PPDU comprising a packet extension (PE) field for providing a processing time for the PPDU,
   wherein the frame solicits a format for the PPDU transmitted as a response to the frame, and
   a maximum value of a duration for the PE field varies according to the format of the PPDU, solicited by the frame.

2. The terminal of claim 1, wherein when the format of the PPDU, solicited by the frame, corresponds to a high efficiency (HE) PPDU, the maximum value of the duration for the PE field is a first value, and
   when the format of the PPDU, solicited by the frame, corresponds to an extremely high throughput (EHT) PPDU, the maximum value of the duration for the PE field is a second value.

3. The terminal of claim 2, wherein the first value is "16 us", and
   the second value is "20 us".

4. The terminal of claim 1, wherein the processor is configured to receive an operation element from the AP,

   wherein the operation element comprises a default PE duration subfield soliciting the duration for the PE field, and
   in a case where a value of a control identifier (ID) subfield included in the frame indicates triggered response scheduling (TRS) for triggering transmission of the PPDU, when the format of the PPDU is solicited as an EHT PPDU by the frame and a maximum value of the duration solicited by the default PE duration subfield is different from a maximum value of the duration in a case where the format of the PPDU is solicited as the EHT PPDU by the frame, the maximum value of the duration of the PE field is determined by the default PE duration subfield.

5. The terminal of claim 1, wherein when a value of a control ID subfield included in the frame indicates triggered response scheduling (TRS) for triggering transmission of a PPDU for another STA, a value of each of multiple subfields included in the frame used for calculation of the duration of the PE field is configured so that the duration of the PE field calculated by the multiple subfields is to be identical to a duration of a PE field of the PPDU for another STA.

6. The terminal of claim 1, wherein the processor is configured to receive an operation element from the AP,
   wherein the operation element comprises an EHT default PE duration subfield indicating whether a maximum value of a duration for a PE field of an EHT PPDU is identical to a maximum value of a duration for a PE field of a HE PPDU.

7. The terminal of claim 6, wherein when the EHT default PE duration subfield solicits that the maximum value of the duration for the PE field of the EHT PPDU is not identical to the maximum value of the duration for the PE field of the HE PPDU, the duration for the PE field, indicated by the EHT default PE duration subfield, is "20 us".

8. The terminal of claim 1, wherein when the PPDU is modulated using 4096-QAM, a spatial stream number is eight or more, or a channel bandwidth is 320 MHz and a size of a resource unit (RU) allocated for transmission of the PPDU is 2x996 or more, the maximum value of the duration of the PE field is "20 us".

9.  A method of transmitting a frame by a terminal in a wireless communication system, the method comprising:

    receiving a frame for triggering transmission of a physical layer protocol data unit (PPDU) from an access point (AP); and
    as a response to the frame, transmitting a PPDU comprising a packet extension (PE) field for providing a processing time for the PPDU,
    wherein the frame solicits a format for the PPDU transmitted as a response to the frame, and
    a maximum value of a duration for the PE field varies according to the format of the PPDU, solicited by the frame.

10. The method of claim 9, wherein when the format of the PPDU, solicited by the frame, corresponds to a high efficiency (HE) PPDU, the maximum value of the duration for the PE field is a first value, and
    when the format of the PPDU, solicited by the frame, corresponds to an extremely high throughput (EHT) PPDU, the maximum value of the duration for the PE field is a second value.

11. The method of claim 10, wherein the first value is "16 us", and
    the second value is "20 us".

12. The method of claim 9, further comprising receiving an operation element from the AP,

    wherein the operation element comprises a default PE duration subfield soliciting the duration for the PE field, and
    in a case where a value of a control identifier (ID) subfield included in the frame indicates triggered response scheduling (TRS) for triggering transmission of the PPDU, when the format of the PPDU is solicited as an EHT PPDU by the frame and a maximum value of the duration solicited by the default PE duration subfield is different from a maximum value of the duration in a case where the format of the PPDU is solicited as the EHT PPDU by the frame, the maximum value of the duration of the PE field is determined by the default PE duration subfield.

13. The method of claim 9, wherein when a value of a control ID subfield included in the frame indicates triggered response scheduling (TRS) for triggering transmission of a PPDU for another STA, a value of each of multiple subfields included in the frame used for calculation of the duration of the PE field is configured so that the duration of the PE field calculated by the multiple subfields is to be identical to a duration of a PE field of the PPDU for another STA.

14. The method of claim 9, further comprising receiving an operation element from the AP,
    wherein the operation element comprises an EHT default PE duration subfield indicating whether a maximum value of a duration for a PE field of an EHT PPDU is identical to a maximum value of a duration for a PE field of a HE PPDU.

15. The method of claim 14, wherein when the EHT default PE duration subfield solicits that the maximum value of the duration for the PE field of the EHT PPDU is not identical to the maximum value of the duration for the PE field of the HE PPDU, the duration for the PE field, solicited by the EHT default PE duration subfield, is "20 us".

16. The method of claim 9, wherein when the PPDU is modulated using 4096-QAM, a spatial stream number is eight or more, or a channel bandwidth is 320 MHz and a size of a resource unit (RU) allocated for transmission of the PPDU is 2x996 or more, the maximum value of the duration of the PE field is "20 us".

FIG.1

FIG.2

FIG.3

FIG.4

<u>200</u>

210

Communication Unit

Processor

Memory

220

260

FIG.5

| STA<br>(100) | AP<br>(200) | AS<br>(300) |

*Passive Scanning* ← Beacon (S101)

*Active Scanning*
- Probe request (S103) →
- ← Probe response (S105)

*Authentication*
- Authentication request (S107a) →
- ← Authentication response (S107b)

*Association*
- Association request (S109a) →
- ← Association response (S109b)

802.1X Authentication (optional) (S111)

DHCP/IP Establishment (optional) (S113)

FIG.6

FIG.7

FIG.8

(a) EHT SU PPDU

| L-STF | L-LTF | L-SIG | RL-SIG | U-SIG | EHT-SIG-A | EHT-STF | EHT-LTF | SVC | MPDU | TAIL |

(b) EHT TB PPDU

| L-STF | L-LTF | L-SIG | RL-SIG | U-SIG | EHT-STF | EHT-LTF | SVC | MPDU | TAIL |

(c) EHT MU PPDU

| L-STF | L-LTF | L-SIG | RL-SIG | U-SIG | EHT-SIG-B | EHT-STF | EHT-LTF | SVC | MPDU | TAIL |

(d) EHT ER SU PPDU

| L-STF | L-LTF | L-SIG | RL-SIG | U-SIG | U-SIG | EHT-SIG-A | EHT-SIG-A | EHT-STF | EHT-LTF | SVC | MPDU | TAIL |

FIG.9

AP MLD
(multi-link device)

| AP1 | AP2 | AP3 |

Link1    Link2    Link3

Non-AP MLD
(multi-link device)

| Non-AP STA1 | Non-AP STA2 | Non-AP STA3 |

FIG.10

FIG.11

FIG.12

3520

FIG.13

FIG.14

```
┌─ OFDM PHY STA ─────────────────────────────────────┐
│  ┌─ HT STA ───────────────────────────────────┐   │
│  │   ┌─ VHT STA ───────────────────────────┐   │   │
│  │   │   ┌─ HE STA ───────────────────┐   │   │   │
│  │   │   │   ┌─ EHT STA ───────────┐   │   │   │   │
│  │   │   │   │   ┌─ NEXT STA ──┐   │   │   │   │   │
│  │   │   │   │   │             │   │   │   │   │   │
│  │   │   │   │   └─────────────┘   │   │   │   │   │
│  │   │   │   └─────────────────────┘   │   │   │   │
│  │   │   └───────────────────────────────┘   │   │
│  │   └───────────────────────────────────────┘   │
│  └───────────────────────────────────────────────┘
└───────────────────────────────────────────────────┘
```

FIG.15

FIG.16

**(a) Trigger frame format**

| Frame Control | Duration | RA | TA | Common Info | User Info List | Padding | FCS |
|---|---|---|---|---|---|---|---|

| Octets: | 2 | 2 | 6 | 6 | 8 or more | variable | variable | 4 |

**(b) Common Info field**

| B0 B3 | B4 B15 | B16 | B17 | B18 B19 | B20 B21 | B22 | B23 B25 |
|---|---|---|---|---|---|---|---|
| Trigger Type | UL Length | More TF | CS Required | UL BW | GI And HE-LTF Type | MU-MIMO HE-LTF Mode | Number Of HE-LTF Symbols And Mi damble Periodicity |

| Bits: | 4 | 12 | 1 | 1 | 2 | 2 | 1 | 3 |

| B26 | B27 | B28 B33 | B34 B35 | B36 | B37 B52 | B53 | B54 B62 |
|---|---|---|---|---|---|---|---|
| UL STBC | LDPC Extra Symbol Segment | AP Tx Power | Pre-FEC Padding Factor | PE Disambiguity | UL Spatial Reuse | Doppler | UL HE-SIG-A2 Reserved |

| Bits: | 1 | 1 | 6 | 2 | 1 | 16 | 1 | 9 |

| B63 | |
|---|---|
| Reserved | Trigger Dependent Common Info |

| Bits: | 1 | variable |

**(c) User Info field**

| B0 B11 | B12 B19 | B20 | B21 B24 | B25 | B26 B31 | B32 B38 | B39 | |
|---|---|---|---|---|---|---|---|---|
| AID12 | RU Allocation | UL FEC Coding Type | UL HE-MCS | UL DCM | SS Allocation/ RA-RU Information | UL Target RSSI | Reserved | Trigger Dependent User Info |

| Bits: | 12 | 8 | 1 | 4 | 1 | 6 | 7 | 1 | variable |

FIG.17

| AID12 subfield | Description |
|---|---|
| 0 | User Info field allocates one or more contiguous RA-RUs for associated STAs |
| 1-2007 | User Info field is addressed to an associated STA whose AID is equal to the value in the AID12 subfield |
| 2008-2044 | Reserved |
| 2045 | User Info field allocates one or more contiguous RA-RUs for unassociated STAs |
| 2046 | Unallocated RU |
| **2047** | **Response to the Trigger frame is transmitted in EHT TB PPDU** |
| **2048** | **Response to the Trigger frame is transmitted in NEXT TB PPDU** |
| 2049-4094 | Reserved |
| 4095 | Start of Padding field |

FIG.18

| HE TRS Control in HE PPDU | HE TB PPDU | NEXT TRS Control in EHT PPDU | EHT TB PPDU | NEXT TRS Control in NEXT PPDU | NEXT TB PPDU |
|---|---|---|---|---|---|

FIG.19

HE PPDU format

| HE preamble | Data | PE |

0, 4, 8, 12 or 16 us

EHT PPDU format

| EHT preamble | Data | PE |

0, 4, 8, 12, 16 or 20 us

FIG.20

**(a) HE Operation element**

| Element ID | Length | Element ID Extension | HE Operation Parameters | BSS Color Information | Basic HE-MCS And NSS Set | VHT Operation Information | Max Co-Hosted BSSID Indicator | 6 GHz Operation Information |
|---|---|---|---|---|---|---|---|---|
| 1 | 1 | 1 | 3 | 1 | 2 | 0 or 3 | 0 or 1 | 0 or 5 |

Octets:

**(b) HE Operation Parameters field**

| B0  B2 | B3 | B4  B13 | B14 | B15 | B16 | B17 | B18  B23 |
|---|---|---|---|---|---|---|---|
| Default PE Duration | TWT Required | TXOP Duration RTS Threshold | VHT Operation Information Present | Co-Hosted BSS | ER SU Disable | 6 GHz Operation Information Present | Reserved |
| 3 | 1 | 10 | 1 | 1 | 1 | 1 | 6 |

Bits:

FIG.21

$$T_{PE} = \left\lceil \frac{\left( \left\lceil \frac{LENGTH + m + 3}{3} \right\rceil \times 4 - T_{PREAMBLE} \right) - N_{SYM} T_{SYM} - N_{MA} N_{LTF} T_{LTFSYM}}{4} \right\rceil \times 4$$

| Trigger frame | TB PPDU | PE |
| Frame including TRS Control | TB PPDU | PE |

Default PE duration

FIG.22

The Trigger frame does not solicit a STA with
configurations requiring PE duration of 20 us.

| Trigger frame | | EHT TB PPDU | PE |
| Frame including TRS Control | | EHT TB PPDU | PE |

<= 16 us

FIG.23

(a) TRS Control

| UL Data Symbols | RU Allocation | AP Tx Power | UL Target RSSI | UL MCS | PE Duration |
|---|---|---|---|---|---|
| Bits: 5 | 8 | 5 | 5 | 2 | 1 |

(b)

| Trigger frame | EHT TB PPDU | PE | Trigger frame | EHT TB PPDU | PE |
|---|---|---|---|---|---|
| Frame including TRS Control with PE Duration set to 0 | EHT TB PPDU | PE | Frame including TRS Control with PE Duration set to 1 | EHT TB PPDU | PE |
| Trigger frame | EHT TB PPDU | PE | Trigger frame | EHT TB PPDU | PE |
| Frame including TRS Control with PE Duration set to 0 | EHT TB PPDU | PE | Frame including TRS Control with PE Duration set to 1 | EHT TB PPDU | PE |

Default PE duration
(<= 16 us)

20 us

FIG.24

**(a) HE Operation Parameters field format**

| Default PE Duration | TWT Required | TXOP Duration RTS Threshold | VHT Operation Information Present | Co-Hosted BSS | ER SU Disabled | 6 GHz Operation Information Present | Reserved |
|---|---|---|---|---|---|---|---|
| Bits: 3 | 1 | 10 | 1 | 1 | 1 | 1 | 6 |

**(b) EHT Operation Parameters field format**

| ... | EHT Default PE Duration | ... |
|---|---|---|
| Bits: | 1 | |

**(c)**

Trigger frame / Frame including TRS Control that solicits HE TB PPDU — HE TB PPDU — PE

Default PE duration (<= 16 us)

Trigger frame / Frame including TRS Control that solicits EHT TB PPDU — EHT TB PPDU — PE

20 us

FIG.25

RU allocated by Trigger frame

RU allocated by TRS Control

Respond without considering CS

Respond without considering CS

PE

PE

HE TB PPDU

HE TB PPDU

Trigger frame with CS Required subfield set to 0

Frame including TRS Control

FIG.26

Trigger frame with CS Required subfield set to 1

Frame including TRS Control

CS busy

EHT TB PPDU

PE

RU allocated by Trigger frame

RU allocated by TRS Control

FIG.27

Sequence 1

| Trigger frame with CS Required set to 0 based on **threshold 1** | **HE TB PPDU** | PE |
|---|---|---|
| Frame including TRS Control | **HE TB PPDU** | PE |

$\leq$ 16 us

Sequence 2

| Trigger frame with CS Required set to 0 based on **threshold 2** | **EHT TB PPDU** | PE |
|---|---|---|
| Frame including TRS Control | **EHT TB PPDU** | PE |

20 us

FIG.28

RU allocated by
Trigger frame

RU allocated by
TRS Control

*Sequence 2*

| Trigger frame with CS Required set to 0 based on threshold 1 | EHT TB PPDU | PE |
|---|---|---|
| Frame including TRS Control | HE TB PPDU | PE |

<= 16 us

*Sequence 1*

| Frame including TRS Control that solicits an EHT TB PPDU | EHT TB PPDU | PE |
|---|---|---|
| Frame including TRS Control that solicits an HE TB PPDU | HE TB PPDU | PE |

<= 16 us

FIG.29

FIG.30

```
        ┌─────────────┐
        │    START    │
        └─────────────┘
               │
               ▼
┌──────────────────────────────────────┐
│ Receive frame for triggering PLCP     │  ~S30010
│ protocol data unit                    │
│              (PPDU)                    │
└──────────────────────────────────────┘
               │
               ▼
┌──────────────────────────────────────┐
│ As response to frame, transmit PPDU   │
│ including                             │  ~S30020
│ packet extension (PE) field for       │
│ providing processing                  │
│              time for PPDU            │
└──────────────────────────────────────┘
               │
               ▼
        ┌─────────────┐
        │     END     │
        └─────────────┘
```

## INTERNATIONAL SEARCH REPORT

| | International application No. |
|---|---|
| | **PCT/KR2022/000190** |

**A.    CLASSIFICATION OF SUBJECT MATTER**

**H04L 1/00**(2006.01)i; **H04L 5/00**(2006.01)i; **H04L 27/26**(2006.01)i; **H04L 69/14**(2022.01)i; **H04L 69/322**(2022.01)i; **H04W 76/15**(2018.01)i; **H04W 84/12**(2009.01)i; **H04W 74/08**(2009.01)i

According to International Patent Classification (IPC) or to both national classification and IPC

**B.    FIELDS SEARCHED**

Minimum documentation searched (classification system followed by classification symbols)

H04L 1/00(2006.01); H04L 5/00(2006.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AP, PPDU, 트리거(trigger), 처리 시간(processing time), PE(packet extension), 필드(field), 듀레이션(duration)

**C.    DOCUMENTS CONSIDERED TO BE RELEVANT**

| Category* | Citation of document, with indication, where appropriate, of the relevant passages | Relevant to claim No. |
|---|---|---|
| Y<br>A | KO, Geonjung et al. TB PPDU Format Signaling in Trigger Frame. IEEE 802.11-20/1192r1. 14 October 2020.<br>    See slides 1-16. | 1-4,8-12,16<br>5-7,13-15 |
| Y | ZHANG, Yan et al. Proposed Draft Text: Packet Extension. IEEE 802.11-20/1340r5. 14 December 2020.<br>    See pages 1-6. | 1-4,8-12,16 |
| A | HAN, Jonghun et al. Trigger Frame for Frequency-domain A-PPDU Support. IEEE 802.11-20/0831r2. 14 October 2020.<br>    See slides 1-19. | 1-16 |
| A | NOH, Yujin. CID16364 on Packet Extension. IEEE 802.11-18/1733r1. 13 November 2018.<br>    See pages 1-4. | 1-16 |
| A | US 2020-0413447 A1 (NEWRACOM, INC.) 31 December 2020 (2020-12-31)<br>    See paragraphs [0151]-[0174] and figures 8 and 9A. | 1-16 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 May 2022** | **06 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/000190**

| Patent document cited in search report | | | Publication date (day/month/year) | Patent family member(s) | | | Publication date (day/month/year) |
|---|---|---|---|---|---|---|---|
| US | 2020-0413447 | A1 | 31 December 2020 | EP | 3270537 | A1 | 17 January 2018 |
| | | | | EP | 3270537 | B1 | 13 February 2019 |
| | | | | US | 10470214 | B2 | 05 November 2019 |
| | | | | US | 10805956 | B2 | 13 October 2020 |
| | | | | US | 2018-0014329 | A1 | 11 January 2018 |
| | | | | US | 2020-0015271 | A1 | 09 January 2020 |

Form PCT/ISA/210 (patent family annex) (July 2019)